(19) Europäisches Patentamt
European Patent Office
Office européen des brevets

(11) EP 3 767 017 B1

(12) **EUROPEAN PATENT SPECIFICATION**

(45) Date of publication and mention of the grant of the patent:
**17.06.2026 Bulletin 2026/25**

(21) Application number: **19768090.3**

(22) Date of filing: **08.03.2019**

(51) International Patent Classification (IPC):
***D01F 8/14*** (2006.01) ***C08K 5/13*** (2006.01)
***C08K 5/53*** (2006.01) ***C08L 67/02*** (2006.01)
***D01F 1/10*** (2006.01) ***C08G 63/672*** (2006.01)
***C08K 5/134*** (2006.01) ***C08K 5/5393*** (2006.01)
***D01D 5/36*** (2006.01) ***C08K 5/527*** (2006.01)

(52) Cooperative Patent Classification (CPC):
(C-Sets available)
**D01D 5/36; C08G 63/672; C08K 5/13; C08K 5/1345; C08K 5/527; C08K 5/5393; C08L 67/02; D01F 1/10; D01F 8/14** (Cont.)

(86) International application number:
**PCT/JP2019/009491**

(87) International publication number:
**WO 2019/176811 (19.09.2019 Gazette 2019/38)**

(54) **HIGHLY HYGROSCOPIC SEA-ISLAND TYPE COMPOSITE FIBER, FIBER STRUCTURE, AND POLYESTER COMPOSITION**

STARK HYGROSKOPISCHE MEERINSELVERBUNDFASER, FASERSTRUKTUR UND POLYESTERZUSAMMENSETZUNG

FIBRE COMPOSITE DE TYPE ÎLE ET MER HAUTEMENT HYGROSCOPIQUE, STRUCTURE DE FIBRE ET COMPOSITION DE POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2018 JP 2018045165**
**28.08.2018 JP 2018159485**

(43) Date of publication of application:
**20.01.2021 Bulletin 2021/03**

(73) Proprietor: **Toray Industries, Inc.**
**Tokyo 103-8666 (JP)**

(72) Inventors:
- **MAKINO, Masataka**
**Mishima-shi, Shizuoka 411-8652 (JP)**
- **NAKAGAWA, Junichi**
**Mishima-shi, Shizuoka 411-8652 (JP)**
- **TANAKA, Yoichiro**
**Mishima-shi, Shizuoka 411-8652 (JP)**
- **MOCHIZUKI, Katsuhiko**
**Mishima-shi, Shizuoka 411-8652 (JP)**

(74) Representative: **Kador & Partner Part mbB**
**Corneliusstraße 15**
**80469 München (DE)**

(56) References cited:
**EP-A1- 3 483 312** **WO-A1-2017/114313**
**WO-A1-2018/012318** **WO-A1-2018/012318**
**WO-A1-2018/077126** **JP-A- 2004 277 911**
**JP-A- 2010 024 328** **JP-A- H09 228 152**
**JP-A- S60 217 257** **JP-B1- S47 042 048**
**US-A1- 2013 295 306**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/13, C08L 67/025;**
**C08K 5/1345, C08L 67/025;**
**C08K 5/527, C08L 67/025;**
**C08K 5/5393, C08L 67/025;**
**C08L 67/02, C08K 5/1345, C08K 5/526, C08L 67/025;**
**C08L 67/02, C08K 5/1345, C08K 5/5393, C08L 67/025**

## Description

TECHNICAL FIELD

The present invention relates to a polyester composition. More specifically, the present invention relates to a polyester composition that has high hygroscopicity and excellent fiber characteristics and serves for suppression of yellowing and oxidative heat generation that can occur after water washing treatment.

BACKGROUND ART

Polyester fibers are low in price and have good mechanical properties and dry feeling, and now they are in use for a wide range of applications. However, low in hygroscopicity, they have some wearing comfortability problems to be solved including the occurrence of stuffiness on highly humid days in summer and static electricity on low humidity days in winter.

To eliminate these defects, various methods have been proposed to provide a polyester fiber with increased hygroscopicity. Common methods to impart hygroscopicity include copolymerization of a hydrophilic compound with a polyester and addition of a hydrophilic compound thereto, and examples of such a hydrophilic compound include polyethylene glycol.

In addition, various methods have been proposed so far to provide polyester compositions containing polyalkylene glycols, such as polyethylene glycol, as constituents and also containing other additives and the like.

In Patent document 1, for example, a polyester copolymerized with a low molecular weight polyethylene glycol is used alone to form a fiber and hygroscopicity is imparted to the polyester fiber.

In Patent document 2, a polyester copolymerized with an antioxidant-containing high molecular weight polyethylene glycol is used alone to form a fiber and hygroscopicity is imparted to the polyester fiber.

Patent document 3 proposes a core-in-sheath type composite fiber composed of cores of a polyester copolymerized with polyethylene glycol and sheaths of polyethylene terephthalate. In this proposal, a hygroscopic polymer is used as cores in order to impart hygroscopicity to the polyester fiber. It also proposes a copolymerized polyester that is made hygroscopic by copolymerizing it with a polyoxyalkylene compound up to 50% to 95% by weight.

Patent document 4 proposes a sea-island composite fiber composed of islands of a polyester copolymerized with polyethylene glycol and a sea of polyethylene terephthalate. In this proposal, a hygroscopic polymer is used as islands in order to impart hygroscopicity to the polyester fiber.

Patent document 5 proposes an oxygen-absorbing resin composition that contains a block copolymer having polyester segments as hard segments and polyalkylene glycol units as soft segments and blended with a phenol-based antioxidant or a phosphorus-based antioxidant as radical scavenger.

Patent document 6 propose a polyether ester polymer having polybutylene terephthalate as hard segments and polyoxyethylene glycol as soft segments. In this proposal, water swelling property is imparted by further copolymerizing it with an organic sulfonic acid metal salt.

Patent document 7 proposes a direct polymerization method in which an esterification product is transferred to a polymerization tank containing beforehand a polyalkylene glycol having a molecular weight of 400 to 6,000.

Patent document 8 discloses a sea-islands type composite fiber comprising an island component that is a polymer having moisture absorbability; a ratio (T/R) of a thickness T of an outermost layer to a diameter R of the fiber in a transverse cross-section of the fiber of 0.05 to 0.25; and a moisture absorption rate difference ($\Delta$MR) after a hot water treatment of 2.0 to 10.0%, wherein the thickness of an outermost layer is a difference between a radius of the fiber and a radius of a circumscribed circle formed by connecting apexes of the island components disposed in an outermost circle, and represents a thickness of a sea component in the outermost layer.

Patent document 9 relates to a sea-island type polyester fiber having excellent hygroscopicity and comprising a fiber-forming polymer as a sea component and a fiber-forming polymer in which a hydrophilic component is dispersed as an island component. In the fiber cross section, at least two or more islands exist, the dispersion diameter of the hydrophilic component in the island component is $\leq 2.0$ $\mu$m and a moisture absorption-desorption parameter ($\Delta$MR) is $\geq 1.0$%.

Patent document 10 refers to a polyester having excellent hygroscopicity, which is a polymer formed by an aromatic dicarboxylic acid or a derivative thereof and an aliphatic glycol as a main constitutive component, and a polyethylene glycol as a copolymerization component, wherein the number average molecular weight of the polyethylene glycol is 2000 to 30000g/mol, and the copolymerization rate is 25 to 55wt%.

Patent document 11 discloses a copolymerized polyester resin composition comprising 95 to 99.99 weight % of a copolymerized polyester resin copolymerized with dicarboxylic acid components and diol components comprising isosorbide, having an alternating structure of dicarboxylic acid moieties which are derived from the dicarboxylic acid components and diol moieties which are derived from the diol components; and 0.01 to 5 weight % of an antioxidant selected from a group consisting of a hindered phenolic antioxidant, a phosphitic antioxidant, a thioetheric antioxidant and mixtures thereof.

Patent document 12 relates to conjugate fiber being composed of at least two components: A-component 1 and B-component 2. The A-component 1 is a polymer soluble in hot water, while the B-component 2 is a polymer insoluble in hot water which is dyeable with a disperse dye at normal pressures, being a polyester copolymerized with 6.0-10wt.% of a polyethylene glycol 500-4,000 in average molecular weight. The single fiber fineness after removing the A-component 1 from this conjugate fiber is 0.5-0.05 denier.

PRIOR ART DOCUMENTS

PATENT DOCUMENTS

Patent document 1: Japanese Unexamined Patent Publication (Kokai) No. 2006-104379
Patent document 2: International Publication WO 2015/146790
Patent document 3: Japanese Unexamined Patent Publication (Kokai) No. 2001-172374
Patent document 4: Japanese Unexamined Patent Publication (Kokai) No. HEI-8-198954
Patent document 5: Japanese Unexamined Patent Publication (Kokai) No. 2003-113311
Patent document 6: Japanese Unexamined Patent Publication (Kokai) No. 2005-200786
Patent document 7: Japanese Unexamined Patent Publication (Kokai) No. SHO-58-198527
Patent document 8: EP 3 483 312 A1
Patent document 9: JP 2004-277911 A
Patent document 10: WO 2018/077126 A1
Patent document 11: US 2013/295306 A1
Patent document 12: JP H09-228152 A

SUMMARY OF INVENTION

PROBLEMS TO BE SOLVED BY THE INVENTION

However, the method proposed in Patent document 1 described above had the disadvantage that the hygroscopic polymer is exposed over the entire surface of the fiber, and polyethylene glycol, which is a copolymerization component of the hygroscopic polymer, is oxidatively decomposed and eluted into the treatment liquid during hot water treatment such as dyeing, leading to a decrease in hygroscopicity after hot water treatment. In addition, there is the problem of heat generation from the fiber due to oxidative decomposition of polyethylene glycol during the tumbler drying after dry cleaning treatment.

In the method described in Patent document 2, the fiber contains a large amount of an antioxidant to suppress the oxidative decomposition of polyethylene glycol, and this leads to the problem of frequent yarn breakage in the knitting and weaving steps due to a decrease in yarn strength and also the problem of a deterioration in quality due to fuzz generation during use.

In the method described in Patent document 3, as the hygroscopic polymer used as the core component undergoes volume swelling during hot water treatment such as dyeing, stress concentration occurs at the interface between the core component and the sheath component to cause the breakage of the sheath component, and this breakage of the sheath component leads to the formation of dyeing specks and fuzz that cause deterioration in quality. Furthermore, there is another disadvantage that the hygroscopic polymer used as the core component starts to elute from broken portions of the sheath component, leading to a decrease in hygroscopicity after hot water treatment. Although it also discloses a technique of adding 0.2 part of a hindered phenol based antioxidant, its content is insufficient and no phosphorus antioxidant is added, leading to the disadvantage that yellowing and oxidative heat generation occur after water washing treatment.

In the method described in Patent document 4, since the thickness of the outermost layer of the sea component is small relative to the fiber diameter in the cross section of the fiber, the sea component tends to break as a result of volume swelling of the hygroscopic polymer of the island component during hot water treatment such as dyeing, and this breakage of the sea component leads to the formation of dyeing specks and fuzz that cause deterioration in quality. Furthermore, there is another disadvantage that the hygroscopic polymer used as the island component starts to elute from broken portions, leading to a decrease in hygroscopicity.

In the method described in Patent document 5, polytetramethylene glycol is used as soft segments, along with Irganox 1010, which is a hindered phenol based antioxidant, as radical scavenger and IRGAFOS 168 as phosphorus based antioxidant, but there is the problem of low hygroscopicity.

In the case of the method described in Patent document 6, no phenol based antioxidants or no phosphorus based

antioxidants are added, leading to the problem of being inferior in terms of resistance to oxidative heat generation.

Patent document 7 discloses a method for producing polyester-polyether copolymer with a high polymerization degree in which an esterification product is transferred to a polymerization tank containing a polyalkylene glycol having a molecular weight of 1,000 beforehand, but since the molecular weight of the polyalkylene glycol is low, it has the disadvantage that the resulting polyester-polyether copolymer is low in hygroscopicity.

An object of the present invention is to solve the above problems with the conventional techniques to provide a sea-island type composite fiber that can be suitably used as material for clothing because it serves for producing fiber structures such as woven or knitted fabrics that have good quality with little occurrence of dyeing specks and fuzz, shows high hygroscopicity even after hot water treatment such as dyeing, undergoes little yellowing after water washing treatment (JIS L0217), and has high resistance to oxidative decomposition to allow the suppression of oxidative heat generation after dry cleaning treatment (JIS L1096) or water washing treatment, and also to provide a polyester composition that has high hygroscopicity and excellent fiber characteristics and serves for suppression of yellowing and oxidative heat generation after water washing treatment.

MEANS OF SOLVING THE PROBLEMS

The present disclosure provides a highly hygroscopic sea-island type composite fiber, which does not fall under the scope of the claims, having the features of (1) to (4) described below:

(1) being a polymer in which the island component has hygroscopicity,
(2) having a T/R ratio of 0.05 to 0.25 wherein T and R are the outermost layer thickness and the fiber diameter, respectively, in a cross section of the fiber,
(3) having a difference in moisture absorbing rate (ΔMR) between before and after hot water treatment of 2.0 to 10.0%, and
(4) having a phenolic group content of 16 to 160 mmol/kg,

the outermost layer thickness T being the difference between the radius of the fiber and the radius of the circumcircle that connects the apexes of the island components disposed along the outermost periphery, which represents the thickness of the sea component present in the outermost layer.

The present invention as defined in the claims provides a polyester composition including a copolymer polyester that contains a polyester formed of an aromatic dicarboxylic acid and/or an ester-forming derivative thereof and a diol and/or an ester-forming derivative thereof, copolymerized with 10 % by weight to 50% by weight of polyethylene glycol having a number average molecular weight of 5,000 to 20,000, and also contains 10.0 to 200.0 mmol/kg of a phenol based antioxidant and a phosphorus based antioxidant in an amount of 15.0 to 75.0 mmol/kg as phosphorus, wherein the phenol based antioxidant includes one or more of 2,6-di-t-butyl-p-cresol, butyl hydroxyanisole, 2,6-di-t-butyl-4-ethylphenol, stearyl-β-(3,5-di-t-butyl-4-hydroxyphenyl) propionate, 2,2'-methylene bis(4-methyl-6-t-butyl phenol), 2,2'-methylene bis(4-ethyl-6-t-butyl phenol), 4,4'-butylidene bis(3-methyl-6-t-butyl phenol), 3,9-bis{1,1-dimethyl-2-{β-(3-t-butyl-4-hydroxy-5-methylphenyl) propionyloxy} ethyl} 2,4,8,10-tetraoxaspiro{5,5}undecane, 1,1,3-tris-(2-methyl-4-hydroxy-5-t-butyl phenyl) butane, 1,3,5-trimethyl-2,4,6-tris-(3,5-di-t-butyl-4-hydroxybenzyl) benzene, bis{3,3'-bis-(4'-hydroxy-3'-t-butylphenyl) butyric acid}glycol ester, tocopherol, pentaerythritol-tetrakis(3-(3,5-di-t-butyl-4-hydroxyphenol) propionate), bis[3-(3-t-butyl-4-hydroxy-5-methylphenyl) propionate] [ethylenebis(oxyethylene)], and 1,3,5-tris[[4-(1,1-dimethylethyl)-3-hydroxy-2,6-dimethylphenyl]methyl]-1,3,5-triazine-2,4,6 (1H,3H,5H)-trione.

The present invention also provides a method for producing the aforementioned polyester composition including steps for subjecting an ester exchange reaction of an aromatic dicarboxylic acid and a diol containing 50 mol% or more of 1,4-butanediol; and when a temperature of a polycondensation reaction tank is 210°C or less, transferring the esterification product resulting from the ester exchange reaction into the polycondensation reaction tank containing polyethylene glycol beforehand; and starting their polycondensation reaction.

Good applications of the polyester composition according to the present invention include a composite fiber that contains the polyester composition as the sea component or the core component, which can be suitably used as a hygroscopic polymer for a sea-island type composite fiber.

ADVANTAGEOUS EFFECTS OF THE INVENTION

The sea-island type composite fiber as disclosed herein, but not falling under the scope of the claims, can be suitably used as material for clothing because it maintains good quality and high hygroscopicity even after hot water treatment such as dyeing, undergoes little yellowing after water washing treatment (JIS L0217), and has high oxidative decomposition resistance to allow the suppression of oxidative heat generation after dry cleaning treatment (JIS L1096) or water washing treatment. In addition, the present invention provides a polyester composition having high hygroscopicity,

having excellent fiber characteristics, and serving for suppression of yellowing and oxidative heat generation after water washing treatment.

BRIEF DESCRIPTION OF THE DRAWINGS

[Fig. 1] Fig. 1(a) to (n) gives diagrams showing typical cross-sectional patterns of the sea-island type composite fiber according to the present invention.
[Fig. 2] Fig. 2 gives diagrams showing a typical sea-island type composite spinneret used for the method for producing the sea-island type composite fiber according to the present invention focusing on the shape of the composite spinneret, with Fig. 2(a) showing a vertical cross section of the major portion of the sea-island type composite spinneret, Fig. 2(b) showing a transverse cross section of a part of the distribution plate, and Fig. 2(c) showing a transverse cross section of the discharge plate.
[Fig. 3] Fig. 3 is a part of a typical distribution plate.
[Fig. 4] Fig. 4 shows a typical arrangement of distribution grooves and distribution holes in the distribution plate.

DESCRIPTION OF PREFERRED EMBODIMENTS

Described first are the highly hygroscopic sea-island type composite fiber not falling under the scope of the claims and a fiber structure partially containing it, which does not fall under the scope of the claims either.
The difference in moisture absorbing rate (ΔMR) is the difference between the moisture absorbing rate at a temperature of 30°C and a humidity of 90%RH, which assume the conditions in clothes of the wearer after light exercise, and that at a temperature of 20°C and a humidity of 65%RH, which assume outdoor conditions, and it is measured by the method described in Examples unless otherwise specified. Having hygroscopicity means having a ΔMR value of 2.0% or more, and a larger ΔMR value means a higher hygroscopicity and a higher wearing comfortability.
The outermost layer thickness is the difference between the radius of the fiber and the radius of the circumcircle that connects the apexes of the island components disposed along the outermost periphery unless otherwise specified, and represents the thickness of the sea component present in the outermost layer.
The island component of the sea-island type composite fiber is a polymer having hygroscopicity (hygroscopic polymer). There is no particular limitation on the polymer having hygroscopicity as long as it is a polymer showing a difference in moisture absorbing rate (ΔMR) of 2.0% or more. Specific examples thereof include, but not limited to, polyether esters, polyether amides, polyether ester amides, polyamides, thermoplastic cellulose derivatives, and polyvinylpyrrolidone. These hygroscopic polymers may be used singly, or two or more thereof may be used in combination. Furthermore, the hygroscopic polymer to be used may be a blend of a hygroscopic polymer as listed above and a polyester, polyamide, polyolefin, or the like.
It is preferable that the hygroscopic polymer used as the island component of the sea-island type composite fiber is a polyethylene glycol copolymer. The use of a polyethylene glycol copolymer, which is high in hygroscopicity and also high in heat resistance, serves to provide a sea-island type composite fiber having good mechanical properties and color tone.
The sea-island type composite fiber has a T/R ratio of 0.05 to 0.25 wherein T and R are the outermost layer thickness and the fiber diameter, respectively, in a cross section of the fiber. If the T/R ratio is 0.05 or more, the thickness of the outermost layer will be sufficiently large relative to the fiber diameter, which serves to prevent the sea component from being broken when volume swelling of the hygroscopic polymer used as the island component occurs during hot water treatment such as dyeing. This permits a reduction in dye specks and fuzz that may result from such breakage of the sea component, thus realizing good quality. In addition, the elution of the hygroscopic polymer is suppressed to ensure the development of high hygroscopicity even after hot water treatment. It is more preferable that T/R of the sea-island type composite fiber is 0.07 or more. On the other hand, if T/R of the sea-island type composite fiber is 0.25 or less, the thickness of the outermost layer is not too large relative to the fiber diameter, and the volume swelling of the hygroscopic polymer in islands is not inhibited, making it possible to provide a fiber and a fiber structure that are high in hygroscopicity. It is more preferable that T/R of the sea-island type composite fiber is 0.22 or less.
The sea-island type composite fiber has a difference in moisture absorbing rate (ΔMR) of 2.0 to 10.0% after hot water treatment. A difference in moisture absorbing rate (ΔMR) of 2.0 to 10.0% after hot water treatment ensures little stuffiness in clothes and high wearing comfortability. A difference in moisture absorbing rate (ΔMR) of 2.0% or less after hot water treatment means low hygroscopicity and increased stuffiness in clothes. A difference in moisture absorbing rate (ΔMR) of 10.0% or more after hot water treatment leads to fuzz generation and deteriorated quality. From the viewpoint of realizing high hygroscopic and good quality, it is preferable that the difference in moisture absorbing rate (ΔMR) after hot water treatment is 3.0% to 8.0%.

The sea-island type composite fiber contains a phenolic group (phenol skeleton). Since the radical chain reactions are prohibited by the phenolic group, oxidative decomposition can be suppressed, and oxidative heat generation is suppressed during tumbler drying that is performed after dry cleaning treatment.

The sea-island type composite fiber contains 16 to 160 mmol/kg of phenolic groups. A phenolic group content of 16 to 160 mmol/kg ensures that both high oxidative decomposition resistance and high fiber strength are realized simultaneously. If the phenolic group content ratio is smaller than 16 mmol/kg, generated radicals cannot be trapped and the oxidative decomposition resistance will be low, leading to the occurrence of oxidative heat generation during tumbler drying that is performed after dry cleaning treatment. If the phenolic group content ratio is larger than 160 mmol/kg, the orientation of the fibers is suppressed and the fiber strength is decreased, leading to frequent occurrence of yarn breakage in knitting and weaving steps and deterioration in quality due to fuzz generation during use. From the viewpoint of oxidative decomposition resistance and fiber strength, it is preferable that the phenolic group content is 20 to 150 mmol/kg. It is preferable that these phenolic groups (phenol skeletons) exist in the form of phenol based compounds in the sea-island type composite fiber.

The sea-island type composite fiber preferably contains a phenol based compound having a structure as represented by the chemical formula (1) given below. The incorporation of a phenol based compound having a structure as represented by the following chemical formula (1) serves to reduce the amount of yellow quinone based compounds generated during water washing treatment, and yellowing is suppressed.

[Chemical compound 1]

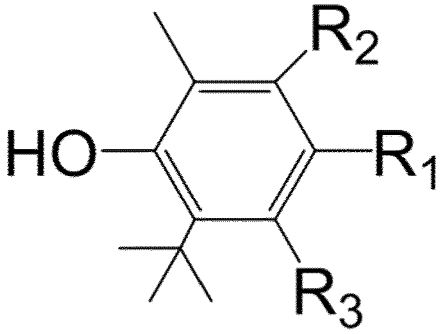

··· (1)

[In the above formula, $R_1$, $R_2$, and $R_3$ each represent a hydrocarbon group, a hydroxyl group, or a hydrogen atom.]

The sea-island type composite fiber preferably contains a phosphorus atom. The inclusion of a phosphorus atom serves to suppress the deactivation of phenol by the hypochlorous acid based bleaching agent used in water washing treatment and reduce the oxidative heat generation during tumbler drying performed after water washing treatment.

The sea-island type composite fiber preferably contains 3 to 30 mmol/kg of phosphorus atoms. A phosphorus atom content of 3 to 30 mmol/kg ensures a high oxidative decomposition resistance and a good fiber color tone after water washing treatment. From the view point of the oxidative decomposition resistance and fiber color tone after water washing treatment, the phosphorus atom content is preferably 6 to 25 mmol/kg.

For the sea-island type composite fiber, the composition ratio (by weight) of the sea component to the island component is preferably 50/50 to 90/10. A composition ratio of the sea component of 50% by weight or more in the sea-island composite fiber is preferable because the sea component serves to develop a tension and elasticity feeling and a dry touch. Furthermore, it is also preferable because it serves to prevent the breakage of the sea component from being caused by an external force during a drawing or false twisting step and prevent the breakage of the sea component from being caused by volume swelling of the hygroscopic polymer due to moisture absorption or water absorption, thereby suppressing the deterioration in quality due to the generation of dyeing specks and fuzz and also suppressing the deterioration in hygroscopicity due to the elution of the hygroscopic polymer into hot water during hot water treatment such as dyeing. On the other hand, it is preferable that the sea component of the sea-island type composite fiber has a composition ratio of 90% by weight or less, that is, that the island component has a composition ratio of 10% by weight or more, because it permits the production of a sea-island type composite fiber having high hygroscopicity.

There is no specific limitation on the fineness of the sea-island type composite fiber as a multifilament and can be appropriately set to suite particular purposes or required characteristics, but it is preferably 10 to 500 dtex. If the sea-island type composite fiber has a fineness of 10 dtex or more, it is preferable because it ensures low thread breakage frequency and high processability and the fiber will not suffer significant fuzz generation while in service, leading to high durability. On

the other hand, if the sea-island type composite fiber has a fineness of 500 dtex or less, it is preferable because the fiber or fiber structure will not suffer a decrease in flexibility.

There is no specific limitation on the single fiber fineness of the sea-island type composite fiber and can be appropriately set to suite particular purposes or required characteristics, but it is preferably 0.5 to 4.0 dtex. If the sea-island type composite fiber has a single fiber fineness of 0.5 dtex or more, it is preferable because it ensures low thread breakage frequency and high processability and the fiber will not suffer significant fuzz generation while in service, leading to high durability. On the other hand, if the sea-island type composite fiber has a single fiber fineness of 4.0 dtex or less, it is preferable because the fiber or fiber structure will not suffer a decrease in flexibility.

There is no specific limitation on the strength of the sea-island type composite fiber and can be appropriately set to suite particular purposes and required characteristics, but it is preferably 2.0 to 5.0 cN/dtex from the viewpoint of mechanical properties. The strength of the sea-island type composite fiber is preferably 2.0 cN/dtex or more because in that case, the fiber will not suffer significant fuzz generation while in service, leading to high durability. It is more preferably 2.3 cN/dtex or more. On the other hand, if the sea-island type composite fiber has a strength of 5.0 cN/dtex or less, it is preferable because the fiber or fiber structure will not suffer a decrease in flexibility.

There are no specific limitations on the elongation percentage of the sea-island type composite fiber and can be appropriately set to suite particular purposes and required characteristics, but it is preferably 10 to 60% from the viewpoint of durability. The sea-island type composite fiber preferably has an elongation percentage of 10% or more because in that case, it permits the production of a fiber or fiber structure having high wear resistance, suffering from little fuzz generation when in service, leading to high durability. On the other hand, if the sea-island type composite fiber has an elongation percentage of 60% or less, it is preferable because it permits the production of a fiber and a fiber structure having high dimensional stability.

For the sea-island type composite fiber, there is no specific limitation on the shape of the island component in a fiber cross section, and the cross section may be either perfect circular or non-circular. Specific examples of such non-circular cross-sectional shapes include, but not limited to, multilobar, polygonal, flattened, and elliptic.

There is no specific limitation on the cross-sectional fiber shape of the sea-island type composite fiber, and an appropriate one may be selected to suit particular purposes and required characteristics. It may be either a perfect circular cross section or a non-circular cross section. Specific examples of such non-circular cross-sectional shapes include, but not limited to, multilobar, polygonal, flattened, and elliptic.

Next, the method for producing the sea-island type composite fiber not falling under the scope of the claims will be described.

The sea-island type composite fiber can be produced by a known melt spinning method, drawing method, or crimping method such as false twisting using a hygroscopic polymer as island component and a thermoplastic polymer as sea component.

The sea component used for the production of the sea-island type composite fiber is a thermoplastic polymer. Specific polymer examples thereof include, but not limited to, aromatic polyesters such as polyethylene terephthalate, polypropylene terephthalate, and polybutylene terephthalate; aliphatic polyesters such as polylactic acid and polyglycolic acid; polyamides such as nylon 6 and nylon 66; and polyolefins such as polyethylene and polypropylene. In particular, polyesters are preferred because they have good mechanical properties and durability; polyethylene terephthalates are more preferred because they have a tension and elasticity feeling characteristic of polyester fiber; and cationic dyeable polyethylene terephthalates are particularly preferred because they work very effectively for preventing sheath breakage, developing vivid colors, and preventing dye contamination in the case of mixed use with polyurethane fibers. A cationic dyeable polyethylene terephthalate is a polyethylene terephthalate copolymerized with a component capable of interacting with a cationic dye. Examples of the component capable of interacting with a cationic dye include, but not limited to, metal salts of 5-sulfoisophthalate such as lithium salt, sodium salt, potassium salt, rubidium salt, and cesium salt thereof. In particular, the lithium salt and sodium salt can be suitably employed.

The island component used for the production of the sea-island type composite fiber is a hygroscopic polymer. Specific polymer examples thereof include, but not limited to, polyether esters, polyether amides, polyether ester amides, polyamides, thermoplastic cellulose derivatives, and polyvinylpyrrolidone. These hygroscopic polymers may be used singly, or two or more thereof may be used in combination. Furthermore, the hygroscopic polymer to be used may be a blend of a hygroscopic polymer as listed above and a polyester, polyamide, polyolefin, or the like. As copolymerization components, in particular, polyether esters, polyether amides, and polyether ester amides that contain polyethers are preferred because of their high hygroscopicity, and polyethylene glycol copolymers are more preferred from the viewpoint of heat resistance. And polyesters copolymerized with polyethylene glycol copolymers are particularly preferred from the viewpoint of mechanical characteristics.

The island component used for the production of the sea-island composite fiber is preferably a polymer having crystallinity. The use of an island component having crystallinity is preferred because the elution of the hygroscopic polymer into hot water is suppressed during hot water treatment such as dyeing, allowing the hygroscopicity to be maintained even after the hot water treatment.

From the viewpoint of hygroscopicity, heat resistance, and mechanical properties, the island component used for the production of the sea-island type composite fiber is preferably a polyether ester containing an aromatic dicarboxylic acid and an aliphatic diol as main constituents and containing a polyethylene glycol as copolymerization component. Specific examples of the aromatic dicarboxylic acid include, but not limited to, terephthalic acid, isophthalic acid, phthalic acid, 5-sodium sulfoisophthalic acid, 5-lithium sulfoisophthalic acid, 5-(tetraalkyl)phosphonium sulfoisophthalic acid, 4,4'-diphenyldicarboxylic acid, and 2,6-naphthalenedicarboxylic acid. Specific examples of the aliphatic diol include, but not limited to, ethylene glycol, 1,3-propanediol, 1,4-butanediol, hexanediol, cyclohexanediol, diethylene glycol, hexamethylene glycol, and neopentyl glycol. In particular, ethylene glycol, propylene glycol, and 1,4-butanediol are preferred because of their good handleability in the production process and in use, and 1,4-butanediol can be suitably employed from the viewpoint of crystallinity.

From the viewpoint of heat resistance and mechanical properties, the island component used for the production of the sea-island type composite fiber is preferably a polyether ester containing an aromatic dicarboxylic acid and an aliphatic diol as main constituents and containing a polyethylene glycol as copolymerization component. The polyethylene glycol used as copolymerization component preferably has a number average molecular weight of 2,000 to 30,000 g/mol. If the polyethylene glycol has a number average molecular weight of 2,000 g/mol or more, it is preferable because it has high hygroscopicity and serves to produce a sea-island type composite fiber having high hygroscopicity when used as the island component. On the other hand, if the polyethylene glycol has a number average molecular weight of having 30,000 g/mol or less, it is preferable because it is so high in the rate of polycondensation reaction that the amount of unreacted polyethylene glycol can be reduced, and also because the elution of the hygroscopic polymer into hot water is suppressed during hot water treatment such as dyeing, allowing the hygroscopicity to be maintained even after the hot water treatment.

From the viewpoint of heat resistance and mechanical properties, the island component used for the production of the sea-island type composite fiber is preferably a polyether ester containing an aromatic dicarboxylic acid and an aliphatic diol as main constituents and containing a polyethylene glycol as copolymerization component. The copolymerization rate of the polyethylene glycol used as copolymerization component is preferably 10 to 60% by weight. If the polyethylene glycol has a copolymerization rate of 10% or more by weight, it is preferable because it has high hygroscopicity and serves to produce a sea-island type composite fiber having high hygroscopicity when used as the island component. On the other hand, if the polyethylene glycol has a copolymerization rate of 60% by weight or less, it is preferable because the amount of unreacted polyethylene glycol can be reduced and also because the elution of the hygroscopic polymer into hot water is suppressed during hot water treatment such as dyeing, allowing the hygroscopicity to be maintained even after the hot water treatment.

The polymers of the sea component and/or the island component used in the production of the sea-island composite fiber may be a composition prepared through various modifications made by adding minor additives. Specific examples of such minor additives include, but not limited to, compatibilizer, plasticizer, ultraviolet absorber, infrared ray absorbent, fluorescent brightening agent, mold releasing agent, antibacterial agent, nuclear formation agent, thermal stabilizer, antistatic agent, color protection agent, adjustor, delustering agent, antifoam agent, antiseptic agent, gelatinizer, latex, filler, ink, coloring agent, dye, pigment, and perfume. These minor additives may be used singly, or a plurality thereof may be used in combination.

A typical method to incorporate a phenolic group (phenol skeleton) in the sea-island type composite fiber is to add it in the form of a phenol based compound to the polymer of the sea component and/or the island component in its manufacturing process.

The phenol based compound used in the production of the sea-island type composite fiber is not particularly limited as long as it is a compound having a phenolic group. Specific examples thereof include, but not limited to, 2,6-di-t-butyl-p-cresol, butyl hydroxyanisole, 2,6-di-t-butyl-4-ethylphenol, stearyl-β-(3,5-di-t-butyl-4-hydroxyphenyl) propionate, 2,2'-methylene bis(4-methyl-6-t-butyl phenol), 2,2'-methylene bis(4-ethyl- 6-t-butyl phenol), 4,4'-butylidene bis(3-methyl-6-t-butyl phenol), 3,9-bis{1,1-dimethyl-2-{β-(3-t-butyl-4-hydroxy-5-methylphenyl) propionyloxy} ethyl}2,4,8,10-tetraoxaspiro{5,5}undecane, 1,1,3-tris-(2-methyl-4-hydroxy-5-t-butyl phenyl) butane, 1,3,5-trimethyl-2,4,6-tris-(3,5-di-t-butyl-4-hydroxybenzyl) benzene, bis{3,3'-bis-(4'-hydroxy-3'-t-butylphenyl) butyric acid}glycol ester, tocopherol, pentaerythritol-tetrakis(3-(3,5-di-t-butyl-4-hydroxyphenol) propionate), bis[3-(3-t-butyl-4-hydroxy-5-methylphenyl)propionate][ethylenebis(oxyethylene)], and 1,3,5-tris[[4-(1,1-dimethylethyl)-3-hydroxy-2,6-dimethylphenyl]methyl]-1,3,5-triazine-2,4,6(1H,3H,5H)-trione. These phenol based compounds may be used singly, or two or more thereof may be used in combination. Among others, bis[3-(3-t-butyl-4-hydroxy-5-methylphenyl) propionic acid] [ethylene-bis(oxyethylene)] ester (IRGANOX (registered trademark, hereinafter the same) 245, manufactured by BASF), 3,9-bis{1,1-dimethyl-2-{β-(3-t-butyl-4-hydroxy-5-methylphenyl) propionyloxy}ethyl}2,4,8,10-tetraoxaspiro{5,5}undecane (Adeka Stab (registered trademark, hereinafter the same) AO-80, manufactured by Adeka Corporation), and 1,3,5-tris-[[4-(1,1-dimethylethyl) -3-hydroxy-2,6-dimethylphenyl] methyl ]-1,3,5-triazine-2,4,6 (1H,3H,5H)-trione (THANOX (registered trademark, hereinafter the same) 1790, manufactured by RIANINLON CORPORATION) can be suitably employed because they serve effectively for depressing oxidative decomposition and for depressing yellowing after water washing treatment.

The phosphorus based antioxidant used in the production of the sea-island type composite fiber is not particularly

limited as long as it is a compound having a phosphorus atom. Specific examples include triphenyl phosphite, tris(2,4-t-butylphenyl) phosphite, bis[2,4bis(1,1-dimethylethyl)-6-methylphenyl] ethyl ester phosphorous acid, bis(2,4-t-butylphenyl) pentaerythritol diphosphite, tetrakis(2,4-di-t-butylphenyl) [1,1-biphenyl]-4,4'-diyl bisphosphonite, tetra(C12-to-C15 alkyl)-4,4'-isopropylidene diphenyl diphosphite, 3,9-bis(2,6-t-butyl-4-methylphenoxy)-2,4,8,10-tetraoxa-3,9-diphosphaspiro[5,5-undecane], and 1,1'-biphenyl-4,4'-diyl-bis[bisphosphonite (2,4-di-t-butylphenyl)]. These phosphorus based antioxidants may be used singly, or two or more thereof may be used in combination. Among others, tris-(2,4-t-butylphenyl) phosphite (IRGAFOS (registered trademark, hereinafter the same) 168, manufactured by BASF), 3,9-bis(2,6-t-butyl-4-methylphenoxy) -2,4,8,10-tetraoxa-3,9-diphosphaspiro [5,5-undecane] (Adeka Stab PEP-36, manufactured by Adeka Corporation), tetra(C12-to-C15 alkyl)-4,4'-isopropylidene diphenyl diphosphite (JA-805, manufactured by Johoku Chemical Co., Ltd,), and 1,1'-biphenyl-4,4'-diyl-bis[bis(2,4-di-t-butylphenyl) phosphonite] (Hostanox (registered trademark, hereinafter the same) P-EPQ, manufactured by Clariant Chemicals) can be suitably used because of high oxidative decomposition resistance after water washing treatment.

There is no particular limitation on the addition timing and addition method for the phenol based antioxidant and phosphorus based antioxidant used in the production of the sea-island type composite fiber. The sea component and/or the island component may be solidified once by cooling and then remelted and kneaded with them, or they may be directly blended with the sea component and/or the island component. To perform forcible mixing with the hygroscopic polymer, it is preferable that the island component is solidified once by cooling and then remelted and kneaded in a biaxial kneader.

For the production of the sea-island type composite fiber, there is no particular limitation on the addition of a sulfur based antioxidant such as a thiopropionate compound, but it is preferable not to add a sulfur based antioxidant from the viewpoint of the lightness of the resulting fiber.

For the production of the sea-island type composite fiber, it is preferable that the sea component and the island component are dried before starting melt spinning to decrease the water content to 300 ppm or less. If the water content is 300 ppm or less, it is preferable because a decrease in molecular weight due to hydrolysis or a foaming that is attributed to water during melt spinning will be depressed to ensure stable spinning.

For the production of the sea-island type composite fiber, previously dried chips are supplied to an extruder type or a pressure melter type melt spinning machine, in which the sea component and the island component are separately melted and weighed by measuring pumps. Subsequently, the melts are introduced into the spinning pack heated in the spinning block and the molten polymers are filtered in the spinning pack, followed by combining the sea component and the island component to form a sea-island structure in the sea-island composite spinneret, which will be described later, and discharging the melt through the spinneret to provide a fiber yarn.

An example of the sea-island composite spinneret used for the production of the sea-island type composite fiber not falling under the scope of the claimsis the conventionally known pipe type sea-island composite spinneret including a group of pipes that is disclosed in Japanese Unexamined Patent Publication (Kokai) No. 2007-100243. For the conventional pipe type sea-island composite spinneret, however, the maximum thickness of the outermost sea component layer to be produced is about 150 nm, which is the limit of the technique, and it is difficult to realize the ratio (T/R) between the outermost layer thickness T and the fiber diameter R in the fiber cross section. Thus, a method using the sea-island composite spinneret proposed in Japanese Unexamined Patent Publication (Kokai) No. 2011-174215 is suitably used.

As an example of the sea-island composite spinneret used for the production of the sea-island type composite fiber according to the present invention, a sea-island composite spinneret that contains the members shown in Figs. 2 to 4 will be described below. Figs. 2(a) to (c) are explanatory diagrams schematically illustrating a typical sea-island composite spinneret that can be used for the present invention. Fig. 2(a) shows a front vertical section of major portions of the sea-island composite spinneret, and Fig. 2(b) and Fig. 2(c) give a cross-sectional view of a part of the distribution plate and a cross-sectional view of a part of the discharge plate, respectively. Fig. 2(b) and Fig. 2(c) show the distribution plate and the discharge plate, respectively, that are contained in Fig. 2(a). Fig. 3 is a plan view of the distribution plate and Fig. 4 is an enlarged view of a part of the distribution plate used for the present invention, showing the grooves and holes arranged for one discharge hole.

For the production of the sea-island type composite fiber not falling under the scope of the claims, a composite polymer flow is formed through the metering plate and the distribution plate and discharged through the discharge hole in the discharge plate. More specifically, polymer A (island component) and polymer B (sea component) are supplied from upstream of the spinning pack, flow into the metering hole for polymer A (10-(a)) and the metering hole for polymer B (10-(b)), respectively, in the measuring plate in Fig. 2 and then each polymer passes through the tapered orifice disposed at its bottom and after being metered flows into the distribution plate. The distribution plate contains distribution grooves 11 (11-(a) and 11-(b) in Fig. 3) that combine the polymers coming from the metering holes 10, and distribution holes 12 (12-(a) and 12-(b) in Fig. 4) that sends the polymer downstream are located at the bottom of the distribution grooves. In addition, in order to form a layer of polymer B, which is the sea component, as the outermost layer of the composite polymer stream, there is an annular groove 16 having distribution holes disposed at the bottom as shown in Fig. 3. The composite polymer stream composed of polymer A and polymer B discharged from the distribution plate flows into the discharge plate 9

through the discharge introduction hole 13. Then, while being introduced into the discharge hole having an intended diameter, the composite polymer stream is squeezed in the cross-sectional direction as the polymer stream passes through the squeezing hole 14 and then discharged through the discharge hole 15 while maintaining the cross-sectional structure formed in the distribution plate.

For the production of the sea-island type composite fiber not falling under the scope of the claims, the fiber yarn discharged from the sea-island composite spinneret is cooled for solidification by a cooling device and taken up by a first godet roller, and wound up by a winder via a second godet roller to provide a wound yarn. Here, a heating cylinder or heat insulation cylinder with a length of 2 to 20 cm may be installed below the spinneret as required to improve the spinning operability, productivity, and mechanical properties of the fiber. In addition, an oil feeding apparatus may be used to supply oil to the fiber yarn or an entangling machine may be used to entangle the fiber yarn.

For the production of the sea-island composite fiber not falling under the scope of the claims, the spinning temperature in the melt spinning step can be appropriately adjusted according to the melting points, heat resistance, and the like of the sea component and the island component, but it is preferably 240°C to 320°C. The spinning temperature is preferably 240°C or more because in that case, the elongation viscosity of the fiber yarn discharged through the spinneret is maintained sufficiently low to ensure stable discharge and also because the spinning tension is prevented from increasing excessively to avoid yarn breakage. On the other hand, if the spinning temperature is 320°C or less, it is preferable because heat decomposition can be depressed during spinning to prevent the deterioration in mechanical properties and coloring of the fiber.

For the production of the sea-island composite fiber not falling under the scope of the claims, the spinning speed in the melt spinning step can be appropriately adjusted according to the compositions, spinning temperature, and the like of the sea component and the island component. If the spinning is carried out in a two-step process in which melt spinning and winding up are performed in the first step followed by drawing or false twisting in the second step, the spinning speed is preferably 500 to 6000 m/min. A spinning speed of 500 m/min or more is preferable because in that case, the traveling of the yarn is maintained stable and yarn breakage is prevented, whereas a spinning speed of 6,000 m/min or less is preferable because in that case, the spinning tension can be controlled to prevent yarn breakage to ensure stable spinning. When a two-step process is adopted, the spinning speed is more preferably 4,500 m/min or less and still more preferably 4,000 m/min or less. For the spinning in a single step process in which spinning and drawing are performed simultaneously without winding up the yarn, it is preferable to use low speed rollers and high speed rollers that are set to 500 to 5,000 m/min and 2,500 to 6,000 m/min, respectively. If the low speed rollers and high speed rollers are operated in the above range, it is preferable because in that case, the traveling yarn is maintained stable and yarn breakage is prevented to ensure stable spinning.

If drawing is performed in a single step process or a two step process for the production of the sea-island type composite fiber not falling under the scope of the claims, it may be carried out by a single stage drawing technique or in a two or multiple stage drawing technique. There are no specific limitations on the heating method to be used for the drawing as long as it serves to heat the traveling yarn directly or indirectly. Specific examples of heating methods include, but not limited to, the use of a heating roller, heating pin, heating plate, liquid bath such as warm water and hot water baths, gas bath such as hot air and steam baths, and laser. These heating methods may be used singly, or a plurality thereof may be used in combination. Good heating methods include contact with a heating roller, contact with a heating pin, contact with a heating plate, and immersion in a liquid bath, which are preferred from the viewpoint of control of the heating temperature, uniform heating of the traveling yarn, and simplification of equipment.

For the production of the sea-island type composite fiber not falling under the scope of the claims, the drawing temperature at which drawing is performed can be adjusted appropriately depending on the strength, elongation percentage, etc. of the stretched fiber, but it is preferably 50°C to 150°C. If the drawing temperature is 50°C or more, it is preferable because the yarn supplied to the drawing step is preheated sufficiently and uniform thermal deformation is achieved during the drawing step to reduce uneven fineness distribution, prevent dyeing specks and fuzz formation, and realize high quality. The drawing temperature is preferably 150°C or less, on the other hand, because in that case, fusion bonding among fibers and heat decomposition due to contact with the heating rollers can be prevented to ensure high processability and quality. In addition, heat setting may be performed at 60°C to 150°C as required.

If drawing is performed for the production of the sea-island type composite fiber not falling under the scope of the claims, the draw ratio may be adjusted appropriately depending on the elongation percentage of the unstretched fiber and the strength, elongation percentage, etc., of the stretched fiber, but it is preferably 1.02 to 7.0. If the draw ratio is 1.02 or more, it is preferable because the drawing serves to improve mechanical properties such as strength and elongation percentage of the fiber. On the other hand, if the draw ratio is 7.0 or less, it is preferable because yarn breakage during drawing is prevented to ensure stable drawing.

If drawing is performed for the production of the sea-island type composite fiber not falling under the scope of the claims, the drawing rate may be adjusted appropriately depending on whether the drawing method is either a single step process or a two step process, and the like. If a single step process is adopted, the speed of the high speed rollers that realizes the above spinning speed is equal to the drawing speed. When the two step process is adopted for drawing, the

drawing speed is preferably 30 to 1,000 m/min. The drawing speed is preferably 30 m/min or more because in that case, the traveling of the yarn is maintained stable and yarn breakage is prevented. On the other hand, if the drawing speed is 1,000 m/min or less, it is preferable because yarn breakage during drawing is prevented to ensure stable drawing.

If false twisting is performed for the production of the sea-island type composite fiber not falling under the scope of the claims, the so-called woolie finish may be performed using only the first stage heater or the so-called Buleria finish may be performed using both the first stage heater and the second stage heater, either of which may be adopted appropriately. The heater to be used may be either a contact heating type one or a noncontact heating type one. Good false twisting apparatuses include, but not limited to, friction disk type ones, belt nip type ones, and pin type ones.

If false twisting is performed for the production of the sea-island type composite fiber not falling under the scope of the claims, the heater temperature is preferably 120°C to 210°C. If the heater temperature is 120°C or more, it is preferable because the yarn supplied to the false twisting step is preheated sufficiently and uniform thermal deformation is achieved in the drawing step to reduce uneven fineness distribution, prevent dyeing specks and fuzz formation, and realize high quality. The heater temperature is preferably 210°C or less, on the other hand, because in that case, fusion bonding among fibers and heat decomposition due to contact with the heating rollers can be prevented to decrease yarn breakage and contamination of the heaters, etc., and ensure high processability and quality.

If false twisting is performed for the production of the sea-island type composite fiber not falling under the scope of the claims, the draw ratio can be adjusted appropriately depending on the elongation percentage of the non-false-twisted fiber and the strength, elongation percentage, etc., of the false-twisted fiber, but it is preferably 1.01 to 2.5. If the draw ratio is 1.01 or more, it is preferable because the drawing serves to improve mechanical properties such as strength and elongation percentage of the fiber. If the draw ratio is 2.5 or less, on the other hand, it is preferable because yarn breakage in the false twisting step is prevented to ensure stable implementation of the false twisting step.

If false twisting is performed for the production of the sea-island type composite fiber not falling under the scope of the claims, the processing speed can be adjusted appropriately, but it is preferably 200 to 1,000 m/min. If the processing speed is 200 m/min or more, it is preferable because the traveling of the yarn is maintained stable and yarn breakage is prevented. On the other hand, the processing speed is preferably 1,000 m/min or less because in that case, yarn breakage in the false twisting step is prevented to ensure stable implementation of the false twisting step.

There is no specific limitation on the form of the fiber used for the production of the sea-island type composite fiber not falling under the scope of the claims, and it may be in the form of monofilament, multifilament, or staple. Furthermore, it may be subjected to processing such as false twisting and twisting as in the case of other general fibers, and it also may be subjected to weaving and knitting as in the case of other general fibers.

There are no specific limitations on the form of the fiber structure to be used for the production of the sea-island type composite fiber not falling under the scope of the claims, and it may be in the form of woven fabric, knitted fabric, pile fabric, nonwoven fabric, spun yarn, or wadding produced by a generally known method. Furthermore, the fiber structure used for the production of the sea-island type composite fiber according to the present invention may be of any woven or knitted structure and may preferably be processed by plain weaving, diagonal weaving, sateen weaving, or their modified weaving techniques, or warp knitting, weft knitting, circular knitting, lace stitching, or their modified knitting techniques.

The sea-island type composite fiber not falling under the scope of the claims may be combined with other types of fiber by interweaving or interknitting as it is processed into a fiber structure or combined with other types of fiber to form a combined filament yarn before it is processed into a fiber structure.

For the sea-island type composite fiber not falling under the scope of the claims, a dying step may be performed either in a state of fiber or in a state of fiber structure. There is no specific limitation on the dyeing method to be used, furthermore, and generally known methods may be adopted favorably including the use of a cheese dyeing machine, jet dyeing machine, drum dyeing machine, beam dyeing machine, jigger dyeing machine, high pressure jigger dyeing machine, or the like. There is no specific limitation on the dye concentration and dyeing temperature, and generally known procedures can be adopted favorably. In addition, refining may also be performed as required before the dyeing step and reduction cleaning may be performed after the dyeing step.

Described next is the polyester composition according to the present invention.

As described above, hygroscopicity for the present invention means the difference between the moisture absorbing rate at a temperature of 30°C and a humidity of 90%RH, which assume the conditions in clothes after light exercise, and that at a temperature of 20°C and a humidity of 65%RH, which assume outdoor conditions, and represented by $\Delta$MR. A larger $\Delta$MR value means a higher hygroscopicity and a higher wearing comfortability of the fiber and clothing produced therefrom.

From the viewpoint of wearing comfort, $\Delta$MR of the polyester composition according to the present invention is preferably 2.0 to 25.0%, more preferably 4.0 to 25.0% or less, still more preferably 8.0 to 25.0% or less, particularly preferably 15.0 to 25.0% or less, and most preferably 20.0 to 25.0% or less. If $\Delta$MR is less than 2.0%, the hygroscopicity will be low, leading to increased stuffiness in clothes. If $\Delta$MR is more than 25.0%, the melt moldability will deteriorate and the resulting molded article will have poor mechanical strength and suffer fuzz generation in some cases.

The polyester composition according to the present invention is one including a copolymer polyester that

contains a polyester formed of an aromatic dicarboxylic acid and/or an ester-forming derivative thereof and a diol and/or an ester-forming derivative thereof, copolymerized with 10% by weight to 50% by weight of polyethylene glycol having a number average molecular weight of 5,000 to 20,000, and also contains 10.0 to 200.0 mmol/kg of a phenol based antioxidant and a phosphorus based antioxidant in an amount of 15.0 to 75.0 mmol/kg as phosphorus.

The polyester according to the present invention means one of polyesters produced from dicarboxylic acids and ester-forming derivatives thereof, and diols and ester-forming derivatives thereof.

Specific examples of these polyesters include polyethylene terephthalate, polytrimethylene terephthalate, polybutylene terephthalate, polycyclohexylene dimethylene terephthalate, polyethylene-2,6-naphthalene dicarboxylate, and polyethylene-1,2-bis(2-chlorophenoxy) ethane-4,4'-dicarboxylate. From the viewpoint of high crystallinity and good cutting property at the time of discharge after the polymerization step, the use of polybutylene terephthalate is preferred for the present invention.

As dicarboxylic acid components, these polyesters may be copolymerized with dicarboxylic acids such as isophthalic acid, naphthalenedicarboxylic acid, 4,4'-diphenyldicarboxylic acid, cyclohexanedicarboxylic acid, and 5-sulfoisophthalic acid, or ester-forming derivatives thereof. It is preferable that the copolymerized dicarboxylic acid components account for 20 mol% or less, more preferably 10 mol% or less, of the total amount of all dicarboxylic acid components.

As diol compounds, these polyesters may be copolymerized with diol compounds such as ethylene glycol, propylene glycol, butanediol, tetramethylene glycol, hexamethylene glycol, diethylene glycol, cyclohexane dimethanol, neopentyl glycol, and polypropylene glycol, or ester-forming derivatives thereof. It is preferable that butanediol accounts for 80 mol% or more of the total amount of all diol components. Diol components other than butanediol may also be copolymerized unless they impair the preferred effects of the invention.

The polyester composition according to the present invention is characterized by being a polyester copolymerized with polyethylene glycol. As compared with the case of kneading with polyethylene glycol, elution of polyethylene glycol will not occur in a washing step performed as high-order processing and accordingly high hygroscopicity can be maintained. Therefore, it is suitably used as a processed product of fiber, etc.

For the present invention, the polyethylene glycol copolymerized with the polyester is characterized by having a number average molecular weight of 5,000 to 20,000, and accounting for 10 to 50% by weight in the resulting copolymerized polyester. Detailed methods for measuring the number average molecular weight and the copolymerization rate of the polyethylene glycol in the copolymer polyester will be described later, but the copolymer polyester is hydrolyzed with an aqueous alkali solution and subjected to gel permeation chromatography (GPC) to measure it.

For the present invention, the inclusion of a polyethylene glycol having a specific number average molecular weight in the copolymer polyester serves to largely enhance the hygroscopic property to ensure high processability. Specifically, hygroscopic performance can improve extremely when the number average molecular weight of the polyethylene glycol copolymerized into the copolymer polyester is 5,000 or more. Although the reason for this is not clear, it is thought that if having a number average molecular weight of 5,000 or more, the polyethylene glycol can form a unique structure with the polyester in the polyester composition according to the present invention, and as a result, the hygroscopicity becomes extremely high. The polyethylene glycol preferably has a number average molecular weight of 5,500 or more, more preferably 6,000 or more.

For the present invention, if the polyethylene glycol copolymerized with the polyester has a number average molecular weight of more than 20,000, the reactivity with polyethylene terephthalate will decrease and the discharge performance in the polymerization step will deteriorate, leading to the problem of the elution of the polyethylene glycol with hot water in some cases. From the viewpoint of moldability, particularly yarn-making property, the polyethylene glycol copolymerized with the polyester preferably has a number average molecular weight of less than 10,000.

For the present invention, the number average molecular weight of the polyethylene glycol copolymerized with the polyester can be calculated by the following procedure. About 0.05 g of the copolymerized polyester is weighed out in a sealable vial bottle and 1 mL of 28% by weight aqueous ammonia is added, followed by heating at 120°C for 5 hours to ensure dissolution. After cooling, 1 ml of purified water and 1.5 ml of 6 M hydrochloric acid are added and then purified water is added to a volume of 5 ml. After centrifugation, the liquid is filtered through a 0.45 μm filter, and the number average molecular weight of the one-end-terminated polyalkylene oxide compound contained in the filtrate is measured by gel permeation chromatography (GPC). It is noted that the number average molecular weight of the polyethylene glycol as a copolymerization component for the present invention means a value determined by GPC in terms of standard polyethylene glycol.

For the present invention, the copolymerization rate of the polyethylene glycol copolymerized with the polyester is characterized by being 10 to 50% by weight. If the copolymerization rate of the polyethylene glycol is less than 10% by weight, the resulting copolymer polyester will be low in hygroscopicity. Specifically, it will be as low in hygroscopicity as polyester not copolymerized with polyethylene glycol, leading to increased stuffiness in clothing. From the viewpoint of realizing high hygroscopicity, the copolymerization rate of the polyethylene glycol is preferably 10% by weight or more, more preferably 20% by weight or more, still more preferably 30% by weight or more, and particularly preferably 40% by

weight or more. From the viewpoint of heat resistance and melt moldability such as spinnability, the polyethylene glycol added should account for 50% by weight or less. If the amount is more than 50% by weight, the resulting copolymer polyester will not work effectively in a high temperature range, or the resulting molded article will have deteriorated mechanical strength in some cases.

For the present invention, the copolymerization rate of the polyethylene glycol copolymerized with the polyester can be calculated by the following procedure. About 0.05 g of the copolymer polyester is weighed out in a measuring tube for a nuclear magnetic resonance (NMR) instrument, and 1 g of deuterated 1,1,1,3,3,3-hexafluoro-2-isopropanol (HFIP) is added and dissolved. The copolymerization rate of the polyethylene glycol copolymerized with the polyester can be determined by examining the resulting solution by 1H-NMR analysis.

For the present invention, there is no particular limitation on the method for producing the copolymer polyester and generally known polycondensation processes, ring-opening polymerization processes, etc., can be used for its production. They may be performed in either a batch polymerization procedure or a continuous polymerization procedure and can be applied to either transesterification reaction or direct polymerization reaction, of which continuous polymerization is preferred from the viewpoint of reduction in the number of terminal carboxyl groups and direct polymerization is preferred from the viewpoint of cost.

When the polyester used for the present invention is a polymer or a copolymer obtainable through a condensation reaction mainly involving a dicarboxylic acid or an ester-forming derivative thereof and a diol or an ester-forming derivative thereof, it can be produced by subjecting a dicarboxylic acid or an ester-forming derivative thereof and a diol or an ester-forming derivative thereof to an esterification reaction or a transesterification reaction, followed by a polycondensation reaction. Here, for effective implementation of the esterification reaction or transesterification reaction, and the polycondensation reaction, it is preferable to add a polymerization catalyst during these reactions, and specific examples of the polymerization catalyst include organic titanium compounds such as methyl ester, tetra-n-propyl ester, tetra-n-butyl ester, tetraisopropyl ester, tetraisobutyl ester, tetra-t-butyl ester, cyclohexyl ester, phenyl ester, benzyl ester, and tolyl ester of titanium acid, and mixed esters thereof; tin compounds such as dibutyl tin oxide, methyl phenyl tin oxide, tetraethyl tin, hexaethyl ditin oxide, cyclohexahexyl ditin oxide, didodecyl tin oxide, triethyl tin hydroxide, triphenyl tin hydroxide, triisobutyl tin acetate, dibutyl tin diacetate, diphenyl tin dilaurate, monobutyl tin trichloride, dibutyl tin dichloride, tributyl tin chloride, dibutyl tin sulfide, butyl hydroxy tin oxide, methyl stannonic acid, ethyl stannonic acid, butyl stannonic acid, and other alkyl stannonic acids; zirconia compounds such as zirconium tetra-n-butoxide; and antimony compounds such as antimony trioxide and antimony acetate, of which organic titanium compounds and tin compounds are preferable. Furthermore, tetra-n-propyl ester, tetra-n-butyl ester, and tetraisopropyl ester of titanium acid are more preferable, and tetra-n-butyl ester of titanium acid are particularly preferable. These polymerization catalysts may be used singly or as a combination of two or more thereof. From the viewpoint of mechanical properties, moldability, and color tone, the amount of the polymerization catalyst to be added is preferably in the range of 0.005 to 0.5 part by weight, more preferably in the range of 0.01 to 0.2 part by weight, relative to 100 parts by weight of the polyester resin.

For the timing of the addition of the polyethylene glycol as copolymerization component, it may be added, for example, at an appropriate stage such as before the esterification reaction or the transesterification reaction, between a substantial end point of the esterification reaction or the transesterification and start of the polycondensation reaction, and after a substantial end point of the polycondensation reaction.

For the method for producing a polyester composition according to the present invention, it is preferable to perform an esterification reaction of an aromatic dicarboxylic acid and a diol containing 50 mol% or more of 1,4-butanediol.

Examples of the aromatic dicarboxylic acid include isophthalic acid, phthalic acid, 2,6-naphthalene dicarboxylic acid, 1,5-naphthalene dicarboxylic acid, bis(p-carboxyphenyl)methane, anthracenedicarboxylic acid, 4,4'-diphenylether dicarboxylic acid, and 5-sodium sulfoisophthalic acid.

To ensure efficient production of a polyester composition that is high in heat resistance, mechanical properties, and dyeability, it is preferable for terephthalic acid to account for 50 mol% or more, more preferably 90 mol% or more, and most preferably 100 mol%, of all dicarboxylic acid components. It is also preferable that an aromatic dicarboxylic acid component other than terephthalic acid such as isophthalic acid, 2,6-naphthalene dicarboxylic acid, and 5-sodium sulfoisophthalic acid is used in combination.

Useful diols include aromatic diols, aliphatic diols, cycloaliphatic diols, and heterocyclic diols. Two or more of these may be used in combination.

Specific examples of the aforementioned aromatic diols include bisphenol A derivatives to which an ethylene oxide such as polyoxyethylene-(2.0)-2,2-bis(4-hydroxyphenyl) propane, polyoxyethylene-(2.3)-2,2-bis(4-hydroxyphenyl) propane, polyoxyethylene-(2.8)-2,2-bis(4-hydroxyphenyl) propane, and polyoxyethylene-(3.0)-2,2-bis(4-hydroxyphenyl) propane is added, and bisphenol A derivatives to which an propylene oxide such as polyoxypropylene-(2.0)-2,2-bis(4-hydroxyphenyl) propane, polyoxypropylene-(2.3)-2,2-bis(4-hydroxyphenyl) propane, polyoxypropylene-(2.8)-2,2-bis(4-hydroxyphenyl) propane, and polyoxypropylene-(3.0)-2,2-bis(4-hydroxyphenyl) propane is added. Two or more of these may be used in combination.

Examples of other aliphatic diols as described above include ethylene glycol, 1,2-propanediol, 1,3-propanediol,

1,5-pentanediol, 1,6-hexanediol, 1,7-heptanediol, 1,8-octanediol, 1,9-nonanediol, 1,10-decanediol, neopentyl glycol, diethylene glycol, polypropylene glycol, and polytetramethylene glycol. Two or more of these may be used in combination.

Examples of the aforementioned alicyclic diols include cyclopentanediol, 1,2-cyclohexanediol, 1,4-cyclohexanediol, 1,2-cyclohexanedimethanol, and 1,4-cyclohexanedimethanol. Two or more of these may be used in combination.

Examples of the aforementioned heterocyclic diols include isosorbide, isomannide, and isoidet. Two or more of these may be used in combination.

To ensure efficient production of a polybutylene terephthalate that is high in crystallization characteristics, moldability, heat resistance, and mechanical properties, it is preferable for 1,4-butanediol to account for 50 mol% or more, more preferably 90 mol% or more, and most preferably 100 mol%, of the total diol components. It is also preferable that a diol component other than 1,4-butanediol such as ethylene glycol, 1,3-propanediol, and 1,4-cyclohexanedimethanol is used in combination.

In a preferred embodiment of the present invention, the esterification reaction is carried out under a reduced pressure of 30 kPa or more and 95 kPa or less. If the esterification reaction is carried out at a reaction pressure of 30 kPa or more, the resulting polyester will serve to produce a yarn having an increased strength. From the viewpoint of the production of a polyester that serves to produce a yarn having an increased strength, the reaction pressure in the esterification reaction step is preferably 60 kPa or more, more preferably 80 kPa or more, and still more preferably 85 kPa or more. On the other hand, a pressure of 95 kPa or less in the esterification reaction or transesterification reaction step allows the esterification reaction to end in a shortened time.

In a preferred embodiment of the present invention, a reaction catalyst is used in the esterification reaction or transesterification reaction step to allow the reaction to end in a shortened time. Examples of the reaction catalyst include titanium compounds and/or a tin compounds. For the present invention, it is preferable to use a titanium compound from the viewpoint of effective shortening of the reaction time.

In a preferred embodiment of the present invention, examples of the titanium compound used as a reaction catalyst for the esterification reaction include titanium esters as represented by the general formula $(R_1O)_nTi(OR_2)_{(4-n)}$ wherein $R_1$ and $R_2$ each independently represent an aliphatic, alicyclic, or aromatic hydrocarbon group having 1 to I0 carbon atoms, and n represents a number (including a decimal number) of 0 to 4, or condensation products thereof.

Specific examples of the titanium compounds represented by the above general formula include methyl ester, tetra-n-propyl ester, tetra-n-butyl ester, tetraisopropyl ester, tetraisobutyl ester, tetra-t-butyl ester, cyclohexyl ester, phenyl ester, benzyl ester, and tolyl ester of titanium acid, and mixed esters thereof. Two or more of these may be used in combination. Among others, tetra-n-propyl ester, tetra-n-butyl ester, and tetraisopropyl ester of titanium acid are preferred from the viewpoint of efficient production of a polyester. In particular, tetra-n-butyl ester of titanium acid is preferably used.

From the viewpoint of efficient production of a polyester, these titanium compounds preferably account for 0.02 to 0.2 part by weight relative to 100 parts by weight of the resulting polyester.

Specific examples of the tin compounds include dibutyl tin oxide, methylphenyl tin oxide, tetraethyl tin oxide, hexaethyl ditin oxide, cyclohexahexyl ditin oxide, didodecyl tin oxide, triethyl tin hydroxide, triphenyl tin hydroxide, triisobutyl tin acetate, dibutyl tin diacetate, diphenyl tin dilaurate, monobutyl tin trichloride, dibutyl tin dichloride, tributyl tin chloride, dibutyl tin sulfide, and butylhydroxy tin oxide. Two or more of these may be used in combination. Among others, monoalkyl tin compounds are preferred from the viewpoint of efficient production of polybutylene terephthalate

Stannonic acids may be used as other tin compounds. Preferred examples of alkyl stannonic acids include methyl stannonic acid, ethyl stannonic acid, and butyl stannonic acid. Two or more of these may be used in combination.

From the viewpoint of efficient production of a polyester, these tin compounds preferably account for 0.03 to 0.2 part by weight relative to 100 parts by weight of the resulting polyester.

These reaction catalysts may be added at any stage before the end of the esterification reaction, but it is preferable to add them before the start of the esterification reaction from the viewpoint of shortening of the reaction time.

In a preferred embodiment of the present invention, the esterification reaction is carried out under conditions where the molar ratio between a diol component containing 50 mol% or more of 1,4-butanediol and terephthalic acid is more than 1.2 and 2.5 or less. The upper limit of the molar ratio is more preferably 1.8 or less from the viewpoint of suppressing the generation of the THF by-product from the cyclization of 1,4-butanediol to ensure efficient production, shortening the reaction time of the polycondensation reaction, and decreasing the frequency of the replacement of spinning packs during the spinning step.

In a preferred embodiment of the present invention, an additional amount of the diol component may be further added during the esterification reaction to ensure efficient progress of the reaction. The additional diol component may be fed at a stage after the end of the esterification reaction or transesterification reaction step and before the start of the polycondensation reaction step, but it is more preferable to add it at a stage after the start of the esterification reaction and before the start of the polycondensation reaction from the viewpoint of shortening the polymerization time. Feeding of an additional amount of the diol component may be performed a plurality of times, but from the viewpoint of operability, it is preferable to perform it only once at a stage after the start of the esterification reaction and before the start of the polycondensation reaction.

In a preferred embodiment of the present invention, the reaction temperature of the esterification reaction or the transesterification reaction is preferably 140°C or more, more preferably 150°C or more, and still more preferably 160°C or more. Furthermore, the reaction temperature of the esterification reaction is preferably 290°C or less, more preferably 280°C or less, and still more preferably 240°C or less.

Described next is the polycondensation reaction performed for the present invention.

In a preferred embodiment of the present invention, a reaction catalyst is added separately during the polycondensation reaction step if necessary to effectively proceed the polycondensation reaction. For example, it is preferable to add an antimony compound such as antimony trioxide and antimony acetate, a zirconia compound such as zirconium tetra-n-butoxide, a titanium compound as listed above, or a tin compound as listed above in the range of 0.01 to 0.15 part by weight relative to 100 parts by weight of the resulting copolymer polyester, and particularly, the use of a titanium compound is preferred.

These reaction catalysts may be added at any stage before the end of the polycondensation reaction step, but it is preferable to add them after the end of the esterification reaction step and before the start of the polycondensation step from the viewpoint of shortening of the reaction time.

For the present invention, it is preferable that polyethylene glycol is first put in the polymerization tank and then the esterification product is transferred when the temperature of the polymerization tank is 210°C or less. From the viewpoint of suppressing the decomposition of polyethylene glycol and preventing the polycondensation reactivity from decreasing, it is preferably 210°C or less, more preferably 200°C or less.

It is noted that for the present invention, the temperature of the polymerization tank at the time when the esterification product is transferred is synonymous with the temperature of the polyethylene glycol present in the polymerization tank.

For the present invention, it is preferable that polyethylene glycol is first put in the polymerization tank and then the polyethylene glycol is melted in an air or nitrogen atmosphere controlled at a moisture content of 0.01% or less. It is preferable to melt the polyethylene glycol in an air or nitrogen atmosphere controlled at a moisture content of 0.01% or less because it serves for suppressing the decomposition of polyethylene glycol and preventing the polycondensation reactivity from decreasing.

In a preferred embodiment of the present invention, pentaerythritol-tetrakis(3-(3,5-di-t-butyl-4-hydroxyphenol) propionate) (Irganox 1010 (IR1010), manufactured by BASF) is added as an antioxidant in the polymerization step because it serves for decreasing the frequency of the replacement of spinning packs in the spinning step. The content of IR1010 added is preferably in the range of 0.15 to 0.50 part by weight, more preferably 0.25 to 0.50 part by weight, and most preferably 0.35 to 0.50 part by weight. If the content is less than 0.15 part by weight, it tends to fail in having the effect of decreasing the frequency of the replacement of spinning packs in the spinning step. If the content is more than 0.50 part by weight, yarn produced in the presence of a nitrogen oxide tends to suffer yellowing.

In a preferred embodiment of the present invention, the polycondensation reaction is carried out under reduced pressure conditions with a reaction pressure of 133 Pa or less from the viewpoint of shortening the polycondensation reaction time.

For the polycondensation reaction step, the polycondensation conditions commonly used for polyester production, including the use of a batch process or a continuous process, can be applied without modifications. For example, the reaction temperature in the polycondensation reaction step is preferably 230°C or more, and more preferably 240°C or more. Furthermore, the reaction temperature in the polycondensation reaction step is preferably 260°C or less, and more preferably 255°C or less.

In another embodiment of the present invention, an additional solid phase polymerization step may be carried out in order to obtain a polyester material having a high molecular weight and a large intrinsic viscosity. Solid phase polymerization is generally carried out under reduced pressure or in a nitrogen atmosphere, but there is no particular limitation for the present invention. From the viewpoint of the reaction rate and productivity, the solid phase polymerization temperature is preferably 180°C or more, more preferably 185°C or more. On the other hand, from the viewpoint of suppressing the fusion between polyester chips, it is preferably 240°C or less, more preferably 230°C or less. The solid phase polymerization temperature may be adjusted as desired in the above range. As a general tendency, in the case where polymerization is performed at a low temperature, the reaction rate will be low and it will take a longer period of time to achieve a desired intrinsic viscosity, although the maximum reachable intrinsic viscosity will be higher. If the polymerization temperature is increased, on the contrary, the reaction rate will increase, but a degradation reaction will also occur simultaneously, leading to a lower maximum reachable intrinsic viscosity.

For the present invention, a preferred advantage that the resulting copolymer polyester has a remarkably improved color tone is realized by adding phosphorus compounds including, for example, phosphoric acid, phosphorous acid, hypophosphorous acid, pyrophosphoric acid, triamide phosphate, monoammonium phosphate, trimethyl phosphate, dimethyl phosphate, diphenyl phosphate, triphenyl phosphate, diphenyl phosphite, triphenyl phosphite, and dimethylphenyl phosphonate. These phosphorus compounds are preferably added in the polycondensation reaction step in, for example, a copolymer polyester production process.

The polyester composition used for the present invention may contain particles in order to improve the processability and adjust the product color tone by reducing the friction with various guides, rollers, and other members that come in contact in the molding and other processing steps. As regards the type of particles, any conventionally known appropriate particle materials can be used. Specifically, useful examples include inorganic particles such as of silicon dioxide, titanium dioxide, calcium carbonate, barium sulfate, aluminum oxide, and zirconium oxide, and organic polymer particles such as of crosslinked polystyrene. Of these particles, titanium dioxide particles are preferred because of their high dispersibility in a polymer and relatively low cost. Titanium dioxide particles are produced by various wet or dry methods and subjected to pretreatment steps such as pulverization, classification, and the like, if necessary, before being added to the reaction system for copolymer polyester production. Although the addition of particles to the copolymer polyester reaction system may be performed at any appropriate stage, it is preferable to add them after substantial completion of the esterification reaction or transesterification reaction step in order to ensure a high dispersibility in the polymer. There is no particular limitation on the content and diameter of the particles added to the polymer, which vary depending on the intended applications, but it is preferable that they account for 0.01% to 10% by weight relative to the copolymer polyester, that they have an average particle diameter of 0.05 to 5 μm, and that the number of coarse particles having a particle diameter of 4 μm or more is 1,000/0.4 mg or less, because in that case, largely improved processability and color tone is ensured.

In addition, the polyester composition according to the present invention may contain color tone adjusting agents such as blue color tone adjusting agents, red color tone adjusting agents, and purple color tone adjusting agents. A color tone adjusting agent used for the present invention is a dye for resins or the like, and specific examples by color index generic name include Solvent Blue 104, Solvent Blue 122, and Solvent Blue 45, which are blue color tone adjusting agents, Solvent Red 111, Solvent Red 179, Solvent Red 195, Solvent Red 135, Pigment Red 263, and Vat Red 41, which are red color tone adjusting agents, and Desperse Violet 26, Solvent Violet 13, Solvent Violet 37, and Solvent Violet 49, which are purple color tone adjusting agents. In particular, Solvent Blue 104, Solvent Blue 45, Solvent Red 179, Solvent Red 195, Solvent Red 135, and Solvent Violet 49 are preferred because they are free of halogen atoms, which tend to cause corrosion of devices, relatively high in heat resistance at high temperatures, and high in color developability. Furthermore, these color tone adjusting agents may be used singly or a two or more thereof may be used together to meet specific purposes. In particular, it is preferable that one or more blue color tone adjusting agents and one or more red color tone adjusting agents are used in combination because it serves for fine control of the color tone. In this case, furthermore, it is preferable for the blue color tone adjusting agents to account for 50% by weight or more of the total weight of all color tone adjusting agents added because it serves particularly to allow the resulting copolymer polyester to have a good color tone. It is preferable that the total content of the color tone adjusting agents in the finally resulting copolymer polyester is 30 ppm or less. If the content is more than 30 ppm, the copolymer polyester may suffer a deterioration in transparency and have a dull color in some cases. The content can be determined on the basis of structural identification by nuclear magnetic resonance (NMR) spectroscopy and the constituent proportion of the color tone adjusting agents.

The polyester composition according to the present invention is characterized by further containing a phenol based antioxidant , which includes one or more of 2,6-di-t-butyl-p-cresol, butyl hydroxyanisole, 2,6-di-t-butyl-4-ethylphenol, stearyl-β-(3,5-di-t-butyl-4-hydroxyphenyl) propionate, 2,2'-methylene bis(4-methyl-6-t-butyl phenol), 2,2'-methylene bis(4-ethyl- 6-t-butyl phenol), 4,4'-butylidene bis(3-methyl-6-t-butyl phenol), 3,9-bis{1,1-dimethyl-2-{β-(3-t-butyl-4-hydroxy-5-methylphenyl) propionyloxy} ethyl} 2,4,8,10-tetraoxaspiro{5,5}undecane, 1,1,3-tris-(2-methyl-4-hydroxy-5-t-butyl phenyl) butane, 1,3,5-trimethyl-2,4,6-tris-(3,5-di-t-butyl-4-hydroxybenzyl) benzene, bis{3,3'-bis-(4'-hydroxy-3'-t-butylphenyl) butyric acid}glycol ester, tocopherol, pentaerythritol-tetrakis(3-(3,5-di-t-butyl-4-hydroxyphenol) propionate), bis[3-(3-t-butyl-4-hydroxy-5-methylphenyl) propionate][ethylenebis(oxyethylene)], and 1,3,5-tris[[4-(1,1-dimethylethyl)-3-hydroxy-2,6-dimethylphenyl]methyl]-1,3,5-triazine-2,4,6(1H,3H,5H)-trione. These phenol based compounds may be used singly, or two or more thereof may be used in combination. From the viewpoint of effective depression of oxidative decomposition, decreased formation of yellow quinone based compounds during water washing treatment, and effective suppression of yellowing, suitable ones include bis[3-(3-t-butyl-4-hydroxy-5-methylphenyl) propionic acid] [ethylene-bis(oxyethylene)] ester (Irganox 245, manufactured by BASF), 3,9-bis{1,1-dimethyl-2-{β-(3-t-butyl-4-hydroxy-5-methylphenyl) propionyloxy}ethyl} 2,4,8,10-tetraoxaspiro{5,5}undecane (Adeka Stab AO-80, manufactured by Adeka Corporation), and 1,3,5-tris-[[4-(1,1-dimethylethyl) -3-hydroxy-2,6-dimethylphenyl] methyl] -1,3,5-triazine-2,4,6 (1H,3H,5H)-trione (THANOX 1790, manufactured by Rianinlon Corporation).

The phenol based antioxidant contained in the polyester composition according to the present invention can be identified by the following procedure. About 1 g of the polyester composition is dissolved in 20 mL of HFIP and 40 mL of toluene is added. Subsequently, 60 mL of methanol is added to perform precipitation. The solution prepared is filtered through a 0.45 μm filter and the solvent is removed from the filtrate using an evaporator to separate the antioxidant. The resulting antioxidant is put in an NMR measuring tube and 1 g of deuterated HFIP is added for dissolution. This solution is examined by 1H-NMR to determine the structure of the phenol based antioxidant contained in the polyester composition and identify the compound.

The polyester composition according to the present invention is characterized by further containing 10.0 to 200.0

mmol/kg of the aforementioned phenol based antioxidant. If the content of the phenol based antioxidant is less than 10 mmol/kg, a composite fiber formed from the polyester composition according to the present invention will suffer a deterioration in the resistance to oxidative heat generation after dry cleaning treatment (JIS L1096) or water washing treatment (JIS L0217), and oxidative heat generation will occur in less than 90 hours. If the content of the phenol based antioxidant is more than 200.0 mmol/kg, the orientation of fibers produced from the polyester composition is suppressed and the fiber strength is decreased, leading to frequent occurrence of yarn breakage in knitting and weaving steps and deterioration in quality due to fuzz generation during use. From the viewpoint of oxidative heat generation resistance and fiber strength, the content of the phenol based antioxidant is more preferably 70.0 to 200.0 mmol/kg, particularly preferably 120.0 to 200.0 mmol/kg.

The polyester composition according to the present invention is characterized by further containing 0.5% to 8.0% by weight of the aforementioned phenol based antioxidant. If the content of the phenol based antioxidant is less than 0.5% by weight, a composite fiber formed from the polyester composition according to the present invention will suffer a deterioration in the resistance to oxidative heat generation after dry cleaning treatment (JIS L1096) or water washing treatment (JIS L0217), and oxidative heat generation will occur in less than 90 hours in some cases. If the content of the phenol based antioxidant is more than 8.0% by weight, the orientation of fibers produced from the polyester composition will be suppressed and the fiber strength is decreased in some cases, possibly leading to frequent occurrence of yarn breakage in knitting and weaving steps and deterioration in quality due to fuzz generation during use. From the viewpoint of oxidative heat generation resistance and fiber strength, the content of the phenol based antioxidant is more preferably 3.0 to 8.0% by weight, particularly preferably 5.0 to 8.0% by weight.

Oxidative heat generation resistance test of a composite fiber formed from the polyester composition according to the present invention is performed by the following procedure. Samples are subjected to dry cleaning treatment (JIS L1096) or water washing treatment (JIS L0217) and stacked to a depth of 25 mm in a cylindrical container, followed by setting a thermocouple at the center. Then, additional samples are stacked on them to completely fill the cylindrical container without leaving gaps. The cylindrical container filled with samples is placed in a constant temperature dryer apparatus set at 150°C to determine the time at which the oxidative heat generation begins. The sample was judged to be "acceptable" if the oxidative heat generation start time was 100 hours or more, "good" if it was 90 hours or more, and "unacceptable" if it was less than 90 hours.

The content of the phenol based antioxidant contained in the polyester composition according to the present invention can be determined by the following procedure. About 1 g of the copolymer polyester is dissolved in 20 mL of HFIP and 40 mL of toluene is added. Subsequently, 60 mL of methanol is added for precipitation. The solution prepared is filtered through a 0.45 μm filter and the resulting filtrate is used as a specimen for HPLC measurement, from which the content of the phenol based antioxidant contained in the polyester composition can be calculated.

The polyester composition according to the present invention is characterized by containing a phosphorus based antioxidant. As a result of the inclusion of a phosphorus based antioxidant, the deactivation of phenol by the hypochlorous acid based bleaching agent used in water washing treatment (JIS L 0217) is suppressed and a high resistance to oxidative heat generation is maintained even after water washing treatment. The phosphorus based antioxidant in the polyester composition according to the present invention is not particularly limited as long as it is a compound containing a phosphorus atom. Specific examples include triphenyl phosphite, tris(2,4-t-butylphenyl) phosphite, bis[2,4bis(1,1-dimethylethyl)-6-methylphenyl] ethyl ester phosphorous acid, bis(2,4-t-butylphenyl) pentaerythritol diphosphite, tetrakis(2,4-di-t-butylphenyl) [1,1-biphenyl]-4,4'-diyl bisphosphonite, tetra(C12-to-C15 alkyl)-4,4'-isopropylidene diphenyl diphosphite, 3,9-bis(2,6-t-butyl-4-methylphenoxy)-2,4,8,10-tetraoxa-3,9-diphosphaspiro[5,5-undecane], and 1,1'-biphenyl-4,4'-diyl-bis[phosphonous acid bis(2,4-di-t-butylphenyl)]. These phosphorus based antioxidants may be used singly, or two or more thereof may be used in combination. Among others, tris-(2,4-t-butylphenyl) phosphite (IRGAFOS 168, manufactured by BASF), 3,9-bis(2,6-t-butyl-4-methylphenoxy) -2,4,8,10-tetraoxa-3,9-diphosphaspiro [5,5-undecane] (Adeka Stab PEP-36, manufactured by Adeka Corporation), tetra(C12-to-C15 alkyl)-4,4'-isopropylidene diphenyl diphosphite (JA-805, manufactured by Johoku Chemical Co., Ltd,), and 1,1'-biphenyl-4,4'-diyl-bis[phosphonous acid bis(2,4-di-t-butylphenyl)] (Hostanox P-EPQ, manufactured by Clariant Chemicals) can be suitably used because of high oxidative decomposition resistance after water washing treatment, and P-EPQ and PEP-36 are more preferable from the viewpoint of suppressed yellowing after water washing treatment. PEP-36 is particularly preferable because it serves to suppress the occurrence of bleed-out in the chip drying step performed prior to spinning.

The phosphorus based antioxidant contained in the polyester composition according to the present invention can be identified by the following procedure. About 1 g of the copolymer polyester is dissolved in 20 mL of HFIP and 40 mL of toluene is added. Subsequently, 60 mL of methanol is added for precipitation. The solution prepared is filtered through a 0.45 μm filter and the solvent is removed from the filtrate using an evaporator to separate the antioxidant. The resulting antioxidant is put in an NMR measuring tube and 1 g of deuterated HFIP is added for dissolution. This solution is examined by 1H-NMR to determine the structure of the phosphorus based antioxidant contained in the polyester composition and identify the compound.

The polyester composition according to the present invention is characterized by containing a phosphorus based

antioxidant in a phosphorus amount of 15.0 to 75.0 mmol/kg. If the content of the phosphorus based antioxidant is less than 15.0 mmol/kg, yellowing will occur after water washing treatment (JIS L0217) and the resistance to oxidative heat generation will decrease, leading to oxidative heat generation starting in less than 90 hours in some cases. Furthermore, if the content of the phosphorus based antioxidant is more than 75.0 mmol/kg, the orientation of fibers produced from the polyester composition will be suppressed and the fiber strength is decreased, possibly leading to frequent occurrence of yarn breakage in knitting and weaving steps and deterioration in quality due to fuzz generation during use in some cases. From the viewpoint of suppressed yellowing after water washing treatment, oxidative heat generation resistance, and fiber strength, it is preferable for the phosphorus content in the phosphorus based antioxidant to be more preferably 35.0 to 65.0 mmol/kg, and particularly preferably 35.0 to 50.0 mmol/kg.

The polyester composition according to the present invention is characterized by containing a phosphorus based antioxidant in a phosphorus amount of 0.10 to 0.25% by weight. If the content of phosphorus in the phosphorus based antioxidant is less than 0.10% by weight, yellowing will occur after water washing treatment (JIS L0217) and the resistance to oxidative heat generation will decrease, leading to oxidative heat generation starting in less than 90 hours in some cases. Furthermore, if the content of phosphorus in the phosphorus based antioxidant is more than 0.25% by weight, the orientation of fibers produced from the polyester composition will be suppressed and the fiber strength is decreased, possibly leading to frequent occurrence of yarn breakage in knitting and weaving steps and deterioration in quality due to fuzz generation during use in some cases. From the viewpoint of suppressed yellowing after water washing treatment, oxidative heat generation resistance, and fiber strength, it is preferable for the content of phosphorus in the phosphorus based antioxidant to be more preferably 0.15% to 0.25% by weight, and particularly preferably 0.15% to 0.20% by weight.

The content of phosphorus in the phosphorus based antioxidant contained in the polyester composition according to the present invention can be determined by the following procedure. About 1 g of the copolymer polyester is weighed out and 10 mL of sulfuric acid is added, followed by decomposition at 250°C on a sand bath. Then, 1.0 mL of perchloric acid is added, followed by further decomposition at 300°C. When the sample becomes clear and colorless, decomposition is continued at 350°C, followed by sulfuric acid reflux. After cooling, a 20% aqueous sodium hydroxide solution is added for neutralization. Using the resulting solution as a sample solution, its absorbance at 720 nm is measured by spectrophotometry and then the amount of phosphorus can be calculated.

The phosphorus based antioxidant contained in the polyester composition according to the present invention is characterized by having a 5% weight loss temperature of 170°C or higher as determined in a heat loss evaluation performed at a temperature increase rate of 10°C/min in a nitrogen atmosphere using a thermogravimetric differential thermal analyzer (TG-DTA). If the 5% weight loss temperature is lower than 170°C, decomposition and/or volatilization tend to occur in the kneading or spinning step, possibly failing to develop resistance to oxidative heat generation or show yellowing suppression effect in producing fibers. From the viewpoint of developing resistance to high oxidative heat generation and showing yellowing suppression effect, it is preferable for the 5% weight loss temperature to be 170°C or more, more preferably 180°C or more, still more preferably 200°C or more, and particularly preferably 220°C or more.

The phosphorus based antioxidant contained in the polyester composition according to the present invention is characterized by having a molecular structure that contains 2 or more phosphorus atoms in a molecule. If a phosphorus based antioxidant having a molecular structure that contains only one phosphorus atom in a molecule is used, it will be volatilized in the kneading or spinning step, possibly failing to develop resistance to oxidative heat generation or show yellowing suppression effect in producing fibers. From the viewpoint of developing resistance to oxidative heat generation and showing yellowing suppression effect, it is preferable for the phosphorus based antioxidant to have a molecular structure that contains 2 or more phosphorus atoms in a molecule.

The phosphorus based antioxidant contained in the polyester composition according to the present invention is characterized by having a melting point of 80°C or higher. If the melting point of the phosphorus based antioxidant is lower than 80°C, decomposition and/or volatilization tend to occur in the kneading or spinning step, possibly failing to develop resistance to oxidative heat generation or show yellowing suppression effect in producing fibers. From the viewpoint of developing resistance to oxidative heat generation and showing yellowing suppression effect, it is preferable for the melting point to be 80°C or higher, more preferably 100°C or higher, and more preferably 150°C or higher, still more preferably 180°C or higher, and most preferably 200°C or higher.

The phosphorus based antioxidant contained in the polyester composition according to the present invention is characterized by having a molecular structure as represented by the following chemical formula (2) or chemical formula (3).

[Chemical compound 2]

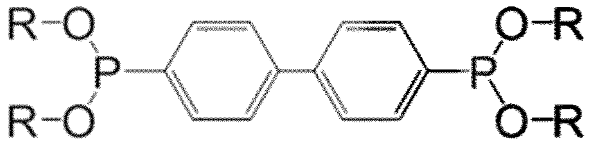

··· (2)

In the above formula (2), R denotes a hydrocarbon group.

[Chemical compound 3]

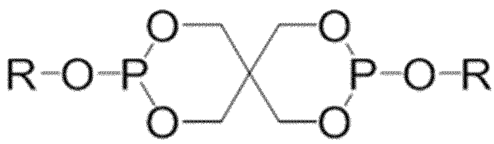

··· (3)

In the above formula (3), R denotes a hydrocarbon group.

Examples of the phosphorus based antioxidant having a molecular structure as represented by chemical formula (2) include Hostanox P-EPQ, manufactured by Clariant Chemicals.

Examples of the phosphorus based antioxidant having a molecular structure as represented by chemical structural formula (3) include Adeka Stab PEP-36, manufactured by Adeka Corporation.

The method to be used for producing the polyester composition according to the present invention is not particularly limited as long as it satisfies the requirements specified for the present invention, but examples thereof include a method in which a copolymer polyester used as main component of the polyester composition according to the present invention is melt-kneaded uniformly with a phenol based antioxidant, a phosphorus based antioxidant, and, if necessary, other components in a single screw or a twin screw extruder at a temperature not lower than the melting point, a method in which they are mixed in a solution, followed by removing the solvent, a method in which they are added during the preparation of the main copolymer polyester component, and a method in which they are added during the spinning step. Of these, the method of uniformly kneading them in a single screw or a twin screw extruder is preferred from the viewpoint of productivity, and the method of uniformly kneading them in a twin screw extruder is particularly preferred in view of obtaining fibers having good mechanical properties.

In the preferred embodiments according to the present invention, good methods for feeding the various components in the melt kneading step include one in which an extruder having two inlets are employed and the copolymer polyester used as main component of the polyester composition, a phenol based antioxidant, a phosphorus based antioxidant, and, if necessary, other components are supplied from the main inlet provided near the root of the screw and one in which the copolymer polyester used as main component of the polyester composition and other components are supplied from the main inlet while the phenol based antioxidant and the phosphorus based antioxidant are supplied from the auxiliary inlet provided between the main inlet and the end of the extruder, of which the method in which the copolymer polyester used as main component of the polyester composition, a phenol based antioxidant, a phosphorus based antioxidant, and, if necessary, other components are supplied from the main inlet is preferred from the viewpoint of good mechanical properties and productivity stability.

For the polyester composition according to the present invention, various modifications may be made by adding other additives unless the preferred effects of the invention are impaired. Specific examples of such other additives include, in addition to the aforementioned particles and color adjusting agents, pigments such as carbon black, surfactants such as alkylbenzenesulfonic acid, and conventionally known additives such as antioxidants, coloring inhibitors, light resisting agents, antistatic agents, compatibilizers, plasticizers, fluorescent whitening agents, mold release agents, antibacterial agents, nucleating agents, modifiers, matting agents, antifoaming agents, preservatives, gelling agents, latexes, fillers, inks, colorants, and perfumes. These other additives may be used singly or as a mixture of two or more thereof.

In a preferred embodiment of the present invention, the melt kneading temperature adopted for producing the polyester composition is 110°C to 360°C, more preferably 210°C to 320°C, and particularly preferably 240°C to 280°C from the viewpoint of good mechanical properties.

It is preferable for the polyester composition according to the present invention to have an intrinsic viscosity (IV) of 1.50 dL/g or more, more preferably 1.55 dL/g or more, still more preferably 1.60 dL/g or more, and particularly preferably 1.63 dL/g or more, as measured at 25°C using an o-chlorophenol as solvent. Furthermore, the upper limit is preferably 2.20 dL/g or less, more preferably 2.15 dL/g or less, and still more preferably 2.10 dL/g or less. If it is in this range, the copolymer

polyester serves to produce a high strength fiber polymerized to a high degree.

The use of the polyester composition according to the present invention as a constituent component of a composite fiber makes it possible to obtain a composite fiber that exhibits an unprecedented degree of hygroscopicity while suffering no deterioration in physical fiber properties.

Specifically, it can be suitably used as the hygroscopic polymer in the highly hygroscopic sea-island type composite fiber described above, which does not fall under the scope of the claims, but there are other preferred fiber forms as described below.

Examples of good fiber forms include core-sheath type composite fiber, core-sheath type composite hollow fiber, and sea-island type composite fiber, in which the polyester composition according to the present invention may account for an appropriate proportion as a constituent component. In the case of a core-sheath type composite fiber or a core-sheath type composite hollow fiber, for example, it is preferable that the mixing ratio (percent by weight) of the polyester composition used as the core component, represented as core/sheath, is 10/90 to 90/10. It is more preferably 15/85 to 50/50, and particularly preferably 20/80 to 40/60. An appropriate lower limit of the mixing ratio of the core component is set depending on the purpose of imparting sufficient hygroscopicity, whereas an appropriate upper limit of the fiber mixing ratio is set from the viewpoint of preventing a decrease in spinnability and a deterioration in fiber's physical properties. In the case of a sea-island type composite fiber, the mixing ratio (percent by weight) of the polyester composition used as the island component, represented as island/sea, is preferably 10/90 to 90/10. It is more preferably 15/85 to 50/50, and particularly preferably 20/80 to 40/60. An appropriate lower limit of the mixing ratio of the island component is set depending on the purpose of imparting sufficient hygroscopicity, whereas an appropriate upper limit of the fiber mixing ratio is set from the viewpoint of preventing a decrease in spinnability and a deterioration in fiber's physical properties.

To produce a composite fiber from the polyester composition according to the present invention in combination with other polyesters, conventionally known methods may be useful, but a typical method for producing a sea-island type composite fiber is described below. In the case of a sea-island type composite fiber, the polyester composition according to the present invention (island component) and a polyester (sea component) are separately melted and introduced into the spinning pack, where a sea-island composite flow is formed in the spinneret device and spun out from a discharge hole. The spun filament yarn is taken off at a predetermined speed and then wound up to form a package, and the resulting undrawn yarn is drawn by a normal drawing machine. Otherwise, the spun yarn may be taken off and then continuously drawn without winding, or may be taken off at a high speed of 4,000 m/min or more to directly achieve a desired fiber performance without substantial drawing. To perform direct spinning and drawing, for example, the spun yarn is taken off at 1,000 to 5,000 m/min, drawn at 3,000 to 6,000 m/min, and then heat-set. The form of the fibers may be either filaments or staple, and a desired form is appropriately selected depending on the application. The fabric may be in the form of woven fabric, knitted fabric, nonwoven fabric, etc., and an appropriate form may be selected to meet particular purposes.

## EXAMPLES

The invention is described in more detail below with reference to Examples. The characteristic values used in Examples were determined by the following methods.

### A. Number average molecular weight of polyethylene glycol

Analysis of the molecular weight of the polyethylene glycol in the copolymer polyester was performed by gel permeation chromatography (GPC) of the extracted filtrate described above.

Detector: Waters 2410 Differential Refractometer, sensitivity 128x
Column: TSKgel G3000PWXLI, manufactured by Tosoh Corporation
Solvent: 0.1 M aqueous sodium chloride solution
Flow rate: 0.8 mL/min
Injection volume: 200 μL
Column temperature: 40°C
Standard: polyethylene glycol (Mw 106 to 10,100, manufactured by AMR Inc.)

### B. Extraction of polyethylene glycol from copolymer polyester

Polyethylene glycol in the copolymer polyester is extracted by the procedure described below and the molecular weight of the polyethylene glycol is determined by gel permeation chromatography (GPC).

The procedure for extracting polyethylene glycol from the copolymer polyester is described below.

A 0.05 g portion of the resulting copolymer polyester was sampled, heated for dissolution in 1 mL of 28% ammonia water at 120°C for 5 hours, and allowed to cool, and then 1 mL of purified water and 1.5 mL of 6M hydrochloric

acid were added thereto, followed by adding purified water to a volume of in 5 mL, performing centrifugation, and then filtering through a 0.45 μm filter to provide a filtrate, which was used for GPC.

C. Copolymerization rate of polyethylene glycol

Analysis of the copolymerization rate of the polyethylene glycol in the copolymer polyester was carried out using a nuclear magnetic resonance (NMR) apparatus.

Equipment: AL-400, manufactured by JEOL Ltd.
Deuterated solvent: deuterated 1,1,1,3,3,3-hexafluoro-2-isopropanol (HFIP)
Number of times of calculation: 128
Sample concentration: 0.05 g of sample / 1 mL of deuterated solvent

D. Sea/island mixing ratio

The sea/island mixing ratio (by weight) was calculated from the weights of the sea component and the island component used as raw materials for producing a sea-island type composite fiber.

E. Extraction of phenol based antioxidant from copolymer polyester

Extraction of the phenol based antioxidant from the copolymer polyester was carried out by the following procedure, and structural analysis of the phenol based antioxidant was carried out using a nuclear magnetic resonance (NMR) apparatus.

The procedure for extracting the phenol based antioxidant from the copolymer polyester is described below.

About 1 g of the resulting copolymer polyester is dissolved in 20 mL of HFIP and 40 mL of toluene is added. Subsequently, 60 mL of methanol is added to perform precipitation. The precipitate is removed by filtering through a 0.45 μm filter and the filtrate is concentrated using an evaporator to provide a dry matter. This dry matter was subjected to $^1$H-NMR analysis or high-performance liquid chromatography (HPLC).

F. Determination of structural formula of phenolic group and structural analysis of phenol based antioxidant contained in copolymer polyester

Determination of structural formula of phenolic group and structural analysis of phenol based antioxidant contained in copolymer polyester were carried out using a nuclear magnetic resonance (NMR) apparatus.

Equipment: AL-400, manufactured by JEOL Ltd.
Deuterated solvent: deuterated HFIP
Number of times of calculation: 128
Sample concentration: 0.05 g of sample / 1 mL of deuterated solvent

G. Analysis of content of phenolic group

(1) The fiber prepared in an Example is used as sample, and 1 g of the sample is dissolved in 20 mL of HFIP, followed by adding 40 mL of toluene. Subsequently, 60 mL of methanol is added to perform precipitation. The precipitate is removed by filtering through a 0.45 μm filter, and the resulting filtrate is used as sample for HPLC. Using this sample, HPLC measurements were taken using a HPLC apparatus (SCL-10AVP, manufactured by Shimadzu Corporation) under the conditions given below, and the quantity of the phenolic group contained in the sample for HPLC measurement was determined based on a calibration curve prepared in advance from a standard substance (1,4-diphenylbenzene) and then used to calculate the content of the phenolic group (mmol/kg) contained in the fiber prepared in the Example. Here, five measurements were taken from a specimen, and their average was adopted to represent the content of the phenolic group.

Columns: YMC-Pack ODS-A, manufactured by YMC Co., Ltd., (inner diameter 4.6 mm, length 150 mm, particle diameter 5 nm)
Detector: SPD-10AVVP, manufactured by Shimadzu Corporation
Mobile phase: methanol (solvent A), water (solvent B), solvent A : solvent B = 88:12
Flow rate: 1.3 mL/min

Injection volume:1 μL
Column temperature: 40°C
Standard: 1,4-diphenylbenzene

(2) The fiber prepared in an Example was used as sample, and 0.01 g of the sample was decomposed at 80°C with 4 mL of 10% methanol hydrochloride. After cooling, 1 mL of methanol hydrochloride was added, and the precipitate was filtered. The filtrate was subjected to HPLC analysis. A standard solution was prepared by dissolving Irganox 1010, methyl 3-(3,5-di-tert-butyl-4-hydroxyphenyl) propionate and 3-(3,5-di-tert-butyl-4-hydroxyphenyl) propionic acid in a chloroform/acetonitrile solvent and used to prepare a calibration curve, which served to calculate the content of the phenolic group (mmol/kg) contained in the fiber prepared in the Example.

| | | |
|---|---|---|
| Column: | Inertsil ODS-3 (3 × 150 mm, 5 μm) | |
| Detector: | LC-20A, manufactured by Shimadzu Corporation | |
| Mobile phase: | A. 0.1 vol% aqueous formic acid solution, B. acetonitrile | |
| Program: | 0.0 min → 10.0 min | B25% → 100% |
| | 10.0 min → 20 min | B100% |
| Flow rate: | 0.8 mL/min | |
| Injection volume: | 20 μL | |
| Column temperature: | 50°C | |
| Detection wavelength: | PDA 260 to 280 nm | |

H. Analysis of content of phenol based antioxidant contained in copolymer polyester

For the analysis of the content of the phenol based antioxidant contained in the copolymer polyester, the precipitate described in section E was subjected to HPLC. The content of the phenol based antioxidant contained in the sample prepared for HPLC was determined based on a calibration curve of the standard material (1,4-diphenylbenzene) produced in advance. Here, five measurements were taken from a sample, and their average was adopted.

Columns: YMC-Pack ODS-A, manufactured by YMC Co., Ltd., (inner diameter 4.6 mm, length 150 mm, particle diameter 5 nm)
Detector: SPD-10AVVP, manufactured by Shimadzu Corporation
Mobile phase: methanol (solvent A), water (solvent B), solvent A : solvent B = 88:12
Flow rate: 1.3 mL/min
Injection volume: 1 μL
Column temperature: 40°C
Standard: 1,4-diphenylbenzene

I. Content of phosphorus atoms

A 1 g sample was put in a 100 mL Erlenmeyer flask, and 10 mL of sulfuric acid was added, followed by its decomposition on a sand bath at 250°C. Then, 1.0 mL of perchloric acid was added, followed by further decomposition at 300°C. When the sample becomes clear and colorless, decomposition was continued at 350°C until sulfuric acid was refluxed sufficiently. After cooling, the solution was transferred to a 50 mL volumetric flask, and titrated for neutralization with a 20% aqueous sodium hydroxide solution, followed by adding 2 mL of a molybdenum blue chromogenic solution to the neutralized solution. After leaving it to stand for 15 minutes, the absorbance at 720 nm was measured by a spectrophotometer (U-3310, manufactured by Hitachi High-Tech Science Corporation), and the amount of phosphorus atoms was determined, followed by calculating the phosphorus content (mmol/kg) contained in the fiber prepared in the Example.

J. Structural analysis of phosphorus based antioxidant

Using a precipitate prepared by the procedure described in section E, structural analysis of the phosphorus based antioxidant contained in the copolymer polyester was carried out using a nuclear magnetic resonance (NMR) apparatus.

Equipment: AL-400, manufactured by JEOL Ltd.

Deuterated solvent: deuterated HFIP
Number of times of calculation: 128
Sample concentration: 0.05 g of sample / 1 mL of deuterated solvent

K. Evaluation of heat loss in phosphorus based antioxidant

Using a precipitate prepared by the procedure described in section E, heat loss analysis of the phosphorus based antioxidant contained in the copolymer polyester was carried out using a thermogravimetric differential thermal analyzer (TG-DTA).

Equipment: TG/DTA 6200, manufactured by SEIKO Instruments
Sample: vacuum-dried for 24 hours at 90° C under 0. 1 KPa pressure
Measurement atmosphere: nitrogen
Heating rate: Held at 100°C for 5 minutes, and heated at 10°C/minute from 100°C to 300°C

L. Melting point of phosphorus based antioxidant

Using a precipitate prepared by the procedure described in section E, melting point analysis of the phosphorus based antioxidant contained in the copolymer polyester was carried out using a differential scanning calorimeter (DSC).

Equipment: Q-2000, manufactured by TA Instruments
Sample: vacuum-dried for 24 hours at 90° C under 0. 1 KPa pressure
Heating rate: 16°C/minute from 20°C to 150°C

M. Fineness

In an environment at a temperature of 20°C and a humidity of 65%RH, a 100 m fiber sample taken from the fiber prepared in a Example was wound into a hank using an electric sizing reel manufactured by INTEC. The weight of the resulting hank was measured and its fineness (dtex) was calculated by the following equation. Here, five measurements were taken from a sample, and their average was adopted to represent the fineness.

$$\text{Fineness (dtex)} = \text{weight (g) of 100 m fiber} \times 100$$

N. Strength and elongation percentage

The fiber prepared in an Example was used as sample, and its strength and elongation percentage were calculated according to JIS L 1013 (2010) (Test method for chemical fiber filament yarn) 8.5.1. In an environment at a temperature of 20°C and a humidity of 65%RH, a tensile test was performed using Tensilon UTM-III-100, manufactured by Orientec Co., Ltd., under the conditions of an initial sample length of 20 cm and tension speed of 20 cm/min. The strength (cN/dtex) was calculated by dividing the stress (cN) at the point showing the maximum load by the fineness (dtex), and the elongation percentage (%) was calculated by the following equation from the elongation (L1) at the point showing the maximum load and the initial sample length (L0). Here, ten measurements were taken from a sample, and the averages were adopted to represent the strength and elongation percentage. A sample was rated as "good" when having a strength of 2.0 cN/dtex or more and "even better" when having a strength of 2.3 cN/dtex or more.

$$\text{Elongation percentage (\%)} = \{(L1 - L0) / L0\} \times 100$$

O. Fiber diameter R

A sample of the fiber prepared in an Example was embedded in epoxy resin, frozen in an FC-4E type cryosectioning system manufactured by Reichert, and cut by Reichert-Nissei Ultracut N (ultramicrotome), which is equipped with a diamond knife. Then, the cut surface, i.e. fiber cross section, was observed at a magnification of x1,000 under a transmission electron microscope (TEM) (H-7100FA, manufactured by Hitachi, Ltd.) to take a micrograph of the fiber cross section. Ten single yarns were randomly selected from the photograph taken and the fiber diameters of all selected single yarns were measured using an image processing program (WINROOF, manufactured by Mitani Corporation), followed by calculating their average to represent the fiber diameters R (nm). The fiber cross section does

not always have a perfect circular shape, and in the case of a non-perfect circular shape, the diameter of the circle circumscribed on the fiber cross section was adopted to represent the fiber diameter.

P. Outermost layer thickness T

Afiber cross section was observed by the same procedure as for the fiber diameter described in section O above, and a microphotograph was taken at the highest magnification at which observation of an overall image of a single fiber was possible. The photograph obtained was examined with an image processing program (WINROOF, manufactured by Mitani Corporation) to identify a true circle that was in contact with the contour of the fiber cross section at two or more points and determine its radius to represent the fiber radius, and further examined to determine the radius of a true circle (circumcircle) that was in contact with two or more of the islands located along the outer periphery of the sea-island structure as denoted by 4 in Fig. 1. Ten single fibers were randomly selected from the photograph obtained, and the radius of each fiber and the radius of the circumcircle in the sea-island structure were determined in the same manner, and the difference between the radius of each fiber and the radius of the circumcircle in the sea-island structure was calculated for each single yarn, followed by averaging the values obtained to represent the outermost layer thickness T (nm).

Q. Ratio (T/R) between outermost layer thickness T and fiber diameter R

T/R was calculated by dividing the outermost layer thickness T (nm) calculated above in section I by the fiber diameter R (nm) calculated above in section H.

R. Difference in moisture absorbing rate (ΔMR)

(1) ΔMR of fabric

The fibers prepared in an Example were used as sample, and about 2 g of a circular knitted fabric was produced using a round knitting machine (NCR-BL, manufactured by Eiko Industrial Co,.Ltd.) (diameter 3.5 inch (8.9 cm), 27-gauge) and refined at 80°C for 20 minutes in an aqueous solution containing 1 g/L of sodium carbonate and a surface active agent (Gran Up US-20, manufactured by Meisei Chemical Works, Ltd.), followed by drying in a hot air drier at 60°C for 60 minutes to provide a refined circular knitted fabric. Then, the refined circular knitted fabric was subjected to hot water treatment under the conditions of a bath ratio of 1:100, a treatment temperature of 130°C, and a treatment period of 60 minutes, and dried at 60°C for 60 minutes in a hot air dryer to provide a hot water-treated circular knitted fabric.

The refined and hot water-treated circular knitted fabric samples were subjected to determination of hygroscopicity (%), which was calculated according to 8.10 (moisture content) of JIS L1096 (2010) (Fabric test methods for woven fabric and knitted fabric). First, the circular knitted fabric sample was dried at 60°C for 30 minutes in a hot air dryer and left to stand for 24 hours in a thermo-hygrostat (LHU-123, manufactured by Espec Corp.) conditioned at a temperature of 20°C and a humidity of 65%RH, followed by measuring the weight (W1) of the circular knitted fabric sample, and then the circular knitted fabric sample was left to stand for 24 hours in a thermo-hygrostat conditioned at a temperature of 30°C and a humidity of 90%RH, followed by measuring the weight (W2) of the circular knitted fabric sample. Subsequently, the circular knitted fabric sample was dried at 105°C for 2 hours in a hot air dryer and the weight (W3) of the absolute dry sample was measured. The hygroscopicity MR1 (%) of the absolute dry circular knitted fabric sample left to stand for 24 hours in an atmosphere at a temperature of 20°C and a humidity of 65%RH was calculated by the formula given below from the weights W1 and W3 of the circular knitted fabric sample, and the hygroscopicity MR2 (%) of the absolute dry circular knitted fabric sample left to stand for 24 hours in an atmosphere at a temperature of 30°C and a humidity of 90%RH was calculated by the formula given below from the weights W2 and W3 of the circular knitted fabric sample, followed by calculating the difference in moisture absorbing rate (ΔMR) by the formula given below. Here, five measurements were taken from a sample, and their average was taken to represent the difference in moisture absorbing rate (ΔMR). A sample was judged to have hygroscopicity if having a ΔMR of 2.0% or more, and judged to be even better if having a ΔMR of 3.0% or more.

$$MR1(\%) = \{(W1-W3) / W3\} \times 100$$

$$MR2(\%) = \{(W2-W3) / W3\} \times 100$$

$$\text{Difference in moisture absorbing rate } (\Delta MR)\ (\%) = MR2 - MR1$$

(2) ΔMR of chips

A 3 g portion of the chips produced in an Example was frozen and crushed to prepare a sample for measurement. The sample was dried at 60°C for 30 minutes in a hot air dryer and left to stand for 24 hours in a thermo-hygrostat (LHU-123, manufactured by Espec Corp.) conditioned at a temperature of 20°C and a humidity of 65%RH, followed by measuring the weight (W1) of the sample, and then the sample was left to stand for 24 hours in a thermo-hygrostat conditioned at a temperature of 30°C and a humidity of 90%RH, followed by measuring the weight (W2) of the sample. Subsequently, the sample was dried at 105°C for 2 hours in a hot air dryer and the weight (W3) of the absolute dry sample was measured. The hygroscopicity MR1 (%) of the absolute dry sample left to stand for 24 hours in an atmosphere at a temperature of 20°C and a humidity of 65%RH was calculated by the formula given above from the weights W1 and W3, and the hygroscopicity MR2 (%) of the absolute sample left to stand for 24 hours in an atmosphere at a temperature of 30°C and a humidity of 90%RH was calculated by the formula given above from the weights W2 and W3, followed by calculating the difference in moisture absorbing rate (ΔMR) by the formula given above.

S. Breakage of sea component

A platinum-palladium alloy was deposited on the hot water-treated circular knitted fabric sample prepared above in section R and observed using a scanning electron microscope (SEM) (S-4000, manufactured by Hitachi, Ltd.) at a magnification of x1,000 while taking microphotographs of 10 areas selected randomly. The total number of broken portions in the sea component in the resulting 10 photographs was counted to represent the breakage (broken portions) of the sea component. A sample is judged to suffer little breakage if the number was 5 or less, and judged to be even better if it was 3 or less.

T. Level dyeing

The hot water-treated circular knitted fabric sample prepared above in section R was examined by five examiners having at least five years of experience in grade decision and decisions were made after consultation. A sample was ranked as S when it was found dyed highly uniformly with no dyeing specks detected, ranked as A when it was found dyed almost uniformly with almost no dyeing specks detected, ranked as B when it was found dyed little uniformly with slight dyeing specks detected, and ranked as C when it was found not dyed uniformly with clear dyeing specks detected. A specimen was judged to be acceptable when it was ranked as A or S.

U. Quality

The hot water-treated circular knitted fabric sample prepared above in section R was examined by five examiners having at least five years of experience in grade decision and decisions were made after consultation. A specimen was ranked as S when it was found free of fuzzing and very high in quality, ranked as A when it was found almost free of fuzzing and high in quality, ranked as B when it was found riddled with fuzzing and poor in quality, and ranked as C when it was found riddled with serious fuzzing and extremely poor in quality. A specimen was judged to be acceptable when it was ranked as A or S.

V. Improvement in stuffiness

The hot water-treated circular knitted fabric sample prepared above in section R was examined by five examiners having at least five years of experience in grade decision and decisions were made after consultation. A specimen was ranked as S when it was found completely free of stuffiness, ranked as A when it was found almost free of stuffiness, ranked as B when it was found to cause stuffiness, and ranked as C when it was found to cause very strong stuffiness. A specimen was judged to be acceptable when it was ranked as A or S.

W. Dry cleaning treatment

Test was performed by the J-1 method (perchloroethylene method) specified in JIS L1096 (Fabric test methods for woven fabric and knitted fabric), 8.39 (Dimensional change), 8.39.5 (Test method d). A cycle of perchloroethylene treatment at 20°C for 12 minutes and a subsequent drying treatment at 60°C for 20 minutes in a tumbler dryer was repeated 10 times.

X. Water washing treatment

Test was performed by the 103 method specified in JIS L0217 (1995) (Labeling symbols and labeling methods for handling fiber products). With a detergent (Attack, manufactured by Kao Corporation) and 2.3 ml/L of a bleaching agent (Hiter, manufactured by Kao Corporation) a washing treatment was done; this being repeatedly done 10 times; and subsequently drying treatment at 60°C for 30 minutes in a tumbler dryer was done, the aforementioned cycle being defined as a set. Ten sets were repeated. In the color tone test, which will be described later, an evaluation for yellowing suppression in water washing treatment was performed and a sample was ranked as A when the b* value was less than 10, ranked as B when the b* value was 10 or more and 15 or less, and ranked as C when the b* value was more than 15.

Y. Oxidative heat generation onset time

Samples prepared above in section R and subjected to dry cleaning treatment or water washing treatment were stacked to a depth of 25 mm in a cylindrical container, followed by setting a thermocouple at the center. Then, additional sample layers were stacked on them to completely fill the cylindrical without leaving gaps. The cylindrical container filled with sample layers was stored for 200 hours in a constant temperature dryer apparatus set at 150°C to determine the time at which oxidative heat generation began. A sample was ranked as S when oxidative heat generation did not occur within 150 hours, ranked as A when oxidative heat generation did not occur within 100 hours, ranked as B when oxidative heat generation started in 90 hours or more, and ranked as C when oxidative heat generation in less than 90 hours. A specimen was judged to be acceptable when it was ranked as S or A.

Z. Fastness to nitrogen oxide

Test was performed by the weak test (single cycle test) specified in JIS L0855 (2005) (Test method for color fastness to nitrogen oxides). The refined circular knitted fabric sample prepared in section R (1) was exposed to nitrogen oxide, post-treated with a urea-containing buffer solution, and then evaluated for discoloration of the sample, which was ranked according to the discoloration gray scale specified in JIS L0804 (2004) to evaluate its fastness to nitrogen oxide.

AA. Color tone

A sample was placed in front of a black calibration plate and examined with a spectrophotometer (CM-3700d, manufactured by Minolta) to determine the L* value and b* value. A sample was judged to be high in brightness when having an L* value of 80 or more, judged to be good in color tone when having a b* value of 15 or less, and judged to be even better when it is 10 or less.

AB. Spinnability evaluation

Spinnability was evaluated based on the pack replacement frequency when using filters with an opening of of 5 μm. A sample was ranked as S when the replacement period was 3 days or more, ranked as A when the replacement period was 1 day or more and less than 3 days, ranked as B when the replacement period was 12 hours or more and less than 24 hours, and ranked as C when the replacement period was less than 12 hours.

(Reference Example A-1 not falling under the scope of the claims)

A polybutylene terephthalate copolymerized with 50% by weight of a polyethylene glycol having a number average molecular weight of 8,300 g/mol (PEG 6000S, manufactured by Sanyo Chemical Industries Ltd.) was kneaded with 8.8% by weight of 2,2'-dimethyl-2,2'-(2,4,8,10-tetraoxaspiro [5,5] undecane-3,9-diyl) dipropane-1,1'-diyl=bis[3-(3-t-butyl-4-hydroxy-5-methylphenyl) propanoate] (Adeka Stab AO-80, manufactured by Adeka Corporation) and 2.9% by weight of tris-(2,4-t-butylphenyl) phosphite (IRGAFOS 168, manufactured by BASF) to provide a polymer to be used as island component, while a polyethylene terephthalate copolymerized with 1.5 mol% of sodium 5-sulfoisophthalate and 2.0% by weight of a polyethylene glycol having a number average molecular weight of 1,000 g/mol (PEG 1000, manufactured by Sanyo Chemical Industries Ltd.) was used as sea component. After being vacuum-dried separately at 150°C for 12 hours, the island component and the sea component, which accounted for 20% by weight and 80% by weight, respectively, were separately supplied to and melted in an extruder type composite spinning machine, fed to a spinning pack having a sea-island composite spinneret as illustrated in Fig. 2(a), maintained at a spinning temperature of 285°C, and discharged through the discharge hole at a discharge rate of 49 g/min to form a composite polymer stream, thereby producing spun threads. Here, the distribution plate disposed directly above the discharge plate had 6 distribution holes in each discharge hole for the island component, whereas distribution holes are disposed every 1 degree

circumferentially along the annular groove for the sea component denoted by 16 in Fig. 3. Each discharge introduction hole had a length of 3.7 mm; each squeezing hole had an angle of 60°; each discharge hole had a diameter of 0.18 mm; the ratio of the discharge hole length to the discharge hole diameter was 2.2; and the number of discharge holes was 144. The spun yarn threads were cooled in a cooling air flow with an air temperature of 20°C and a flow speed of 20 m/min, bundled while supplying oil from an oil feeder, taken off by a first godet roller rotating at 2,700 m/min, wound up by a winder via a second godet roller rotating at the same speed as the first godet roller to provide an unstretched yarn of 92 dtex-72 f. Then, using a drawing and false twisting machine (the twisting portion: a friction disk type, the heater portion: a contact type), the resulting unstretched yarn was drawn and false-twisted under the conditions of a heater temperature of 140°C and a ratio of 1.4 to provide a false twisted yarn of 66 dtex-72 f.

Table 2 shows evaluation results on the fiber characteristics and fabric characteristics of the resulting fiber. T/R was 0.112; the difference in moisture absorbing rate (ΔMR) after hot water treatment was 4.1%; and the phenolic group content was 48 mmol/kg. The fiber strength was 2.5 cN/dtex. In addition, the breakage of the sea component was suppressed to 2 breakage points. It suffered little decrease in hygroscopicity due to hot water treatment, and it was rated as acceptable in terms of level dyeing, quality, and stuffiness improvement. In addition, it was ranked as A in terms of oxidative heat generation after dry cleaning treatment. It was ranked as B in terms of suppression of yellowing after water washing treatment.

(Reference Example A-2 not falling under the scope of the claims)

Except that a polymer not kneaded with IRGAFOS 168 was used as island component, the same procedure as in Example A-1 was carried out to produce a false twist yarn.

Table 2 shows evaluation results on the fiber characteristics and fabric characteristics of the resulting fiber. T/R was 0.112; the difference in moisture absorbing rate (ΔMR) after hot water treatment was 4.1%; and the phenolic group content was 48 mmol/kg. The fiber strength was 2.6 cN/dtex. In addition, the breakage of the sea component was suppressed to 2 breakage points. It suffered little decrease in hygroscopicity due to hot water treatment, and it was rated as acceptable in terms of level dyeing, quality, and stuffiness improvement. In addition, it was ranked as A in terms of oxidative heat generation after dry cleaning treatment. It was ranked as B in terms of suppression of yellowing after water washing treatment.

(Reference Examples A-3 and 4 not falling under the scope of the claims)

Except that a polymer kneaded with 7.0% by weight of pentaerythritol-tetrakis(3-(3,5-di-t-butyl-4-hydroxyphenol)propionate) (Irganox 1010, manufactured by BASF) or 4.8% by weight of bis[3,3-bis(3-t-butyl-4-hydroxyphenyl)butyric acid] ethylene ester (Hostanox O3, manufactured by Clariant Chemicals) was used as island component instead of Adeka Stab AO-80 in Reference Example A-3 and Reference Example A-4, respectively, the same procedure as in Reference Example 2 was carried out to produce a false twist yarn.

Table 2 shows evaluation results on the fiber characteristics and fabric characteristics of the resulting fibers. For both yarns, T/R was 0.113; the difference in moisture absorbing rate (ΔMR) after the hot water treatment was 4.1%; and the phenolic group content was 48 mmol/kg. Both had a fiber strength of 2.5 cN/dtex. In addition, the breakage of the sea component was suppressed to 2 breakage points. Both yarns suffered little decrease in hygroscopicity due to hot water treatment, and they were rated as acceptable in terms of level dyeing, quality, and stuffiness improvement. In addition, they were ranked as B or higher in terms of oxidative heat generation after dry cleaning treatment. They were ranked as C in terms of suppression of yellowing after water washing treatment.

(Reference Examples A-5 to 8 not falling under the scope of the claims)

Except that the ratio (T/R) between the outermost layer thickness T and the fiber diameter R was changed as shown in Table 1, the same procedure as in Reference Example A-1 was carried out to prepare a false twisted yarn.

Table 2 shows evaluation results on the fiber characteristics and fabric characteristics of the resulting fibers. For all yarns, T/R was 0.05 to 0.25; the difference in moisture absorbing rate (ΔMR) after the hot water treatment was 2.0% to 10.0%; and the phenolic group content was 48 mmol/kg. All yarns had a fiber strength of 2.0 cN/dtex or more. In addition, the breakage of the sea component was suppressed to 5 or less breakage points. It suffered little decrease in hygroscopicity due to hot water treatment, and it was rated as acceptable in terms of level dyeing, quality, and stuffiness improvement. In addition, it was ranked as A in terms of oxidative heat generation after dry cleaning treatment. It was ranked as B in terms of suppression of yellowing after water washing treatment.

[Table 1]

| | | | Reference Example A-1 | Reference Example A-2 | Reference Example A-3 | Reference Example A-4 | Reference Example A-5 | Reference Example A-6 | Reference Example A-7 | Reference Example A-8 |
|---|---|---|---|---|---|---|---|---|---|---|
| production conditions | island component | polyester species | PBT | PBT | PBT | PBT | PBT | PBT | PBT | PBT |
| | | polyether species | PEG | PEG | PEG | PEG | PEG | PEG | PEG | PEG |
| | | number average molecular weight of polyether [g/mol] | 8,300 | 8,300 | 8,300 | 8,300 | 8,300 | 8,300 | 8,300 | 8,300 |
| | | copolymerization rate of polyether [wt%] | 50 | 50 | 50 | 50 | 50 | 50 | 50 | 50 |
| | | type of phenolic antioxidant | AO-80 | AO-80 | IR1010 | HOS-O3 | AO-80 | AO-80 | AO-80 | AO-80 |
| | | content of phenolic antioxidant [wt%] | 8.8 | 8.8 | 7.0 | 4.8 | 8.8 | 8.8 | 8.8 | 8.8 |
| | | type of phosphorus based antioxidant | IR168 | - | - | - | IR168 | IR168 | IR168 | IR168 |
| | | content of phosphorus based antioxidant [wt%] | 2.9 | - | - | - | 2.9 | 2.9 | 2.9 | 2.9 |
| | | type of sulfur based antioxidant | - | - | - | - | - | - | - | - |
| | | content of sulfur based antioxidant [wt%] | - | - | - | - | - | - | - | - |
| | sea/island composite ratio [weight ratio] | | 80/20 | 80/20 | 80/20 | 80/20 | 80/20 | 80/20 | 80/20 | 80/20 |

PBT: polybutylene terephthalate, PEG: polyethylene glycol, AO-80: Adeka Stab AO-80, IR1010: Irganox 1010, HOS-O3: Hostanox O3, IR168: Irgafos 168

[Table 2]

| | | Reference Example A-1 | Reference Example A-2 | Reference Example A-3 | Reference Example A-4 | Reference Example A-5 | Reference Example A-6 | Reference Example A-7 | Reference Example A-8 |
|---|---|---|---|---|---|---|---|---|---|
| composite fiber characteristics | island component | PBT copolymerized with PEG | PBT copolymerized with PEG | PBT copolymerized with PEG | PBT copolymerized with PEG | PBT copolymerized with PEG | PBT copolymerized with PEG | PBT copolymerized with PEG | PBT copolymerized with PEG |
| | structural formula of phenol group | 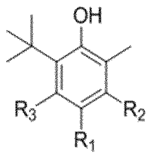 | 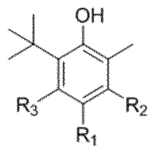 | 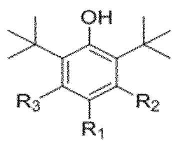 | 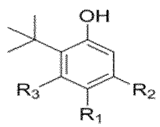 | 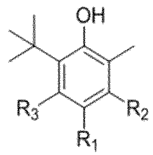 | 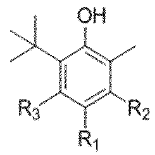 | 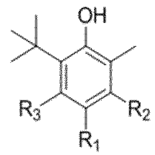 | 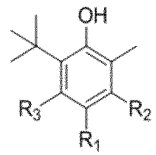 |
| | phenol group content [mmol/kg] | 48 | 48 | 48 | 48 | 48 | 48 | 48 | 48 |
| | phosphorus atom content [mmol/kg] | 9 | 0 | 0 | 0 | 9 | 9 | 9 | 9 |
| | fineness [dtex] | 66 | 66 | 66 | 66 | 66 | 66 | 66 | 66 |
| | strength [cN/dtex] | 2.5 | 2.6 | 2.5 | 2.5 | 2.4 | 2.4 | 2.6 | 2.6 |
| | elongation percentage [%] | 39 | 39 | 39 | 39 | 36 | 38 | 37 | 38 |
| | fiber diameter R [nm] | 9,184 | 9,163 | 9,172 | 9,172 | 9,158 | 9,057 | 9,155 | 9,199 |
| | outermost layer thickness T [nm] | 1,030 | 1,028 | 1,033 | 1,033 | 470 | 720 | 1,935 | 2,300 |
| | T/R | 0.112 | 0.112 | 0.113 | 0.113 | 0.051 | 0.079 | 0.211 | 0.250 |
| | difference in moisture absorbing rate after refining (ΔMR) [%] | 4.2 | 4.2 | 4.2 | 4.2 | 4.2 | 4.2 | 3.6 | 2.9 |
| | difference in moisture absorbing rate after hot water treatment (ΔMR) [%] | 4.1 | 4.1 | 4.1 | 4.1 | 3.7 | 4.0 | 3.5 | 2.9 |

(continued)

| | | | Reference Example A-1 | Reference Example A-2 | Reference Example A-3 | Reference Example A-4 | Reference Example A-5 | Reference Example A-6 | Reference Example A-7 | Reference Example A-8 |
|---|---|---|---|---|---|---|---|---|---|---|
| fabric characteristics | sea component breakage [no. of points] | | 2 | 2 | 2 | 2 | 5 | 3 | 1 | 0 |
| | level dyeing | | S | S | s | s | A | S | S | S |
| | quality | | S | S | S | S | A | S | S | S |
| | stuffiness improvement | | S | S | S | S | S | S | S | A |
| | resistance to oxidative heat generation | after dry cleaning treatment | A | A | A | B | A | A | A | A |
| | | after water washing treatment | A | C | C | C | A | A | A | A |
| | L* value | before treatment | 92 | 92 | 90 | 91 | 92 | 92 | 92 | 92 |
| | b* value | before treatment | 3.0 | 3.0 | 4.9 | 4.9 | 3.0 | 3.0 | 3.0 | 3.0 |
| | | after water washing | 14.0 | 14.0 | 44 | 31 | 13.5 | 14.5 | 14.0 | 14.5 |
| | yellowing suppression after water washing treatment | | B | B | C | C | B | B | B | B |

(Reference Examples A-9 to 12 not falling under the scope of the claims)

Except that the difference in moisture absorbing rate (ΔMR) after hot water treatment was changed by adjusting the number average molecular weight of the polyethylene glycol of the island component, the copolymerization rate, and the sea-island mixing ratio as shown in Table 3, the same procedure as in Reference Example A-1 was carried out to prepare a false twisted yarn.

Table 4 shows evaluation results on the fiber characteristics and fabric characteristics of the resulting fibers. For all yarns, T/R was 0.05 to 0.25; the difference in moisture absorbing rate (ΔMR) after the hot water treatment was 2.0% to 10.0%; and the phenolic group content was 48 mmol/kg. All yarns had a fiber strength of 2.0 cN/dtex or more. In addition, the breakage of the sea component was suppressed to 5 or less breakage points. It suffered little decrease in hygroscopicity due to hot water treatment, and it was rated as acceptable in terms of level dyeing, quality, and stuffiness improvement. In addition, it was ranked as A in terms of oxidative heat generation after dry cleaning treatment. It was ranked as B in terms of suppression of yellowing after water washing treatment.

(Reference Examples A-13 to 16 not falling under the scope of the claims)

Except that the phenolic group content was changed by adjusting the kneading ratio of the Adeka Stab AO-80 of the island component, the same procedure as in Reference Example A-1 was carried out to prepare a false twisted yarn.

Table 4 shows evaluation results on the fiber characteristics and fabric characteristics of the resulting fibers. For all yarns, T/R was 0.112; the difference in moisture absorbing rate (ΔMR) after the hot water treatment was 4.1%; and the phenolic group content was 16 to 160 mmol/kg. All yarns had a fiber strength of 2.0 cN/dtex or more. In addition, the breakage of the sea component was suppressed to 5 or less breakage points. They suffered little decrease in hygroscopicity due to hot water treatment, and they were rated as acceptable in terms of level dyeing, quality, and stuffiness improvement. In addition, they were ranked as B or higher in terms of oxidative heat generation onset time after dry cleaning treatment. They were ranked as B in terms of suppression of yellowing after water washing treatment.

[Table 3]

| | | | Reference Example A-9 | Reference Example A-10 | Reference Example A-11 | Reference Example A-12 | Reference Example A-13 | Reference Example A-14 | Reference Example A-15 | Reference Example A-16 |
|---|---|---|---|---|---|---|---|---|---|---|
| production conditions | island component | polyester species | PBT | PBT | PBT | PBT | PBT | PBT | PBT | PBT |
| | | polyether species | PEG | PEG | PEG | PEG | PEG | PEG | PEG | PEG |
| | | number average molecular weight of polyether [g/mol] | 8,300 | 8,300 | 10,000 | 20,000 | 8,300 | 8,300 | 8,300 | 8,300 |
| | | copolymerization rate of polyether [wt%] | 30 | 40 | 50 | 50 | 50 | 50 | 50 | 50 |
| | | type of phenolic antioxidant | AO-80 | AO-80 | AO-80 | AO-80 | AO-80 | AO-80 | AO-80 | AO-80 |
| | | content of phenolic antioxidant [wt%] | 8.8 | 8.8 | 5.9 | 5.9 | 3.0 | 3.7 | 28 | 30 |
| | | type of phosphorus based antioxidant | IR168 | IR168 | IR168 | IR168 | IR168 | IR168 | IR168 | IR168 |
| | | content of phosphorus based antioxidant [wt%] | 2.9 | 2.9 | 1.9 | 1.9 | 2.9 | 2.9 | 2.9 | 2.9 |
| | | type of sulfur based antioxidant | - | - | - | - | - | - | - | - |
| | | content of sulfur based antioxidant [wt%] | - | - | - | - | - | - | - | - |
| | sea/island composite ratio [weight ratio] | | 80/20 | 80/20 | 70/30 | 70/30 | 80/20 | 80/20 | 80/20 | 80/20 |

PBT: polybutylene terephthalate, PEG: polyethylene glycol, AO-80: Adeka Stab AO-80, IR168: Irgafos 168

[Table 4]

| | | Reference Example A-9 | Reference Example A-10 | Reference Example A-11 | Reference Example A-12 | Reference Example A-13 | Reference Example A-14 | Reference Example A-15 | Reference Example A-16 |
|---|---|---|---|---|---|---|---|---|---|
| composite fiber characteristics | island component | PBT copoly-merized with PEG | PBT copoly-merized with PEG | PBT copoly-merized with PEG | PBT copoly-merized with PEG | PBT copoly-merized with PEG | PBT copoly-merized with PEG | PBT copoly-merized with PEG | PBT copoly-merized with PEG |
| | structural formula of phenol group | 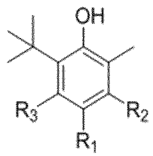 | 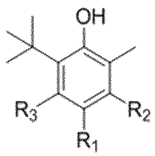 | 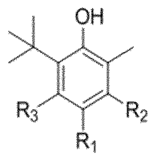 | 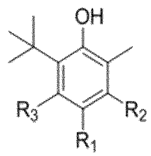 | 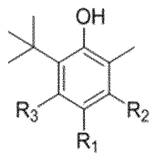 | 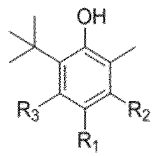 | 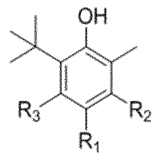 | 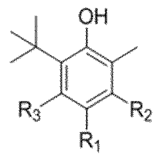 |
| | phenol group content [mmol/kg] | 48 | 48 | 48 | 48 | 16 | 20 | 150 | 160 |
| | phosphorus atom content [mmol/kg] | 9 | 9 | 9 | 9 | 9 | 9 | 9 | 9 |
| | fineness [dtex] | 66 | 66 | 66 | 66 | 66 | 66 | 66 | 66 |
| | strength [cN/dtex] | 2.9 | 2.9 | 2.3 | 2.3 | 2.5 | 2.5 | 2.2 | 2.1 |
| | elongation percentage [%] | 38 | 38 | 38 | 38 | 39 | 39 | 39 | 39 |
| | fiber diameter R [nm] | 9,176 | 9,186 | 9,821 | 9,821 | 9,184 | 9,184 | 9,184 | 9,184 |
| | outermost layer thickness T [nm] | 2.250 | 2,100 | 690 | 520 | 1,030 | 1,030 | 1,030 | 1,030 |
| | T/R | 0.245 | 0.229 | 0.070 | 0.053 | 0.112 | 0.112 | 0.112 | 0.112 |
| | difference in moisture absorbing rate after refining (ΔMR) [%] | 2.1 | 3.1 | 8.1 | 10.3 | 4.2 | 4.2 | 4.2 | 4.2 |
| | difference in moisture absorbing rate after hot water treatment (ΔMR) [%] | 2.0 | 3.0 | 8.0 | 10.0 | 4.1 | 4.1 | 4.1 | 4.1 |

(continued)

| | | | Reference Example A-9 | Reference Example A-10 | Reference Example A-11 | Reference Example A-12 | Reference Example A-13 | Reference Example A-14 | Reference Example A-15 | Reference Example A-16 |
|---|---|---|---|---|---|---|---|---|---|---|
| fabric characteristics | sea component breakage [number of points] | | 0 | 0 | 2 | 4 | 2 | 2 | 2 | 2 |
| | level dyeing | | S | S | S | A | S | S | S | S |
| | quality | | S | S | S | A | S | S | S | A |
| | stuffiness improvement | | A | S | S | S | S | S | S | S |
| | resistance to oxidative heat generation | after dry cleaning treatment | A | A | A | A | B | A | A | A |
| | | after water washing treatment | A | A | A | A | B | A | A | A |
| | L* value | before treatment | 92 | 92 | 92 | 92 | 94 | 93 | 91 | 90 |
| | b* value | before treatment | 2.7 | 2.8 | 3.7 | 3.8 | 2.4 | 4.1 | 4.1 | 4.6 |
| | | after water washing | 13.0 | 13.0 | 13.5 | 13.5 | 12.5 | 14.0 | 15.0 | 15.0 |
| | yellowing suppression after water washing treatment | | B | B | B | B | B | B | B | B |

(Reference Examples A-17 to 20 not falling under the scope of the claims)

Except that the phosphorus atom content was changed by adjusting the kneading ratio of IRGAFOS 168 of the island component as shown in Table 5, the same procedure as in Reference Example A-1 was carried out to prepare a false twisted yarn.

Table 6 shows evaluation results on the fiber characteristics and fabric characteristics of the resulting fibers. For all yarns, T/R was 0.112; the difference in moisture absorbing rate (ΔMR) after the hot water treatment was 4.1%; and the phenolic group content was 48 mmol/kg. All yarns had a fiber strength of 2.5 cN/dtex. In addition, the breakage of the sea component was suppressed to 2 breakage points. They suffered little decrease in hygroscopicity due to hot water treatment, and they were rated as acceptable in terms of level dyeing, quality, and stuffiness improvement. In addition, they were ranked as A in terms of oxidative heat generation after dry cleaning treatment. They were ranked as B in terms of suppression of yellowing after water washing treatment.

(Reference Examples A-21 not falling under the scope of the claims)

Except that a polymer kneaded with 8.8% by weight of tetrakis[methylene-3-(dodecylthio)propionate] methane (Adeka Stab AO-412S, manufactured by Adeka Corporation) in addition to Adeka Stab AO-80 and IRGAFOS 168 was used as island component, the same procedure as in Reference Example A-1 was carried out to produce a false twist yarn.

Table 6 shows evaluation results on the fiber characteristics and fabric characteristics of the resulting fibers. T/R was 0.112; the difference in moisture absorbing rate (ΔMR) after the hot water treatment was 4.1%; and the phenolic group content was 48 mmol/kg. The fiber strength was 2.5 cN/dtex. In addition, the breakage of the sea component was suppressed to 2 breakage points. It suffered little decrease in hygroscopicity due to hot water treatment, and it was rated as acceptable in terms of level dyeing, quality, and stuffiness improvement. In addition, it was ranked as A in terms of oxidative heat generation after dry cleaning treatment. It was ranked as B in terms of suppression of yellowing after water washing treatment.

[Table 5]

| | | | Reference Example A-17 | Reference Example A-18 | Reference Example A-19 | Reference Example A-20 | Reference Example A-21 |
|---|---|---|---|---|---|---|---|
| production conditions | island component | polyester species | PBT | PBT | PBT | PBT | PBT |
| | | polyether species | PEG | PEG | PEG | PEG | PEG |
| | | number average molecular weight of polyether [g/mol] | 8,300 | 8,300 | 8,300 | 8,300 | 8,300 |
| | | copolymerization rate of polyether [wt%] | 50 | 50 | 50 | 50 | 50 |
| | | type of phenolic antioxidant | AO-80 | AO-80 | AO-80 | AO-80 | AO-80 |
| | | content of phenolic antioxidant [wt%] | 8.8 | 8.8 | 8.8 | 8.8 | 8.8 |
| | | type of phosphorus based antioxidant | IR168 | IR168 | IR168 | IR168 | IR168 |
| | | content of phosphorus based antioxidant [wt%] | 1.0 | 2.0 | 8.1 | 9.8 | 2.9 |
| | | type of sulfur based antioxidant | - | - | - | - | AO-412S |
| | | content of sulfur based antioxidant [wt%] | - | - | - | - | 8.8 |
| | sea/island composite ratio [weight ratio] | | 80/20 | 80/20 | 80/20 | 80/20 | 80/20 |
| PBT: polybutylene terephthalate, PEG: polyethylene glycol, AO-80: Adeka Stab AO-80, IR168: Irgafos 168, AO-412S: Adeka Stab AO-412S | | | | | | | |

[Table 6]

| | | | Reference Example A-17 | Reference Example A-18 | Reference Example A-19 | Reference Example A-20 | Reference Example A-21 |
|---|---|---|---|---|---|---|---|
| composite fiber characteristics | island component | | PBT copolymerized with PEG | PBT copolymerized with PEG | PBT copolymerized with PEG | PBT copolymerized with PEG | PBT copolymerized with PEG |
| | structural formula of phenol group | | 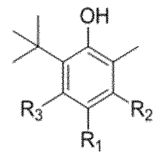 | 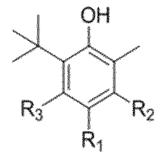 | 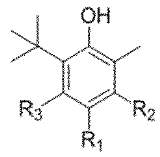 | 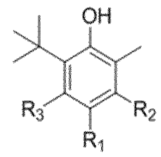 | 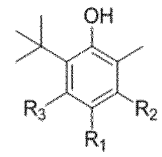 |
| | phenol group content [mmol/kg] | | 48 | 48 | 48 | 48 | 48 |
| | phosphorus atom content [mmol/kg] | | 3 | 6 | 25 | 30 | 9 |
| | fineness [dtex] | | 66 | 66 | 66 | 66 | 66 |
| | strength [cN/dtex] | | 2.5 | 2.5 | 2.5 | 2.5 | 2.5 |
| | elongation percentage [%] | | 39 | 39 | 39 | 39 | 39 |
| | fiber diameter R [nm] | | 9,184 | 9,184 | 9,184 | 9,184 | 9,184 |
| | outermost layer thickness T [nm] | | 1,030 | 1,030 | 1,030 | 1,030 | 1,030 |
| | T/R | | 0.112 | 0.112 | 0.112 | 0.112 | 0.112 |
| | difference in moisture absorbing rate after refining (ΔMR) [%] | | 4.2 | 4.2 | 4.2 | 4.2 | 4.2 |
| | difference in moisture absorbing rate after hot water treatment (ΔMR) [%] | | 4.1 | 4.1 | 4.1 | 4.1 | 4.1 |
| fabric characteristics | sea component breakage [number of points] | | 2 | 2 | 2 | 2 | 2 |
| | level dyeing | | S | S | S | S | S |
| | quality | | S | S | S | S | S |
| | stuffiness improvement | | S | S | S | S | S |
| | resistance to oxidative heat generation | after dry cleaning treatment | A | A | A | A | A |
| | | after water washing treatment | B | A | A | A | A |
| | L* value | before treatment | 93 | 93 | 92 | 91 | 62 |
| | b* value | before treatment | 2.4 | 2.4 | 8.7 | 10.9 | 3.0 |
| | | after water washing | 14.0 | 13.5 | 12.1 | 14.1 | 14.0 |

(continued)

| | | Reference Example A-17 | Reference Example A-18 | Reference Example A-19 | Reference Example A-20 | Reference Example A-21 |
|---|---|---|---|---|---|---|
| | yellowing suppression after water washing treatment | B | B | B | B | B |

(Comparative example A-1)

Except that a polymer not kneaded with Adeka Stab AO-80 and IRGAFOS 168 was used as island component, the same procedure as in Reference Example A-1 was carried out to produce a false twisted yarn.

Table 8 shows evaluation results on the fiber characteristics and fabric characteristics of the resulting fiber. It was ranked as C in terms of oxidative heat generation after dry cleaning treatment. It was ranked as A in terms of suppression of yellowing after water washing treatment.

(Comparative example A-2)

Except that a polymer not kneaded with Adeka Stab AO-80 was used as island component, the same procedure as in Reference Example A-1 was carried out to produce a false twisted yarn.

Table 8 shows evaluation results on the fiber characteristics and fabric characteristics of the resulting fiber. It was ranked as C in terms of oxidative heat generation after dry cleaning treatment. It was ranked as A in terms of suppression of yellowing after water washing treatment.

(Comparative example A -3)

Except that a conventionally known pipe type sea-island composite spinneret (6 islands per discharge hole) as specified in Japanese Unexamined Patent Publication (Kokai) No. 2007-100243 was used while adjusting the (T/R) ratio between the outermost layer thickness T and the fiber diameter R to 0.017, the same procedure as in Reference Example A-1 was carried out to prepare a false twisted yarn.

Table 8 shows evaluation results on the fiber characteristics and fabric characteristics of the resulting fiber. As a result of using a conventionally known pipe type sea-island composite spinneret, the fiber produced had an outermost layer having a decreased thickness and suffered an extremely large number of breakage points in the sea component caused by volume swelling of the hygroscopic polymer of the island component during hot water treatment, and a large decrease in hygroscopicity was seen after hot water treatment, resulting in hygroscopicity deterioration and stuffiness. In addition, a large number of dyeing specks and fuzzy portions were formed as a result of breakage of the sea component, leading to serious deterioration in level dyeing and quality. It was ranked as A in terms of oxidative heat generation after dry cleaning treatment. It was ranked as B in terms of suppression of yellowing after water washing treatment.

(Comparative example A-4)

Except that the ratio (T/R) between the outermost layer thickness T and the fiber diameter R was changed to 0.251, the same procedure as in Reference Example A-1 was carried out to prepare a false twisted yarn.

Table 8 shows evaluation results on the fiber characteristics and fabric characteristics of the resulting fiber. The T/R ratio was so large that the volume swelling of the hygroscopic polymer of the island component was suppressed, and as a result, the hygroscopicity was low both after the refining treatment and after the hot water treatment, resulting in stuffiness. It was ranked as A in terms of oxidative heat generation after dry cleaning treatment. It was ranked as B in terms of suppression of yellowing after water washing treatment.

(Comparative example A-5)

Except that the difference in moisture absorbing rate (ΔMR) after hot water treatment was changed by using an island component having a polyethylene glycol copolymerization rate of 5% by weight, the same procedure as in Reference Example A-1 was carried out to prepare a false twisted yarn.

Table 8 shows evaluation results on the fiber characteristics and fabric characteristics of the resulting fiber. The hygroscopicity was low both after the refining treatment and after the hot water treatment, resulting in stuffiness. It was ranked as A in terms of oxidative heat generation after dry cleaning treatment. It was ranked as B in terms of suppression of yellowing after water washing treatment.

(Comparative example A-6)

Except that the difference in moisture absorbing rate (ΔMR) after hot water treatment was changed by adjusting the number average molecular weight of the polyethylene glycol of the island component, the copolymerization rate, and the sea-island mixing ratio, the same procedure as in Reference Example A-1 was carried out to prepare a false twisted yarn.

Table 8 shows evaluation results on the fiber characteristics and fabric characteristics of the resulting fiber. The

resulting fiber suffered an extremely large number of breakage points in the sea component caused by volume swelling of the hygroscopic polymer of the island component, and a large decrease in hygroscopicity was seen after hot water treatment, resulting in hygroscopicity deterioration and stuffiness. In addition, a large number of dyeing specks (poor level dyeing portions) and fuzzy portions were formed as a result of breakage of the sea component, leading to serious deterioration in level dyeing and quality. It was ranked as A in terms of oxidative heat generation after dry cleaning treatment. It was ranked as B in terms of suppression of yellowing after water washing treatment.

(Comparative examples A-7 and 8)

Except that the phenolic group content was changed by adjusting the kneading ratio of the Adeka Stab AO-80 of the island component, the same procedure as in Reference Example A-1 was carried out to prepare a false twisted yarn.

Table 8 shows evaluation results on the fiber characteristics and fabric characteristics of the resulting fiber. In Comparative examples A-7, the phenolic group content was 14 mmol/kg and the fiber was ranked as C in terms of oxidative heat generation after dry cleaning treatment. It was ranked as B in terms of the b* value after water washing treatment. In Comparative examples A-8, the phenolic group content was 167 mmol/kg and the fiber had a fiber strength of as low as 1.4 cN/dtex and suffered many fuzzy portions and inferior quality. It was ranked as A in terms of oxidative heat generation after dry cleaning treatment. It was ranked as C in terms of suppression of yellowing after water washing treatment.

[Table 7]

| | | | Comparative example A-1 | Comparative example A-2 | Comparative example A-3 | Comparative example A-4 | Comparative example A-5 | Comparative example A-6 | Comparative example A-7 | Comparative example A-8 |
|---|---|---|---|---|---|---|---|---|---|---|
| production conditions | island component | polyester species | PBT | PBT | PBT | PBT | PBT | PBT | PBT | PBT |
| | | polyether species | PEG | PEG | PEG | PEG | PEG | PEG | PEG | PEG |
| | | number average molecular weight of polyether [g/mol] | 8,300 | 8,300 | 8,300 | 8,300 | 8,300 | 20,000 | 8,300 | 8,300 |
| | | copolymerization rate of polyether [wt%] | 50 | 50 | 50 | 50 | 5 | 55 | 50 | 50 |
| | | type of phenolic antioxidant | - | - | AO-80 | AO-80 | AO-80 | AO-80 | AO-80 | AO-80 |
| | | content of phenolic antioxidant [wt%] | - | - | 8.8 | 8.8 | 8.8 | 5.9 | 2.6 | 31 |
| | | type of phosphorus based antioxidant | - | IR168 | IR168 | IR168 | IR168 | IR168 | IR168 | IR168 |
| | | content of phosphorus based antioxidant [wt%] | - | 2.9 | 2.9 | 2.9 | 2.9 | 1.9 | 2.9 | 2.9 |
| | | type of sulfur based antioxidant | - | - | - | - | - | - | - | - |
| | | content of sulfur based antioxidant [wt%] | - | - | - | - | - | - | - | - |
| | sea/island composite ratio [weight ratio] | | 80/20 | 80/20 | 80/20 | 80/20 | 80/20 | 70/30 | 80/20 | 80/20 |

PBT: polybutylene terephthalate, PEG: polyethylene glycol, AO-80: Adeka Stab AO-80, IR168: Irgafos 168

[Table 8]

| | | Comparative example A-1 | Comparative example A-2 | Comparative example A-3 | Comparative example A-4 | Comparative example A-5 | Comparative example A-6 | Comparative example A-7 | Comparative example A-8 |
|---|---|---|---|---|---|---|---|---|---|
| composite fiber characteristics | island component | PBT copoly-merized with PEG | PBT copoly-merized with PEG | PBT copoly-merized with PEG | PBT copoly-merized with PEG | PBT copoly-merized with PEG | PBT copoly-merized with PEG | PBT copoly-merized with PEG | PBT copoly-merized with PEG |
| | structural formula of phenol group | - | - | 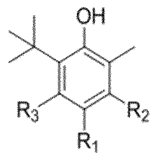 | 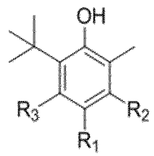 | 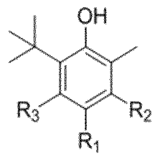 | 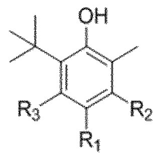 | 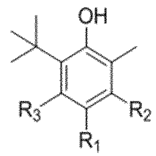 | 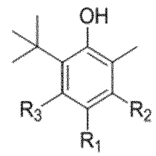 |
| | phenol group content [mmol/kg] | 0 | 0 | 48 | 48 | 48 | 48 | 14 | 167 |
| | phosphorus atom content [mmol/kg] | 0 | 9 | 9 | 9 | 9 | 9 | 9 | 9 |
| | fineness [dtex] | 66 | 66 | 66 | 66 | 66 | 66 | 66 | 66 |
| | strength [cN/dtex] | 2.0 | 2.1 | 2.5 | 2.5 | 3.7 | 2.1 | 2.5 | 2.0 |
| | elongation percentage [%] | 39 | 39 | 36 | 39 | 39 | 39 | 39 | 39 |
| | fiber diameter R [nm] | 9,184 | 9,163 | 9,212 | 9,325 | 9,184 | 9,184 | 9,184 | 9,184 |
| | outermost layer thickness T [nm] | 1,030 | 1,028 | 153 | 2,343 | 1,030 | 550 | 1,030 | 1,030 |
| | T/R | 0.112 | 0.112 | 0.017 | 0.251 | 0.112 | 0.060 | 0.112 | 0.112 |
| | difference in moisture absorbing rate after refining (ΔMR) [%] | 4.2 | 4.2 | 4.6 | 1.9 | 0.1 | 11.4 | 4.2 | 4.2 |
| | difference in moisture absorbing rate after hot water treatment (ΔMR) [%] | 4.1 | 4.1 | 1.4 | 1.8 | 0.1 | 10.2 | 4.1 | 4.1 |

(continued)

| | | | Comparative example A-1 | Comparative example A-2 | Comparative example A-3 | Comparative example A-4 | Comparative example A-5 | Comparative example A-6 | Comparative example A-7 | Comparative example A-8 |
|---|---|---|---|---|---|---|---|---|---|---|
| fabric characteristics | sea component breakage [number of points] | | 2 | 2 | 47 | 0 | 0 | 63 | 2 | 2 |
| | level dyeing | | S | S | C | S | S | C | S | S |
| | quality | | S | S | C | S | S | C | S | B |
| | stuffiness improvement | | S | S | C | B | C | S | S | S |
| | resistance to oxidative heat generation | after dry cleaning treatment | C | C | A | A | A | A | C | A |
| | | after water washing treatment | C | C | A | A | A | A | C | A |
| | L* value | before treatment | 92 | 92 | 90 | 91 | 91 | 91 | 93 | 89 |
| | b* value | before treatment | 1.2 | 2.7 | 3.0 | 3.0 | 3.0 | 3.0 | 2.3 | 5.1 |
| | | after water washing | 1.3 | 3.4 | 14.5 | 14.0 | 13.5 | 14.0 | 12.5 | 18.0 |
| | yellowing suppression after water washing treatment | | A | A | B | B | B | B | B | C |

[Reference example 1]

In an esterification reaction tank containing 100 kg of bis(hydroxyethyl)terephthalate and maintained at a temperature of 250°C, 82.5 kg of high-purity terephthalic acid (manufactured by Mitsui Chemicals, Inc.) and a 35.4 kg slurry of ethylene glycol (manufactured by Nippon Shokubai Co., Ltd.) were added in this order over 4 hours, and the esterification reaction was continued for 1 hour after the end of their addition, followed by transferring 101.5 kg of the resulting esterification product to a polycondensation tank.

To this esterification product, 25.3 g of trimethyl phosphate was added first, and after 10 minutes, 20.3 g of cobalt acetate tetrahydrate and 25.3 g of antimony trioxide were added. After 5 minutes, an ethylene glycol slurry of titanium oxide particles was added in such a manner that the titanium oxide particles accounted for 0.3% by weight relative to the polymer. After another five minutes, the pressure of the reaction system was reduced to start the reaction. While the internal temperature of the reaction vessel was gradually increased from 250°C to 290°C, the pressure was reduced to 40 Pa. The final temperature and final pressure were set to be reached in 60 minutes. As soon as a predetermined stirring torque was reached, the polycondensation reaction was stopped by supplying nitrogen gas to return the reaction system to normal pressure, and the polymer was discharged from the spinneret to form a strand, which was cooled in a water tank and cut to provide pellets of polyethylene terephthalate (PET). The resulting PET had an intrinsic viscosity of 0.65.

(Example B-1)

After heating 1.0 kg of BDO to 100°C, 250 g of a titanium catalyst, namely, tetra-n-butoxytitanate (TBT) (Tokyo Chemical Industry Co., Ltd.) was mixed to prepare a catalyst solution.

Then, 45.3 kg of terephthalic acid (TPA) (Tokyo Chemical Industry Co., Ltd.) as dicarboxylic acid component, 44.2 kg of butanediol (BDO) (Tokyo Chemical Industry Co., Ltd.) as diol component, and 135 g of the catalyst solution produced above as esterification catalyst were fed in an ES reaction tank equipped with a rectification column. After starting the esterification reaction at a temperature of 160°C under a reduced pressure of 93 kPa, the temperature was increased gradually, and finally the esterification reaction was continued for 270 minutes under the temperature condition of 235°C.

Then, 60.0 kg of a polyethylene glycol (PEG) having a number average molecular weight of 8,300 g/mol (PEG 6000S, manufactured by Sanyo Chemical Industries Ltd.) and 180 g of pentaerythritol-tetrakis(3-(3,5-di-t-butyl-4-hydroxyphenol) propionate) (Irganox 1010, manufactured by BASF), which was used as antioxidant, were fed in the polycondensation tank and the reaction product formed in the ES reaction tank was transferred when the temperature of the polymerization tank reached 180° C or higher. After the temperature of the polymerization tank reached 250°C, 300 g of a catalyst solution prepared as described above was added as polycondensation reaction catalyst, and polycondensation reaction was carried out under the conditions of a temperature of 250°C and a pressure of 100 Pa. As soon as a predetermined stirring torque was reached, the polycondensation reaction was stopped by supplying nitrogen gas to return the reaction system to normal pressure, and the polymer was discharged from the spinneret to form a strand, which was cooled in a water tank and cut to provide pellets of polybutylene terephthalate copolymerized with polyethylene glycol. No problems occurred during the discharging of the polymerized polymer. The resulting copolymer polyester had an intrinsic viscosity of 2.00.

The resulting polybutylene terephthalate copolymerized with polyethylene glycol was blended with 8.0% by weight of 2,2'-dimethyl-2,2'-(2,4,8,10-tetraoxaspiro [5,5] undecane-3,9-diyl) dipropane-1,1'-diyl=bis[3-(3-t-butyl-4-hydroxy-5-methylphenyl) propanoate] (Adeka Stab AO-80, manufactured by Adeka Corporation), used as phenol based antioxidant, and 2.9% by weight of 1,1'-biphenyl-4,4'-diyl-bis[phosphonous acid bis(2,4-di-t-butylphenyl) ester] (Hostanox P-EPQ, manufactured by Clariant Chemicals), fed to a vented twin screw extruder having one vent portion with a L/D ratio of 45 (L is the screw length and D is the screw radius), and melt-kneaded for 3 minutes under the conditions of a cylinder temperature of 250°C, a rotation speed of 200 rpm, and a pressure of 10 kPa to provide a polyester composition. Here, the polybutylene terephthalate copolymerized with polyethylene glycol was supplied from the bottom feeder.

The resulting copolymer polyester, which was used as sea component, and the polyester produced in Reference example 1, which was used as island component, were separately dried to a moisture content of 300 ppm or less, separately supplied to and melted in an extruder type composite spinning machine, where the island component and the sea component accounted for 80% by weight and 20% by weight, respectively, fed to a spinning pack having a sea-island composite spinneret (filter opening 5 $\mu$m), and maintained at a spinning temperature of 285°C to form an unstretched yarn of 92 dtex-72 f. In the pack replacement frequency evaluation, the yarn was ranked as A. Then, using a drawing and false twisting machine (the twisting portion: a friction disk type, the heater portion: a contact type), the resulting unstretched yarn was stretched and false-twisted under the conditions of a heater temperature of 140°C and a ratio of 1.4 to provide a sea-island type composite false twisted yarn of 66 dtex-72 f. There were no problems such as bleed-out during the drying preparation before spinning.

Polymer characteristics of the resulting copolymer polyester and the fiber characteristics and fabric characteristics of the fiber are given in Table 9 and Table 12. The fiber strength was 2.5 cN/dtex. The difference in moisture absorbing

rate ($\Delta$MR) after hot water treatment was 4.0%. It was ranked as A in terms of suppression of yellowing after water washing treatment and ranked as high as S in terms of oxidative heat generation after water washing treatment. It was ranked as Class 4-5 in the test for fastness to nitrogen oxide.

(Example B-2)

Except that unlike Example B-1, 7.0% by weight of AO-80 was added in the kneading step, the same procedure as in Example B-1 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate ($\Delta$MR) after hot water treatment was 4.1%. It was ranked as A in terms of suppression of yellowing after water washing treatment and ranked as high as S in terms of oxidative heat generation after water washing treatment. It was ranked as Class 4-5 in the test for fastness to nitrogen oxide.

(Example B-3)

Except that unlike Example B-1, 6.0% by weight of AO-80 was added in the kneading step, the same procedure as in Example B-1 was carried out.

No problems occurred during the discharging of the polymerized polymer and the resulting polymer had a fiber strength of 2.4 cN/dtex. In the pack replacement frequency evaluation, the yarn was ranked as A. The difference in moisture absorbing rate ($\Delta$MR) after hot water treatment was 4.1%. It was ranked as A in terms of suppression of yellowing after water washing treatment and ranked as high as S in terms of oxidative heat generation after water washing treatment. It was ranked as Class 4-5 in the test for fastness to nitrogen oxide.

(Example B-4)

Except that unlike Example B-1, 5.0% by weight of AO-80 was added in the kneading step, the same procedure as in Example B-1 was carried out.

No problems occurred during the discharging of the polymerized polymer and the resulting polymer had a fiber strength of 2.4 cN/dtex. In the pack replacement frequency evaluation, the yarn was ranked as A. The difference in moisture absorbing rate ($\Delta$MR) after hot water treatment was 4.0%. It was ranked as A in terms of suppression of yellowing after water washing treatment and ranked as high as A in terms of oxidative heat generation after water washing treatment. It was ranked as Class 4-5 in the test for fastness to nitrogen oxide.

(Example B-5)

Except that unlike Example B-1, 4.0% by weight of AO-80 was added in the kneading step, the same procedure as in Example B-1 was carried out.

No problems occurred during the discharging of the polymerized polymer and the resulting polymer had a fiber strength of 2.6 cN/dtex. In the pack replacement frequency evaluation, the yarn was ranked as A. The difference in moisture absorbing rate ($\Delta$MR) after hot water treatment was 4.0%. It was ranked as A in terms of suppression of yellowing after water washing treatment and ranked as B in terms of oxidative heat generation after water washing treatment. It was ranked as Class 4-5 in the test for fastness to nitrogen oxide.

(Example B-6)

Except that unlike Example B-1, 3.0% by weight of AO-80 was added in the kneading step, the same procedure as in Example B-1 was carried out.

No problems occurred during the discharging of the polymerized polymer and the resulting polymer had a fiber strength was 2.6 cN/dtex. In the pack replacement frequency evaluation, the yarn was ranked as A. The difference in moisture absorbing rate ($\Delta$MR) after hot water treatment was 3.9%. It was ranked as A in terms of suppression of yellowing after water washing treatment and ranked as B in terms of oxidative heat generation after water washing treatment. It was ranked as Class 4-5 in the test for fastness to nitrogen oxide.

(Example B-7)

Except that unlike Example B-1, 2.0% by weight of AO-80 was added in the kneading step, the same procedure as in Example B-1 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 4.0%. It was ranked as A in terms of suppression of yellowing after water washing treatment and ranked as C in terms of oxidative heat generation after water washing treatment. It was ranked as Class 4-5 in the test for fastness to nitrogen oxide.

(Example B-8)

Except that unlike Example B-1, 1.0% by weight of AO-80 was added in the kneading step, the same procedure as in Example B-1 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 4.2%. It was ranked as A in terms of suppression of yellowing after water washing treatment and ranked as C in terms of oxidative heat generation after water washing treatment. It was ranked as Class 4-5 in the test for fastness to nitrogen oxide.

(Example B-9)

Except that unlike Example B-1, 0.5% by weight of AO-80 was added in the kneading step, the same procedure as in Example B-1 was carried out.

No problems occurred during the discharging of the polymerized polymer and the resulting polymer had a fiber strength was 2.5 cN/dtex. In the pack replacement frequency evaluation, the yarn was ranked as A. The difference in moisture absorbing rate (ΔMR) after hot water treatment was 4.2%. It was ranked as A in terms of suppression of yellowing after water washing treatment and ranked as C in terms of oxidative heat generation after water washing treatment. It was ranked as Class 4-5 in the test for fastness to nitrogen oxide.

(Example B-10)

Except that unlike Example B-3, 3.6% by weight of P-EPQ was added in the kneading step, the same procedure as in Example B-3 was carried out.

No problems occurred during the discharging of the polymerized polymer and the resulting polymer had a fiber strength of 2.3 cN/dtex. In the pack replacement frequency evaluation, the yarn was ranked as A. The difference in moisture absorbing rate (ΔMR) after hot water treatment was 4.0%. It was ranked as A in terms of suppression of yellowing after water washing treatment and ranked as S in terms of oxidative heat generation after water washing treatment. It was ranked as Class 4-5 in the test for fastness to nitrogen oxide.

(Example B-11)

Except that unlike Example B-3, 2.2% by weight of P-EPQ was added in the kneading step, the same procedure as in Example B-3 was carried out.

No problems occurred during the discharging of the polymerized polymer and the resulting polymer had a fiber strength of 2.6 cN/dtex. In the pack replacement frequency evaluation, the yarn was ranked as A. The difference in moisture absorbing rate (ΔMR) after hot water treatment was 3.9%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-12)

Except that unlike Example B-3, 1.4% by weight of P-EPQ was added in the kneading step, the same procedure as in Example B-3 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 4.0%. It was ranked as B in terms of suppression of yellowing after water washing treatment and ranked as B in terms of oxidative heat generation after water washing treatment. It was ranked as Class 4-5 in the test for fastness to nitrogen oxide.

(Example B-13)

Except that unlike Example B-12, 54.3 kg of TPA, 53.0 kg of BDO, and 162 g of the ES catalyst solution were used in performing the esterification reaction and that 48.0 kg of PEG was used in performing the polycondensation reaction, the same procedure as in Example B-12 was carried out.

No problems occurred during the discharging of the polymerized polymer and the resulting polymer had a fiber strength of 2.6 cN/dtex. In the pack replacement frequency evaluation, the yarn was ranked as A. The difference in moisture absorbing rate (ΔMR) after hot water treatment was 3.1%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-14)

Except that unlike Example B-3, tris(2,4-t-butylphenyl)phosphite (IRGAFOS 168, manufactured by BASF) was added as phosphorus based antioxidant in the kneading step, the same procedure as in Example B-3 was carried out.

No problems occurred during the discharging of the polymerized polymer, but bleed-out associated with the phosphorus based antioxidant occurred in the chip drying step prior to spinning, and the resulting polymer had a fiber strength of 2.4 cN/dtex. In the pack replacement frequency evaluation, the yarn was ranked as A. The difference in moisture absorbing rate (ΔMR) after hot water treatment was 4.0%. It was ranked as B in terms of suppression of yellowing after water washing treatment and ranked as A in terms of oxidative heat generation after water washing treatment. It was ranked as Class 4-5 in the test for fastness to nitrogen oxide.

(Example B-15)

Except that unlike Example B-3, tetra(C12-to-C15 alkyl)-4,4'-isopropylidene diphenyl diphosphite (JA-805, manufactured by Johoku Chemical Co., Ltd,) was added as phosphorus based antioxidant in the kneading step and that it accounted for 2.6% by weight, the same procedure as in Example B-3 was carried out.

No problems occurred during the discharging of the polymerized polymer and the resulting polymer had a fiber strength of 2.6 cN/dtex. In the pack replacement frequency evaluation, the yarn was ranked as A. The difference in moisture absorbing rate (ΔMR) after hot water treatment was 4.1%. It was ranked as C in terms of suppression of yellowing after water washing treatment and ranked as A in terms of oxidative heat generation after water washing treatment. It was ranked as Class 4-5 in the test for fastness to nitrogen oxide.

(Example B-16)

Except that unlike Example B-3, triphenyl phosphite (JP-360, manufactured by Johoku Chemical Co., Ltd,) was added as phosphorus based antioxidant in the kneading step and that it accounted for 1.4% by weight, the same procedure as in Example B-3 was carried out.

No problems occurred during the discharging of the polymerized polymer, but bleed-out associated with the phosphorus based antioxidant occurred in the chip drying step prior to spinning, and the resulting polymer had a fiber strength of 2.4 cN/dtex. In the pack replacement frequency evaluation, the yarn was ranked as A. The difference in moisture absorbing rate (ΔMR) after hot water treatment was 4.0%. It was ranked as C in terms of suppression of yellowing after water washing treatment and ranked as B in terms of oxidative heat generation after water washing treatment. It was ranked as Class 4-5 in the test for fastness to nitrogen oxide.

(Example B-17)

Except that unlike Example B-3, 3,9-bis(2,6-t-butyl-4-methylphenoxy) -2,4,8,10-tetraoxa-3,9-diphosphaspiro [5,5-undecane] (Adeka Stab PEP-36, manufactured by Adeka Corporation) was added as phosphorus based antioxidant in the kneading step and that it accounted for 1.4% by weight, the same procedure as in Example B-3 was carried out.

No problems occurred during the discharging of the polymerized polymer, but bleed-out associated with the phosphorus based antioxidant occurred in the chip drying step prior to spinning, and the resulting polymer had a fiber strength of 2.5 cN/dtex. In the pack replacement frequency evaluation, the yarn was ranked as A. The difference in moisture absorbing rate (ΔMR) after hot water treatment was 4.0%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-18)

Except that unlike Example B-3, bis[3-(3-t-butyl-4-hydroxy-5-methylphenyl) propionic acid] [ethylene-bis(oxyethylene)] ester (Irganox 245, manufactured by BASF) was added as phenol based antioxidant in the kneading step, that it accounted for 4.8% by weight, and that 2.2% by weight of a phosphorus based antioxidant was added, the same procedure as in Example B-3 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 4.1%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-19)

Except that unlike Example B-3, 1,3,5-tris-[[4-(1,1-dimethylethyl) -3-hydroxy-2,6-dimethylphenyl] methyl] -1,3,5-triazine-2,4,6 (1H,3H,5H)-trione (THANOX 1790, manufactured by Rianinlon Corporation) was added as phenol based antioxidant in the kneading step, that it accounted for 3.8% by weight, and that 2.2% by weight of a phosphorus based antioxidant was added, the same procedure as in Example B-3 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 4.1%. It was ranked as A in terms of suppression of yellowing after water washing treatment and ranked as B in terms of oxidative heat generation after water washing treatment. It was ranked as Class 4-5 in the test for fastness to nitrogen oxide.

(Example B-20)

In an esterification reaction tank containing 100 kg of bis(hydroxyethyl)terephthalate and maintained at a temperature of 250°C, 51.9 kg of high-purity terephthalic acid (manufactured by Mitsui Chemicals, Inc.) and a 23.3 kg slurry of ethylene glycol (manufactured by Nippon Shokubai Co., Ltd.) were added in this order over 4 hours, and the esterification reaction was continued for 1 hour after the end of their addition.

Then, 60.0 kg of polyethylene glycol (PEG) having a number average molecular weight of 8,300 g/mol (PEG 6000S, manufactured by Sanyo Chemical Industries Ltd.) and 180 g of pentaerythritol-tetrakis(3-(3,5-di-t-butyl-4-hydroxyphenol)propionate (Irganox 1010, manufactured by BASF), used as antioxidant, were fed in the polymerization tank, and 63.9 kg of the reaction product formed in the ES reaction tank was transferred to the polycondensation tank when the temperature of the polymerization tank reached 180° C or higher. After the temperature of the polymerization tank reached 250°C, 30.0 g of trimethyl phosphate was added as polycondensation reaction catalyst, and after 10 minutes, 24.0 g of cobalt acetate tetrahydrate and 30.0 g of antimony trioxide were added. After 5 minutes, an ethylene glycol slurry of titanium oxide particles was added in such a manner that the titanium oxide particles accounted for 0.3% by weight relative to the polymer. After another five minutes, the pressure of the reaction system was reduced to start the reaction. While the internal temperature of the reaction vessel was gradually increased from 250°C to 290°C, the pressure was reduced to 40 Pa. The final temperature and final pressure were set to be reached in 60 minutes. As soon as the predetermined stirring torque was reached, the polycondensation reaction was stopped by supplying nitrogen gas to return the reaction system to normal pressure, and the reaction product was extruded through the nozzle to form a strand, cooled in a water tank, and cut to provide pellets of polyethylene terephthalate copolymerized with polyethylene glycol. Many miscuts occurred during the discharging of the polymerized polymer. The resulting copolymer polyester had an intrinsic viscosity of 1.15.

Except that unlike Example B-11, the cylinder temperature in the kneading step was 280°C, the same kneading and spinning procedure as in Example B-11 was carried out.

The resulting polymer had a fiber strength of 3.5 cN/dtex. In the pack replacement frequency evaluation, the yarn was ranked as A. The difference in moisture absorbing rate (ΔMR) after hot water treatment was 4.0%. It was ranked as A in terms of suppression of yellowing after water washing treatment and ranked as high as A in terms of oxidative heat generation after water washing treatment. It was ranked as Class 4-5 in the test for fastness to nitrogen oxide.

(Example B-21)

Except that unlike Example B-12, 76.9 kg of TPA, 75.1 kg of BDO, and 230 g of the ES catalyst solution were used in performing the esterification reaction and that 18.0 kg of a polyethylene glycol (PEG) having a number average molecular weight of 10,000 g/mol (PEG 10000, manufactured by Sanyo Chemical Industries Ltd.) was used in performing the polycondensation reaction, the same procedure as in Example B-12 was carried out.

The discharged gut was not uniform in thickness during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 0.7%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-22)

Except that unlike Example B-21, a polyethylene glycol (PEG) having a number average molecular weight of 20,000 g/mol (PEG 20000, manufactured by Sanyo Chemical Industries Ltd.) was used in performing the polycondensation reaction, the same procedure as in Example B-21 was carried out.
The discharged gut was not uniform in thickness during the discharging of the polymerized polymer and the resulting polymer had a fiber strength of 2.3 cN/dtex. In the pack replacement frequency evaluation, the yarn was ranked as A. The difference in moisture absorbing rate (ΔMR) after hot water treatment was 0.8%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-23)

Except that unlike Example B-11, the esterification product formed was transferred when the temperature of the polymerization tank was 210°C, the same procedure as in Example B-11 was carried out.
The polymerization time was 185 minutes, suggesting that the polymerization time tended to lengthen. The difference in moisture absorbing rate (ΔMR) of the chips was 20.0% and the melt viscosity of the chips was 950 poise. The resulting polymer had a fiber strength of 2.5 cN/dtex. In the pack replacement frequency evaluation, the yarn was ranked as A. The difference in moisture absorbing rate (ΔMR) after hot water treatment was 3.7%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-24)

Except that unlike Example B-11, the esterification product formed was transferred when the temperature of the polymerization tank was 200°C, the same procedure as in Example B-11 was carried out.
The polymerization time was 180 minutes, suggesting that the polymerization time tended to lengthen. The difference in moisture absorbing rate (ΔMR) of the chips was 20.5% and the melt viscosity of the chips was 950 poise. The resulting polymer had a fiber strength of 2.5 cN/dtex. In the pack replacement frequency evaluation, the yarn was ranked as A. The difference in moisture absorbing rate (ΔMR) after hot water treatment was 3.8%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-25)

Except that unlike Example B-24, PEG was melted in an air atmosphere having a moisture content of 0.01%, the same procedure as in Example B-24 was carried out.
The polymerization time was 170 minutes. The difference in moisture absorbing rate (ΔMR) of the chips was 22.0% and the melt viscosity of the chips was 1000 poise. The resulting polymer had a fiber strength of 2.6 cN/dtex. In the pack replacement frequency evaluation, the yarn was ranked as A. The difference in moisture absorbing rate (ΔMR) after hot water treatment was 4.0%. It was ranked as A in terms of suppression of yellowing after water washing treatment and ranked as A in terms of oxidative heat generation after water washing treatment. It was ranked as Class 4-5 in the test for fastness to nitrogen oxide.

(Example B-26)

Except that unlike Example B-24, PEG was melted in a nitrogen atmosphere having a moisture content of 0.01%, the same procedure as in Example B-24 was carried out.
The polymerization time was 170 minutes. The difference in moisture absorbing rate (ΔMR) of the chips was 22.5% and the melt viscosity of the chips was 1,000 poise. The resulting polymer had a fiber strength of 2.6 cN/dtex. In the pack replacement frequency evaluation, the yarn was ranked as A. The difference in moisture absorbing rate (ΔMR) after hot water treatment was 4.0%. It was ranked as A in terms of suppression of yellowing after water washing treatment and

ranked as A in terms of oxidative heat generation after water washing treatment. It was ranked as Class 4-5 in the test for fastness to nitrogen oxide.

(B-27)

Except that unlike Example 26, 300 g of pentaerythritol-tetrakis(3-(3,5-di-t-butyl-4-hydroxyphenol) propionate) (Irganox 1010, manufactured by BASF) was added as antioxidant in the polymerization tank, the same procedure as in Example 26 was carried out.

No problems occurred during the discharging of the polymerized polymer and the fiber strength was 2.6 cN/dtex. In the pack replacement frequency evaluation, the yarn was ranked as A. The difference in moisture absorbing rate (ΔMR) after hot water treatment was 3.9%. It was ranked as A in terms of suppression of yellowing after water washing treatment and ranked as A in terms of oxidative heat generation after water washing treatment. It was ranked as Class 4-5 in the test for fastness to nitrogen oxide.

(B-28)

Except that unlike Example 26, 420 g of pentaerythritol-tetrakis(3-(3,5-di-t-butyl-4-hydroxyphenol) propionate) (Irganox 1010, manufactured by BASF) was added as antioxidant in the polymerization tank, the same procedure as in Example 26 was carried out.

No problems occurred during the discharging of the polymerized polymer and the fiber strength was 2.6 cN/dtex. In the pack replacement frequency evaluation, the yarn was ranked as S. The difference in moisture absorbing rate (ΔMR) after hot water treatment was 4.1%. It was ranked as A in terms of suppression of yellowing after water washing treatment and ranked as A in terms of oxidative heat generation after water washing treatment. It was ranked as Class 4-5 in the test for fastness to nitrogen oxide.

(B-29)

Except that unlike Example 26, 600 g of pentaerythritol-tetrakis(3-(3,5-di-t-butyl-4-hydroxyphenol) propionate) (Irganox 1010, manufactured by BASF) was added as antioxidant in the polymerization tank, the same procedure as in Example 26 was carried out.

No problems occurred during the discharging of the polymerized polymer and the fiber strength was 2.5 cN/dtex. In the pack replacement frequency evaluation, the yarn was ranked as S. The difference in moisture absorbing rate (ΔMR) after hot water treatment was 4.0%. It was ranked as A in terms of suppression of yellowing after water washing treatment and ranked as A in terms of oxidative heat generation after water washing treatment. It was ranked as Class 4 in the test for fastness to nitrogen oxide.

(B-30)

Except that unlike Example 26, 960 g of pentaerythritol-tetrakis(3-(3,5-di-t-butyl-4-hydroxyphenol) propionate) (Irganox 1010, manufactured by BASF) was added as antioxidant in the polymerization tank, the same procedure as in Example 26 was carried out.

No problems occurred during the discharging of the polymerized polymer and the fiber strength was 2.6 cN/dtex. In the pack replacement frequency evaluation, the yarn was ranked as S. The difference in moisture absorbing rate (ΔMR) after hot water treatment was 4.0%. It was ranked as A in terms of suppression of yellowing after water washing treatment and ranked as A in terms of oxidative heat generation after water washing treatment. It was ranked as Class 3 in the test for fastness to nitrogen oxide.

(B-31)

Except that unlike Example 26, 62.0 kg of butanediol (BDO) (Tokyo Chemical Industry Co., Ltd.) was added as diol component, the same procedure as in Example 26 was carried out.

No problems occurred during the discharging of the polymerized polymer and the fiber strength was 2.5 cN/dtex. In the pack replacement frequency evaluation, the yarn was ranked as B. The difference in moisture absorbing rate (ΔMR) after hot water treatment was 4.0%. It was ranked as A in terms of suppression of yellowing after water washing treatment and ranked as A in terms of oxidative heat generation after water washing treatment. It was ranked as Class 4-5 in the test for fastness to nitrogen oxide.

(B-32)

Except that unlike Example 26, 40.0 kg of butanediol (BDO) (Tokyo Chemical Industry Co., Ltd.) was added as diol component, the same procedure as in Example 26 was carried out.

No problems occurred during the discharging of the polymerized polymer and the fiber strength was 2.6 cN/dtex. In the pack replacement frequency evaluation, the yarn was ranked as S. The difference in moisture absorbing rate (ΔMR) after hot water treatment was 4.1%. It was ranked as A in terms of suppression of yellowing after water washing treatment and ranked as A in terms of oxidative heat generation after water washing treatment. It was ranked as Class 4-5 in the test for fastness to nitrogen oxide.

(Comparative example B-1)

Except that unlike Example B-1, no phenol based antioxidant and no phosphorus based antioxidant were added

in the kneading step, the same procedure as in Example B-1 was carried out.

No problems occurred during the discharging of the polymerized polymer and the resulting polymer had a fiber strength was 2.0 cN/dtex. In the pack replacement frequency evaluation, the yarn was ranked as A. The difference in moisture absorbing rate (ΔMR) after hot water treatment was 4.1%. It was ranked as A in terms of suppression of yellowing after water washing treatment and ranked as C in terms of oxidative heat generation after water washing treatment. It was ranked as Class 4-5 in the test for fastness to nitrogen oxide.

(Comparative example B-2)

Except that unlike Example B-12, 63.4 kg of TPA, 61.9 kg of BDO, and 189 g of the ES catalyst solution were used in performing the esterification reaction, that 36.0 kg of PEG was used in performing the polycondensation reaction, and that 0.7% by weight of P-EPQ was added in the kneading step, the same procedure as in Example B-12 was carried out.

No problems occurred during the discharging of the polymerized polymer and the resulting polymer had a fiber strength of 2.6 cN/dtex. In the pack replacement frequency evaluation, the yarn was ranked as A. The difference in moisture absorbing rate (ΔMR) after hot water treatment was 1.5%. It was ranked as A in terms of suppression of yellowing after water washing treatment and ranked as A in terms of oxidative heat generation after water washing treatment. It was ranked as Class 4-5 in the test for fastness to nitrogen oxide.

(Comparative example B-3)

Except that unlike Example B-12, 72.4 kg of TPA, 70.7 kg of BDO, and 216 g of the ES catalyst solution were used in performing the esterification reaction, that 24.0 kg of PEG was used in performing the polycondensation reaction, and that 0.7% by weight of P-EPQ was added in the kneading step, the same procedure as in Example B-12 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 0.9%. It was ranked as A in terms of suppression of yellowing after water washing treatment and ranked as A in terms of oxidative heat generation after water washing treatment. It was ranked as Class 4-5 in the test for fastness to nitrogen oxide.

(Comparative example B-4)

Except that unlike Example B-12, 81.5 kg of TPA, 79.5 kg of BDO, and 243 g of the ES catalyst solution were used in performing the esterification reaction, that 12.0 kg of PEG was used in performing the polycondensation reaction, and that 0.7% by weight of P-EPQ was added in the kneading step, the same procedure as in Example B-12 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 0.5%. It was ranked as A in terms of suppression of yellowing after water washing treatment and ranked as A in terms of oxidative heat generation after water washing treatment. It was ranked as Class 4-5 in the test for fastness to nitrogen oxide.

(Comparative example B-5)

Except that unlike Example B-1, 10.0% by weight of a phenol based antioxidant was added in the kneading step and that 0.7% by weight of a phosphorus based antioxidant was added, the same procedure as in Example B-1 was carried out.

No problems occurred during the discharging of the polymerized polymer and the resulting polymer had a fiber strength of 2.1 cN/dtex. In the pack replacement frequency evaluation, the yarn was ranked as A. The difference in moisture absorbing rate (ΔMR) after hot water treatment was 4.0%. It was ranked as C in terms of suppression of yellowing after water washing treatment and ranked as B in terms of oxidative heat generation after water washing treatment. It was ranked as Class 4-5 in the test for fastness to nitrogen oxide.

(Comparative example B-6)

Except that unlike Comparative example B-5, 6.0% by weight of a phenol based antioxidant was added in the kneading step, the same procedure as Comparative example B-5 was carried out.

No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 4.0%. It was ranked as C in terms of suppression of yellowing

after water washing treatment and ranked as C in terms of oxidative heat generation after water washing treatment. It was ranked as Class 4-5 in the test for fastness to nitrogen oxide.

(Comparative example B-7)

Except that unlike Example B-13, 0.7% by weight of a phosphorus based antioxidant was added in the kneading step, the same procedure as Example B-13 was carried out.
No problems occurred during the discharging of the polymerized polymer and the resulting polymer had a fiber strength of 2.5 cN/dtex. In the pack replacement frequency evaluation, the yarn was ranked as A. The difference in moisture absorbing rate (ΔMR) after hot water treatment was 3.0%. It was ranked as C in terms of suppression of yellowing after water washing treatment and ranked as C in terms of oxidative heat generation after water washing treatment. It was ranked as Class 4-5 in the test for fastness to nitrogen oxide.

(Comparative example B-8)

Except that unlike Example B-8, 4.2% by weight of a phosphorus based antioxidant was added in the kneading step, the same procedure as Example B-8 was carried out.
No problems occurred during the discharging of the polymerized polymer and the resulting polymer had a fiber strength of 2.2 cN/dtex. In the pack replacement frequency evaluation, the yarn was ranked as A. The difference in moisture absorbing rate (ΔMR) after hot water treatment was 3.9%. It was ranked as A in terms of suppression of yellowing after water washing treatment and ranked as C in terms of oxidative heat generation after water washing treatment. It was ranked as Class 4-5 in the test for fastness to nitrogen oxide.

(Comparative example B-9)

Except that unlike Example B-12, a polyethylene glycol (PEG) having a number average molecular weight of 3,400 g/mol (PEG 4000, manufactured by Sanyo Chemical Industries Ltd.) was used in performing the polycondensation reaction and that 0.7% by weight of P-EPQ was added in the kneading step, the same procedure as in Example B-12 was carried out.
Frequent miscutting occurred during the discharging of the polymerized polymer and the resulting polymer had a fiber strength of 2.0 cN/dtex. In the pack replacement frequency evaluation, the yarn was ranked as A. The difference in moisture absorbing rate (ΔMR) after hot water treatment was 4.0%. It was ranked as A in terms of suppression of yellowing after water washing treatment and ranked as A in terms of oxidative heat generation after water washing treatment. It was ranked as Class 4-5 in the test for fastness to nitrogen oxide.

(Comparative example B-10)

Except that unlike Example B-11, pentaerythritol-tetrakis[3-(3,5-di-t-butyl-4-hydroxyphenol)propionate](Irganox 1010, manufactured by BASF) was added as phenol based antioxidant in the kneading step and that its amount was 4.8% by weight, the same procedure as in Example B-11 was carried out.
No problems occurred during the discharging of the polymerized polymer and the resulting polymer had a fiber strength of 2.6 cN/dtex. In the pack replacement frequency evaluation, the yarn was ranked as A. The difference in moisture absorbing rate (ΔMR) after hot water treatment was 4.0%. It was ranked as C in terms of suppression of yellowing after water washing treatment and ranked as C in terms of oxidative heat generation after water washing treatment. It was ranked as Class 4-5 in the test for fastness to nitrogen oxide.

(Comparative example B-11)

Except that unlike Comparative example B-10, bis[3,3-bis(3-t-butyl-4-hydroxyphenyl)butyric acid] ethylene ester (Hostanox 03, manufactured by Clariant Chemicals) was added as phenol based antioxidant in the kneading step and that its amount was 3.2% by weight, the same procedure as in Comparative example B-10 was carried out.
No problems occurred during the discharging of the polymerized polymer and the resulting polymer had a fiber strength of 2.1 cN/dtex. In the pack replacement frequency evaluation, the yarn was ranked as A. The difference in moisture absorbing rate (ΔMR) after hot water treatment was 3.9%. It was ranked as C in terms of suppression of yellowing after water washing treatment and ranked as C in terms of oxidative heat generation after water washing treatment. It was ranked as Class 4-5 in the test for fastness to nitrogen oxide.

(Comparative example B-12)

Except that unlike Example B-11, the esterification product formed was transferred when the temperature of the polymerization tank was 240°C, the same procedure as in Example B-11 was carried out.

The polycondensation reaction slowed and it was impossible to obtain a polymer having a required viscosity.

[Table 9]

| | high hygroscopic polymer composition | | | reaction conditions | | reactivity | | | polymer characteristics | | | antioxidant | | | | | | |
|---|---|---|---|---|---|---|---|---|---|---|---|---|---|---|---|---|---|---|
| | polyester type | PEG | | ES reaction | polymerization | atmosphere for melting PEG | polymerization tank temperature at esterification product transfer (°C) | polymerization time (min) | discharge property | ΔMR (%) | melt viscosity (poise) | phenolic antioxidant | | | phosphorus-based antioxidant | | | |
| | | molecular weight (Mn) | content (wt%) | molar ratio | IR1010 content (wt%) | | | | | | | type | content (wt%) | phenol group content (mmol/kg) | type | content (wt%) | content (as P) (wt%) | phosphorus atom content (mmol/kg) |
| Example B-1 | PBT | 8300 | 50.0 | 1.8 | 0.15 | air | 180 | 170 | A | 22.0 | 1000 | AO-80 | 8.0 | 195.0 | P-EPQ | 2.9 | 0.20 | 50.0 |
| Example B-2 | PBT | 8300 | 50.0 | 1.8 | 0.15 | air | 180 | 175 | A | 22.5 | 1000 | AO-80 | 7.0 | 172.0 | P-EPQ | 2.9 | 0.20 | 50.0 |
| Example B-3 | PBT | 8300 | 50.0 | 1.8 | 0.15 | air | 180 | 175 | A | 21.5 | 1050 | AO-80 | 6.0 | 149.0 | P-EPQ | 2.9 | 0.20 | 50.0 |
| Example B-4 | PBT | 8300 | 50.0 | 1.8 | 0.15 | air | 180 | 170 | A | 22.0 | 1000 | AO-80 | 5.0 | 125.0 | P-EPQ | 2.9 | 0.20 | 50.0 |
| Example B-5 | PBT | 8300 | 50.0 | 1.8 | 0.15 | air | 180 | 170 | A | 22.0 | 1000 | AO-80 | 4.0 | 101.0 | P-EPQ | 2.9 | 0.20 | 50.0 |
| Example B-6 | PBT | 8300 | 50.0 | 1.8 | 0.15 | air | 180 | 170 | A | 21.0 | 1050 | AO-80 | 3.0 | 77.0 | P-EPQ | 2.9 | 0.20 | 50.0 |
| Example B-7 | PBT | 8300 | 50.0 | 1.8 | 0.15 | air | 180 | 165 | A | 21.0 | 1050 | AO-80 | 2.0 | 51.0 | P-EPQ | 2.9 | 0.20 | 50.0 |
| Example B-8 | PBT | 8300 | 50.0 | 1.8 | 0.15 | air | 180 | 170 | A | 21.5 | 1000 | AO-80 | 1.0 | 26.0 | P-EPQ | 2.8 | 0.20 | 50.0 |
| Example B-9 | PBT | 8300 | 50.0 | 1.8 | 0.15 | air | 180 | 170 | A | 21.0 | 1000 | AO-80 | 0.5 | 13.0 | P-EPQ | 2.8 | 0.20 | 50.0 |
| Example B-10 | PBT | 8300 | 50.0 | 1.8 | 0.15 | air | 180 | 165 | A | 22.0 | 1000 | AO-80 | 6.0 | 148.0 | P-EPQ | 36 | 0.25 | 65.0 |
| Example B-11 | PBT | 8300 | 50.0 | 1.8 | 0.15 | air | 180 | 175 | A | 21.0 | 1000 | AO-80 | 6.0 | 150.0 | P-EPQ | 2.2 | 0.15 | 40.0 |
| Example B-12 | PBT | 8300 | 50.0 | 1.8 | 0.15 | air | 180 | 170 | A | 21.0 | 1000 | AO-80 | 6.0 | 151.0 | P-EPQ | 1.4 | 0.10 | 25.0 |

(continued)

| | high hygroscopic polymer composition | | | reaction conditions | | reactivity | | | polymer characteristics | | | antioxidant | | | | | | |
|---|---|---|---|---|---|---|---|---|---|---|---|---|---|---|---|---|---|---|
| | polyester type | PEG | | ES reaction | polymerization | atmosphere for melting PEG | polymerization tank temperature at esterification product transfer (°C) | polymerization time (min) | discharge property | ΔMR (%) | melt viscosity (poise) | phenolic antioxidant | | | phosphorus-based antioxidant | | | |
| | | molecular weight (Mn) | content (wt%) | molar ratio | IR1010 content (wt%) | | | | | | | type | content (wt%) | phenol group content (mmol/kg) | type | content (wt%) | content (as P) (wt%) | phosphorus atom content (mmol/kg) |
| Example B-13 | PBT | 8300 | 40.0 | 1.8 | 0.15 | air | 180 | 155 | A | 15.0 | 1050 | AO-80 | 6.0 | 151.0 | P-EPQ | 1.4 | 0.10 | 25.0 |
| Example B-14 | PBT | 8300 | 50.0 | 1.8 | 0.15 | air | 180 | 170 | A | 22.0 | 1000 | AO-80 | 6.0 | 149.0 | IR168 | 2.9 | 0.16 | 41.0 |
| Example B-15 | PBT | 8300 | 50.0 | 1.8 | 0.15 | air | 180 | 175 | A | 22.0 | 1000 | AO-80 | 6.0 | 149.0 | JA-805 | 2.6 | 0.16 | 40.0 |
| Example B-16 | PBT | 8300 | 50.0 | 1.8 | 0.15 | air | 180 | 175 | A | 22.0 | 1000 | AO-80 | 6.0 | 151.0 | JP-360 | 1.4 | 0.16 | 42.0 |
| Example B-17 | PBT | 8300 | 50.0 | 1.8 | 0.15 | air | 180 | 170 | A | 22.0 | 1000 | AO-80 | 6.0 | 151.0 | PEP-36 | 1.4 | 0.16 | 41.0 |
| Example B-18 | PBT | 8300 | 50.0 | 1.8 | 0.15 | air | 180 | 170 | A | 22.0 | 1000 | IR245 | 4.8 | 151.0 | P-EPQ | 2.2 | 0.15 | 39.0 |
| Example B-19 | PBT | 8300 | 50.0 | 1.8 | 0.15 | air | 180 | 170 | A | 22.0 | 1000 | THANOX1790 | 3.8 | 153.0 | P-EPQ | 2.2 | 0.15 | 39.0 |
| Example B-20 | PET | 8300 | 50.0 | 1.8 | 0.15 | air | 180 | 160 | frequent miscutting | 23.0 | 1500 | AO-80 | 6.0 | 150.0 | P-EPQ | 2.2 | 0.15 | 39.0 |
| Example B-21 | PBT | 10000 | 15.0 | 1.8 | 0.15 | air | 180 | 130 | large nonuniformity in thickness | 2.7 | 1000 | AO-80 | 6.0 | 150.0 | P-EPQ | 2.2 | 0.15 | 39.0 |
| Example B-22 | PBT | 20000 | 15.0 | 1.8 | 0.15 | air | 180 | 130 | large nonuniformity in thickness | 3.0 | 1000 | AO-80 | 6.0 | 150.0 | P-EPQ | 2.2 | 0.15 | 39.0 |
| Example B-23 | PBT | 8300 | 50.0 | 1.8 | 0.15 | air | 210 | 185 | A | 20.0 | 950 | AO-80 | 6.0 | 150.0 | P-EPQ | 2.2 | 0.15 | 40.0 |

(continued)

| | high hygroscopic polymer composition | | | reaction conditions | | reactivity | | | polymer characteristics | | | antioxidant | | | | | | |
|---|---|---|---|---|---|---|---|---|---|---|---|---|---|---|---|---|---|---|
| | | PEG | | ES reaction | polymerization | | | | | | | phenolic antioxidant | | | phosphorus-based antioxidant | | | |
| | polyester type | molecular weight (Mn) | content (wt%) | molar ratio | IR1010 content (wt%) | atmosphere for melting PEG | polymerization tank temperature at esterification product transfer (°C) | polymerization time (min) | discharge property | ΔMR (%) | melt viscosity (poise) | type | content (wt%) | phenol group content (mmol/kg) | type | content (wt%) | content (as P) (wt%) | phosphorus atom content (mmol/kg) |
| Example B-24 | PBT | 8300 | 50.0 | 1.8 | 0.15 | air | 200 | 180 | A | 20.5 | 950 | AO-80 | 6.0 | 150.0 | P-EPQ | 2.2 | 0.15 | 40.0 |
| Example B-25 | PBT | 8300 | 50.0 | 1.8 | 0.15 | air (moisture: 0.01%) | 200 | 170 | A | 22.0 | 1000 | AO-80 | 6.0 | 150.0 | P-EPQ | 2.2 | 0.15 | 40.0 |
| Example B-26 | PBT | 8300 | 50.0 | 1.8 | 0.15 | nitrogen (moisture: 0.01%) | 200 | 170 | A | 22.5 | 1050 | AO-80 | 6.0 | 150.0 | P-EPQ | 2.2 | 0.15 | 40.0 |
| Example B-27 | PBT | 8300 | 50.0 | 1.8 | 0.25 | nitrogen (moisture: 0.01%) | 200 | 170 | A | 22.0 | 1000 | AO-80 | 6.0 | 149.0 | P-EPQ | 2.2 | 0.15 | 40.0 |
| Example B-28 | PBT | 8300 | 50.0 | 1.8 | 0.35 | nitrogen (moisture: 0.01%) | 200 | 170 | A | 22.0 | 1000 | AO-80 | 6.0 | 149.0 | P-EPQ | 2.2 | 0.15 | 41.0 |
| Example B-29 | PBT | 8300 | 50.0 | 1.8 | 0.50 | nitrogen (moisture: 0.01%) | 200 | 170 | A | 22.5 | 1050 | AO-80 | 6.0 | 151.0 | P-EPQ | 2.2 | 0.15 | 39.0 |
| Example B-30 | PBT | 8300 | 50.0 | 1.8 | 0.80 | nitrogen (moisture: 0.01%) | 200 | 170 | A | 22.5 | 950 | AO-80 | 6.0 | 150.0 | P-EPQ | 2.2 | 0.15 | 39.0 |
| Example B-31 | PBT | 8300 | 50.0 | 2.5 | 0.15 | nitrogen (moisture: 0.01%) | 200 | 170 | A | 22.5 | 1000 | AO-80 | 6.0 | 151.0 | P-EPQ | 2.2 | 0.15 | 40.0 |

(continued)

| | high hygroscopic polymer composition | | | reaction conditions | | reactivity | | | polymer characteristics | | | antioxidant | | | | | | |
|---|---|---|---|---|---|---|---|---|---|---|---|---|---|---|---|---|---|---|
| | polyester type | PEG | | ES reaction | polymerization | atmosphere for melting PEG | polymerization tank temperature at esterification product transfer (°C) | polymerization time (min) | discharge property | ΔMR (%) | melt viscosity (poise) | phenolic antioxidant | | | phosphorus-based antioxidant | | | |
| | | molecular weight (Mn) | content (wt%) | molar ratio | IR1010 content (wt%) | | | | | | | type | content (wt%) | phenol group content (mmol/kg) | type | content (wt%) | content (as P) (wt%) | phosphorus atom content (mmol/kg) |
| Example B-32 | PBT | 8300 | 50.0 | 1.6 | 0.15 | nitrogen (moisture: 0.01%) | 200 | 170 | A | 22.0 | 1050 | AO-80 | 6.0 | 150.0 | P-EPQ | 2.2 | 0.15 | 40.0 |
| Comparative example B-1 | PBT | 8300 | 50.0 | 1.8 | 0.15 | air | 180 | 170 | A | 22.0 | 1000 | - | - | - | - | - | - | - |
| Comparative example B-2 | PBT | 8300 | 300 | 1.8 | 0.15 | air | 180 | 150 | A | 8.2 | 1000 | AO-80 | 6.0 | 152.0 | P-EPQ | 0.7 | 0.05 | 13.0 |
| Comparative example B-3 | PBT | 8300 | 20.0 | 1.8 | 0.15 | air | 180 | 140 | A | 4.0 | 1000 | AO-80 | 6.0 | 152.0 | P-EPQ | 0.7 | 0.05 | 13.0 |
| Comparative example B-4 | PBT | 8300 | 10.0 | 1.8 | 0.15 | air | 180 | 135 | A | 2.3 | 1000 | AO-80 | 6.0 | 152.0 | P-EPQ | 0.7 | 0.05 | 13.0 |
| Comparative example B-5 | PBT | 8300 | 50.0 | 1.8 | 0.15 | air | 180 | 170 | A | 22.0 | 1000 | AO-80 | 10.0 | 244.0 | P-EPQ | 0.7 | 0.05 | 12.0 |
| Comparative example B-6 | PBT | 8300 | 50.0 | 1.8 | 0.15 | air | 180 | 170 | A | 22.0 | 1000 | AO-80 | 6.0 | 152.0 | P-EPQ | 0.7 | 0.05 | 13.0 |
| Comparative example B-7 | PBT | 8300 | 40.0 | 1.8 | 0.15 | air | 180 | 155 | A | 15.0 | 1050 | AO-80 | 6.0 | 152.0 | P-EPQ | 0.7 | 0.05 | 13.0 |

(continued)

| | high hygroscopic polymer composition | | | reaction conditions | | reactivity | | | polymer characteristics | | | antioxidant | | | | | | |
|---|---|---|---|---|---|---|---|---|---|---|---|---|---|---|---|---|---|---|
| | | PEG | | ES reaction | polymerization | | | | | | | phenolic antioxidant | | | phosphorus-based antioxidant | | | |
| | polyester type | molecular weight (Mn) | content (wt%) | molar ratio | IR1010 content (wt%) | atmosphere for melting PEG | polymerization tank temperature at esterification product transfer (°C) | polymerization time (min) | discharge property | ΔMR (%) | melt viscosity (poise) | type | content (wt%) | phenol group content (mmol/kg) | type | content (wt%) | content (as P) (wt%) | phosphorus atom content (mmol/kg) |
| Comparative example B-8 | PBT | 8300 | 50.0 | 1.8 | 0.15 | air | 180 | 170 | A | 22.0 | 1000 | AO-80 | 1.0 | 26.0 | P-EPQ | 4.2 | 0.30 | 77.0 |
| Comparative example B-9 | PBT | 3400 | 50.0 | 1.8 | 0.15 | air | 180 | 175 | frequent miscutting | 22.0 | 450 | AO-80 | 6.0 | 150.0 | P-EPQ | 2.2 | 0.15 | 40.0 |
| Comparative example B-10 | PBT | 8300 | 50.0 | 1.8 | 0.15 | air | 180 | 170 | A | 22.0 | 1000 | IR1010 | 4.8 | 151.0 | P-EPQ | 2.2 | 0.15 | 40.0 |
| Comparative example B-11 | PBT | 8300 | 50.0 | 1.8 | 0.15 | air | 180 | 175 | A | 22.0 | 1000 | HOS-03 | 3.2 | 154.0 | P-EPQ | 2.2 | 0.15 | 40.0 |
| Comparative example B-12 | PBT | 8300 | 50.0 | 1.8 | 0.15 | air | 250 | slowed | - | - | - | - | - | - | - | - | - | - |

The phenolic compounds (phenol based antioxidants) and phosphorus based antioxidants used in the Examples, Reference Examples and Comparative examples had chemical structures as represented by the formulae shown in Table 10 and Table 11. Table 13 shows various physical properties of the phosphorus based antioxidants used for the present invention.

[Table 10]

| AO-80 | IR245 | THANOX1790 |
|---|---|---|
| 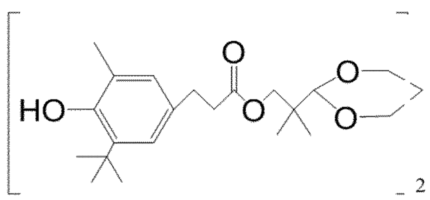 | 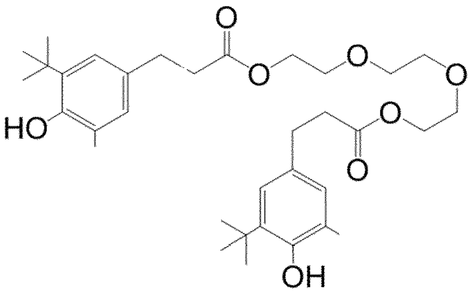 | 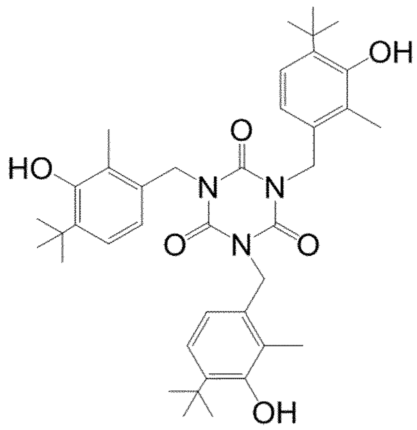 |
| IR1010 | HOS-03 | |
| 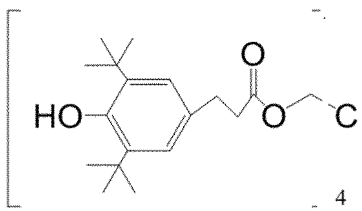 | 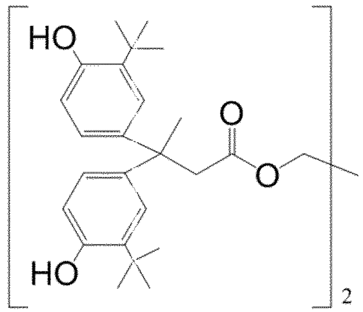 | |

[Table 11]

| P-EPQ | IR168 | JA-805 |
|---|---|---|
| 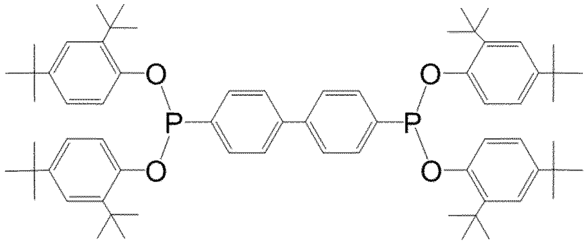 | 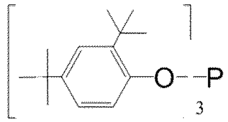 | 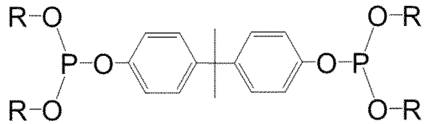 R: C12-to-C15 alkyl group |
| PEP-36 | JP-360 | |
| 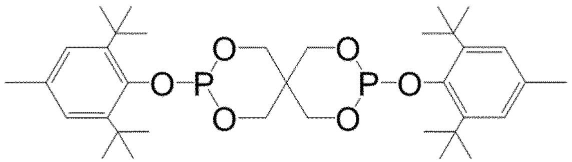 | 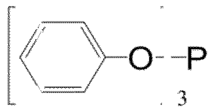 | |

[Table 12]

| | spinning characteristics | composite fiber characteristics | | | | | | fabric characteristics | | | |
|---|---|---|---|---|---|---|---|---|---|---|---|
| | pack exchange frequency | phenol group content (mmol/kg) | phosphorus atom content (mmol/kg) | T/R | strength (cN/dtex) | elongation percentage (%) | remarks | ΔMR (%) | yellowing suppression after water washing treatment | oxidative heat generation test | fastness to nitrogen oxide |
| Example B-1 | A | 35 | 9.5 | 0.10 | 2.5 | 40 | - | 4.0 | A | S | class 4-5 |
| Example B-2 | A | 32.0 | 9.5 | 0.11 | 2.5 | 39 | - | 4.1 | A | S | class 4-5 |
| Example B-3 | A | 28.0 | 9.0 | 0.10 | 2.4 | 40 | - | 4.1 | A | S | class 4-5 |
| Example B-4 | A | 23.0 | 9.0 | 0.09 | 2.4 | 40 | - | 4.0 | A | A | class 4-5 |
| Example B-5 | A | 20.0 | 9.5 | 0.11 | 2.6 | 41 | - | 4.0 | A | B | class 4-5 |
| Example B-6 | A | 15.0 | 9.0 | 0.11 | 2.6 | 41 | - | 3.9 | A | B | class 4-5 |
| Example B-7 | A | 10.0 | 10.0 | 0.09 | 2.5 | 41 | - | 4.0 | A | C | class 4-5 |
| Example B-8 | A | 5.0 | 10.0 | 0.09 | 2.5 | 39 | - | 4.2 | A | C | class 4-5 |
| Example B-9 | A | 2.0 | 9.5 | 0.10 | 2.5 | 39 | - | 4.2 | A | C | class 4-5 |
| Example B-10 | A | 28.0 | 12.0 | 0.10 | 2.3 | 40 | - | 4.0 | A | S | class 4-5 |
| Example B-11 | A | 28.0 | 7.5 | 0.11 | 2.6 | 40 | - | 3.9 | A | A | class 4-5 |
| Example B-12 | A | 29.0 | 4.0 | 0.11 | 2.5 | 40 | - | 4.0 | B | B | class 4-5 |
| Example B-13 | A | 28.5 | 4.0 | 0.12 | 2.6 | 40 | - | 3.1 | A | A | class 4-5 |
| Example B-14 | A | 28.5 | 4.0 | 0.10 | 2.4 | 40 | bleed-out during chip drying | 4.0 | B | A | class 4-5 |
| Example B-15 | A | 29.0 | 7.5 | 0.11 | 2.6 | 40 | - | 4.1 | C | A | class 4-5 |

(continued)

| | spinning characteristics | composite fiber characteristics | | | | | | fabric characteristics | | | |
|---|---|---|---|---|---|---|---|---|---|---|---|
| | pack exchange frequency | phenol group content (mmol/kg) | phosphorus atom content (mmol/kg) | T/R | strength (cN/dtex) | elongation percentage (%) | remarks | ΔMR (%) | yellowing suppression after water washing treatment | oxidative heat generation test | fastness to nitrogen oxide |
| Example B-16 | A | 29.5 | 3.0 | 0.11 | 2.4 | 38 | bleed-out during chip drying | 4.0 | C | B | class 4-5 |
| Example B-17 | A | 29.0 | 6.5 | 0.09 | 2.5 | 39 | bleed-out during chip drying | 4.0 | A | A | class 4-5 |
| Example B-18 | A | 29.5 | 7.0 | 0.11 | 2.5 | 39 | - | 4.1 | A | A | class 4-5 |
| Example B-19 | A | 29.0 | 7.0 | 0.11 | 2.5 | 39 | - | 4.1 | A | B | class 4-5 |
| Example B-20 | A | 28.0 | 7.0 | 0.10 | 3.5 | 40 | - | 4.0 | A | A | class 4-5 |
| Example B-21 | A | 28.0 | 7.0 | 0.09 | 2.5 | 39 | - | 0.7 | A | A | class 4-5 |
| Example B-22 | A | 29.0 | 7.0 | 0.09 | 2.3 | 39 | - | 0.8 | A | A | class 4-5 |
| Example B-23 | A | 29.0 | 7.0 | 0.11 | 2.5 | 40 | - | 3.7 | A | A | class 4-5 |
| Example B-24 | A | 29.0 | 7.0 | 0.10 | 2.5 | 40 | - | 3.8 | A | A | class 4-5 |
| Example B-25 | A | 29.0 | 7.0 | 0.10 | 2.6 | 39 | - | 4.0 | A | A | class 4-5 |
| Example B-26 | A | 29.0 | 7.0 | 0.11 | 2.6 | 41 | - | 4.0 | A | A | class 4-5 |

(continued)

| | spinning characteristics | composite fiber characteristics | | | | | | fabric characteristics | | | |
|---|---|---|---|---|---|---|---|---|---|---|---|
| | pack exchange frequency | phenol group content (mmol/kg) | phosphorus atom content (mmol/kg) | T/R | strength (cN/dtex) | elongation percentage (%) | remarks | ΔMR (%) | yellowing suppression after water washing treatment | oxidative heat generation test | fastness to nitrogen oxide |
| Example B-27 | A | 29.0 | 7.0 | 0.11 | 2.6 | 40 | - | 3.9 | A | A | class 4-5 |
| Example B-28 | S | 29.0 | 7.0 | 0.11 | 2.6 | 40 | - | 4.1 | A | A | class 4-5 |
| Example B-29 | S | 29.0 | 7.0 | 0.10 | 2.5 | 40 | - | 4.0 | A | A | class 4 |
| Example B-30 | S | 29.0 | 7.0 | 0.10 | 2.6 | 40 | - | 4.0 | A | A | class 3 |
| Example B-31 | B | 29.0 | 7.0 | 0.09 | 2.5 | 40 | - | 4.0 | A | A | class 4-5 |
| Example B-32 | S | 29.0 | 7.0 | 0.09 | 2.6 | 40 | - | 4.1 | A | A | class 4-5 |
| Comparative example B-1 | A | - | - | 0.10 | 2.0 | 39 | - | 4.1 | A | C | class 4-5 |
| Comparative example B-2 | A | 300 | 1.5 | 0.09 | 2.6 | 40 | - | 1.5 | A | A | class 4-5 |
| Comparative example B-3 | A | 29.0 | 1.0 | 0.11 | 2.5 | 41 | - | 0.9 | A | A | class 4-5 |
| Comparative example B-4 | A | 29.0 | 1.5 | 0.10 | 2.5 | 41 | - | 0.5 | A | A | class 4-5 |
| Comparative example B-5 | A | 45.0 | 1.5 | 0.11 | 2.1 | 40 | - | 4.0 | C | B | class 4-5 |
| Comparative example B-6 | A | 27.0 | 1.5 | 0.11 | 2.5 | 40 | - | 4.1 | C | C | class 4-5 |

(continued)

| | spinning characteristics | composite fiber characteristics | | | | | | fabric characteristics | | | |
|---|---|---|---|---|---|---|---|---|---|---|---|
| | pack exchange frequency | phenol group content (mmol/kg) | phosphorus atom content (mmol/kg) | T/R | strength (cN/dtex) | elongation percentage (%) | remarks | ΔMR (%) | yellowing suppression after water washing treatment | oxidative heat generation test | fastness to nitrogen oxide |
| Comparative example B-7 | A | 29.0 | 1.0 | 0.09 | 2.5 | 40 | - | 3.0 | C | C | class 4-5 |
| Comparative example B-8 | A | 4.0 | 13.0 | 0.10 | 2.2 | 40 | - | 3.9 | A | C | class 4-5 |
| Comparative example B-9 | A | 29.5 | 7.0 | 0.11 | 2.0 | 40 | - | 4.0 | A | A | class 4-5 |
| Comparative example B-10 | A | 29.0 | 6.0 | 0.11 | 2.6 | 41 | - | 4.0 | C | C | class 4-5 |
| Comparative example B-11 | A | 28.5 | 6.5 | 0.11 | 2.1 | 39 | bleed-out during chip drying | 3.9 | A | C | class 4-5 |
| Comparative example B-12 | - | - | - | - | - | - | - | - | - | - | - |

[Table 13]

| | 5% weight loss temperature (°C) | Number of phosphorus atoms in a molecule | melting point (°C) |
|---|---|---|---|
| P-EPQ | 170 | 2 | 85 to 103 |
| IR168 | 280 | 1 | 183 to 186 |
| JA-805 | 220 | 2 | - |
| PEP-36 | 300 or more | 2 | 234 to 240 |
| JP-360 | 80 | 1 | 20.0 |

INDUSTRIAL APPLICABILITY

The sea-island type composite fiber produced according to the present invention maintains high quality and high hygroscopicity even after hot water treatment such as dyeing and so high in resistance to oxidative decomposition that it suffers little oxidative heat generation after dry cleaning treatment. In addition, the polyester composition produced according to the present invention has high hygroscopicity, has excellent fiber characteristics, suffers little yellowing after water washing treatment, and realizes a reduction in oxidative heat generation. Having these features, it can be applied favorably to uses that require high comfortability and quality. Specifically, such uses include general clothing, sports clothing, bedding, interior materials, and other materials.

Explanation of Numerals

1. Sea component
2. Island component
3. Fiber diameter
4. Circumcircle connecting the apexes of island components disposed along outermost periphery
6. Diameter of island component
7. Metering plate
8. Distribution plate
9. Discharging plate
10-(a).Metering hole 1
10-(b). Metering hole 2
11-(a). Distribution groove 1
11-(b). Distribution groove 2
12-(a). Distribution hole 1
12-(b). Distribution hole 2
13. Discharge introduction hole
14. Squeezing pore
15. Discharge hole
16. Annular groove

**Claims**

**1.** A polyester composition comprising a copolymer polyester that contains a polyester formed of an aromatic dicarboxylic acid and/or an ester-forming derivative thereof and a diol and/or an ester-forming derivative thereof, copolymerized with 10 % by weight to 50% by weight of polyethylene glycol having a number average molecular weight of 5,000 to 20,000, and also contains 10.0 to 200.0 mmol/kg of a phenol based antioxidant and a phosphorus based antioxidant in an amount of 15.0 to 75.0 mmol/kg as phosphorus, wherein the phenol based antioxidant includes one or more of 2,6-di-t-butyl-p-cresol, butyl hydroxyanisole, 2,6-di-t-butyl-4-ethylphenol, stearyl-β-(3,5-di-t-butyl-4-hydroxyphenyl) propionate, 2,2'-methylene bis(4-methyl-6-t-butyl phenol), 2,2'-methylene bis(4-ethyl- 6-t-butyl phenol), 4,4'-butylidene bis(3-methyl-6-t-butyl phenol), 3,9-bis{1,1-dimethyl-2-{β-(3-t-butyl-4-hydroxy-5-methylphenyl) propionyloxy} ethyl} 2,4,8,10-tetraoxaspiro{5,5}undecane, 1,1,3-tris-(2-methyl-4-hydroxy-5-t-butyl phenyl) butane, 1,3,5-trimethyl-2,4,6-tris-(3,5-di-t-butyl-4-hydroxybenzyl) benzene, bis{3,3'-bis-(4'-hydroxy-3'-t-butylphenyl) butyric acid}glycol ester, tocopherol, pentaerythritol-tetrakis(3-(3,5-di-t-butyl-4-hydroxyphenol) propionate), bis[3-(3-t-butyl-4-hydroxy-5-methylphenyl) propionate] [ethylenebis(oxyethylene)], and 1,3,5-tris[[4-(1,1-dimethylethyl)-3-hydroxy-2,6-dimethylphenyl]methyl]-1,3,5-triazine-2,4,6(1H,3H,5H)-trione.

2. The polyester composition as set forth in claim 1, wherein 50 mol% or more of the aromatic dicarboxylic acid and/or the ester-forming derivative thereof is accounted for by terephthalic acid and/or ester-forming derivatives thereof, and wherein 50 mol% or more of the diol and/or the ester-forming derivative thereof is accounted for by 1,4-butanediol and/or ester-forming derivatives thereof.

3. The polyester composition as set forth in either claim 1 or 2, wherein the phosphorus based antioxidant is **characterized by** having a 5% weight loss temperature of 170°C or higher as determined in an elevated temperature weight loss evaluation performed at a temperature increase rate of 10°C/min in a nitrogen atmosphere using TG-DTA.

4. The polyester composition as set forth in any one of claims 1 to 3, wherein the phosphorus based antioxidant is **characterized by** having a structure that contains 2 or more phosphorus atoms in a molecule.

5. The polyester composition as set forth in any one of claims 1 to 4, wherein the phosphorus based antioxidant is **characterized by** having a melting point of 80°C or higher.

6. The polyester composition as set forth in any one of claims 1 to 5, wherein the phosphorus based antioxidant is **characterized by** having a structure as represented by the chemical formula (2) or chemical formula (3) given below:

[Chemical compound 2]

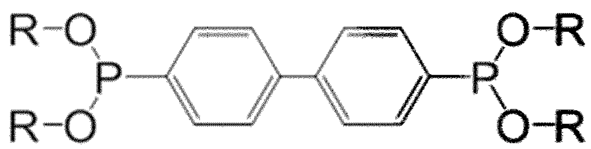

··· (2)

wherein R in the chemical formula (2) given above is a hydrocarbon group, and

[Chemical compound 3]

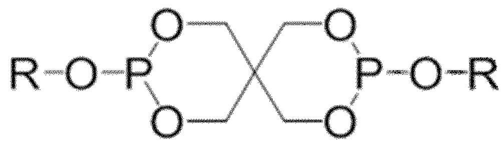

··· (3)

wherein R in the chemical formula (3) given above is a hydrocarbon group.

7. A sea-island type or core-sheath type composite fiber produced by using a polyester composition as set forth in any one of claims 1 to 6 as island component or as core component.

8. A method for producing the copolymer polyester as set forth in any one of claims 1 to 6 comprising a step for performing esterification reaction of an aromatic dicarboxylic acid and a diol containing 50 mol% or more of 1,4-butanediol; and a step, when a temperature of a polycondensation reaction tank is 210°C or lower, for transferring the esterification product resulting from the esterification reaction into the polycondensation reaction tank containing polyethylene glycol beforehand; and a step for starting their polycondensation reaction.

**Patentansprüche**

1. Polyesterzusammensetzung, umfassend einen Copolymerpolyester, der einen Polyester enthält, der aus einer aromatischen Dicarbonsäure und/oder einem esterbildenden Derivat davon und einem Diol und/oder einem esterbildenden Derivat davon gebildet ist, copolymerisiert mit 10 Gew.-% bis 50 Gew.-% Polyethylenglykol, das ein zahlenmittleres Molekulargewicht von 5.000 bis 20.000 aufweist, und der ferner 10,0 bis 200,0 mmol/kg eines Antioxidationsmittels auf Phenolbasis und ein Antioxidationsmittel auf Phosphorbasis in einer Menge von 15,0 bis 75,0 mmol/kg als Phosphor enthält, wobei das Antioxidationsmittel auf Phenolbasis eine oder mehrere der folgenden

umfasst: 2,6-Di-t-butyl-p-kresol, Butylhydroxyanisol, 2,6-Di-t-butyl-4-ethylphenol, Stearyl-β-(3,5-di-t-butyl-4-hydroxyphenyl)propionat, 2,2'-Methylenbis(4-methyl-6-t-butylphenol), 2,2'-Methylenbis(4-ethyl-6-t-butyl-phenol), 4,4'-Butylidenbis(3-methyl-6-t-butyl-phenol), 3,9-Bis{1,1-dimethyl-2-{β-(3-t-butyl-4-hydroxy-5-methylphenyl)propionyloxy}ethyl} 2,4,8,10-Tetraoxa-spiro{5,5}undecan, 1,1,3-Tris-(2-methyl-4-hydroxy-5-t-butylphenyl)butan, 1,3,5-Trimethyl-2,4,6-tris-(3,5-di-t-butyl-4-hydroxybenzyl)benzol, Bis{3,3'-bis-(4'-hydroxy-3'-t-butylphenyl)-butansäure}glykolester, Tocopherol, Pentaerythritoltetrakis(3-(3,5-di-t-butyl-4-hydroxyphenol)-propionat), Bis[3-(3-t-butyl-4-hydroxy-5-methylphenyl)propionat][ethylenbis-(oxyethylen)] und 1,3,5-Tris[[4-(1,1-dimethylethyl)-3-hydroxy-2,6-dimethylphenyl]methyl]-1,3,5-triazin-2,4,6(1H,3H,5H)-trion.

**2.** Polyesterzusammensetzung nach Anspruch 1, wobei 50 Mol-% oder mehr der aromatischen Dicarbonsäure und/oder deren esterbildendes Derivat davon auf Terephthalsäure und/oder deren esterbildende Derivate davon entfallen und wobei 50 Mol-% oder mehr des Diols und/oder dessen esterbildendes Derivat davon auf 1,4-Butandiol und/oder dessen esterbildende Derivate davon entfallen.

**3.** Polyesterzusammensetzung nach Anspruch 1 oder 2, wobei das Antioxidans auf Phosphorbasis **dadurch gekennzeichnet ist, dass** es eine 5 %-Gewichtsverlusttemperatur von 170 °C oder höher aufweist, bestimmt in einer Bewertung des Gewichtsverlusts bei erhöhter Temperatur, die bei einer Temperaturanstiegsrate von 10 °C/min in einer Stickstoffatmosphäre unter Verwendung von TG-DTA durchgeführt wurde.

**4.** Polyesterzusammensetzung nach einem der Ansprüche 1 bis 3, wobei das Antioxidans auf Phosphorbasis **dadurch gekennzeichnet ist, dass** es eine Struktur aufweist, die zwei oder mehr Phosphoratome in einem Molekül enthält.

**5.** Polyesterzusammensetzung nach einem der Ansprüche 1 bis 4, wobei das Antioxidans auf Phosphorbasis **dadurch gekennzeichnet ist, dass** es einen Schmelzpunkt von 80 °C oder höher aufweist.

**6.** Polyesterzusammensetzung nach einem der Ansprüche 1 bis 5, wobei das Antioxidans auf Phosphorbasis **dadurch gekennzeichnet ist, dass** es eine Struktur aufweist, die durch die nachstehend angegebene chemische Formel (2) oder die chemische Formel (3) dargestellt wird:

[Chemische Verbindung 2]

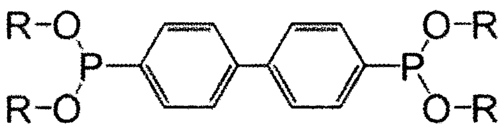

··· (2)

wobei R in der oben angegebenen chemischen Formel (2) eine Kohlenwasserstoffgruppe ist, und

[Chemische Verbindung 3]

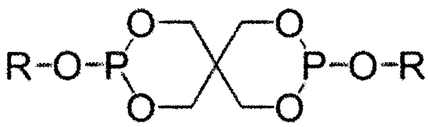

··· (3)

wobei R in der oben angegebenen chemischen Formel (3) eine Kohlenwasserstoffgruppe ist.

**7.** Verbundfaser vom Sea-Island-Typ oder vom Kern-Mantel-Typ, hergestellt unter Verwendung einer Polyesterzusammensetzung nach einem der Ansprüche 1 bis 6 als Inselkomponente oder als Kernkomponente.

**8.** Verfahren zur Herstellung des Copolymer-Polyesters nach einem der Ansprüche 1 bis 6, umfassend einen Schritt zur Durchführung einer Veresterungsreaktion einer aromatischen Dicarbonsäure und eines Diols, das 50 Mol-% oder mehr 1,4-Butandiol enthält; und einen Schritt zur Überführung, wenn eine Temperatur eines Polykondensationsreaktionsbehälters 210 °C oder weniger beträgt, des Veresterungsprodukts, das aus der Veresterungsreaktion resultiert, in den Polykondensationsreaktionsbehälter, der zuvor Polyethylenglykol enthält; und einen Schritt zum Starten der Polykondensationsreaktion derselben.

## Revendications

1. Composition de polyester comprenant un polyester copolymère qui contient un polyester formé à partir d'un acide dicarboxylique aromatique et/ou d'un dérivé formant ester de celui-ci et d'un diol et/ou d'un dérivé formant ester de celui-ci, copolymérisé avec 10 % en poids à 50 % en poids de polyéthylène glycol ayant une masse molaire moyenne en nombre de 5 000 à 20 000, et contient en outre de 10,0 à 200,0 mmol/kg d'un antioxydant à base de phénol et d'un antioxydant à base de phosphore en une quantité de 15,0 à 75,0 mmol/kg exprimée en phosphore, où l'antioxydant à base de phénol comprend un ou plusieurs parmi le 2,6-di-tert-butyl-p-crésol, le butylhydroxyanisole, le 2,6-di-tert-butyl-4-éthylphénol, le stéaryl-13-(3,5-di-t-butyl-4-hydroxyphényl)propionate, le 2,2'-méthylènebis(4-méthyl-6-tert-butylphénol), le 2,2'-méthylènebis(4-éthyl-6-tert-butylphénol), le 4,4'-butylidènebis(3-méthyl-6-tert-butylphénol), le 3,9-bis{1,1-diméthyl-2-{[3-(3-tert-butyl-4-hydroxy-5-méthylphényl)propionyloxy]éthyl}2,4,8,10-tétraoxaspiro{5,5} undécane, le 1,1,3-tris-(2-méthyl-4-hydroxy-5-tert-butylphényl)butane, le 1,3,5-triméthyl-2,4,6-tris-(3,5-di-tert-butyl-4-hydroxybenzyl)benzène, l'ester glycolique de l'acide bis{3,3'-bis-(4'-hydroxy-3'-tert-butylphényl)butyrique}, le tocophérol, le tétrakis(3-(3,5-di-tert-butyl-4-hydroxyphényl)propionate) de pentaérythritol, le bis[3-(3-tert-butyl-4-hydroxy-5-méthylphényl)propionate][éthylènebis(oxyéthylène)], et la 1,3,5-tris[[4-(1,1-diméthyléthyl)-3-hydroxy-2,6-diméthylphényl]méthyl]-1,3,5-triazine-2,4,6(1H,3H,5H)-trione.

2. Composition de polyester selon la revendication 1, où 50 % en moles ou plus de l'acide dicarboxylique aromatique et/ou du dérivé formant ester de celui-ci sont constitués par de l'acide téréphtalique et/ou des dérivés formant ester de celui-ci, et où 50 % en moles ou plus du diol et/ou du dérivé formant ester de celui-ci sont constitués par du 1,4-butanediol et/ou des dérivés formant ester de celui-ci.

3. Composition de polyester selon l'une quelconque des revendications 1 et 2, où l'antioxydant à base de phosphore est **caractérisé en ce qu'**il présente une température de perte de masse de 5 % de 170 °C ou plus, telle que déterminée lors d'une évaluation de perte de masse à température élevée effectuée à une vitesse d'élévation de température de 10 °C/min dans une atmosphère d'azote au moyen d'une analyse TG-DTA.

4. Composition de polyester selon l'une quelconque des revendications 1 à 3, où l'antioxydant à base de phosphore est **caractérisé en ce qu'**il présente une structure contenant 2 atomes de phosphore ou plus dans une molécule.

5. Composition de polyester selon l'une quelconque des revendications 1 à 4, où l'antioxydant à base de phosphore est **caractérisé en ce qu'**il présente un point de fusion de 80 °C ou plus.

6. Composition de polyester selon l'une quelconque des revendications 1 à 5, où l'antioxydant à base de phosphore est **caractérisé en ce qu'**il présente une structure représentée par la formule chimique (2) ou la formule chimique (3) ci-dessous :

[Composé chimique 2]

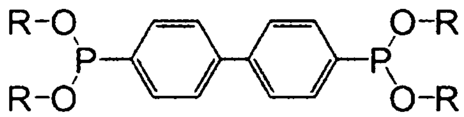

··· (2)

où R dans la formule chimique (2) ci-dessus est un groupe hydrocarboné, et

[Composé chimique 3]

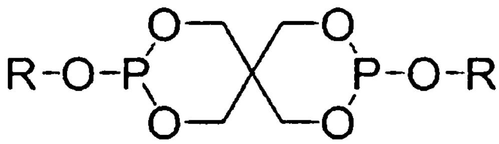

··· (3)

où R dans la formule chimique (3) ci-dessus est un groupe hydrocarboné.

7. Fibre composite de type mer-îlots ou de type cœur-gaine, produite en utilisant une composition de polyester selon l'une quelconque des revendications 1 à 6 comme composant îlot ou comme composant cœur.

**8.** Procédé de production du polyester copolymère selon l'une quelconque des revendications 1 à 6, comprenant une étape de réalisation d'une réaction d'estérification d'un acide dicarboxylique aromatique et d'un diol contenant 50 % en moles ou plus de 1,4-butanediol ; et une étape consistant, lorsque la température d'une cuve de réaction de polycondensation est de 210 °C ou inférieure, à transférer le produit d'estérification issu de la réaction d'estérification dans la cuve de réaction de polycondensation contenant préalablement du polyéthylène glycol ; et une étape de démarrage de leur réaction de polycondensation.

Figure 1

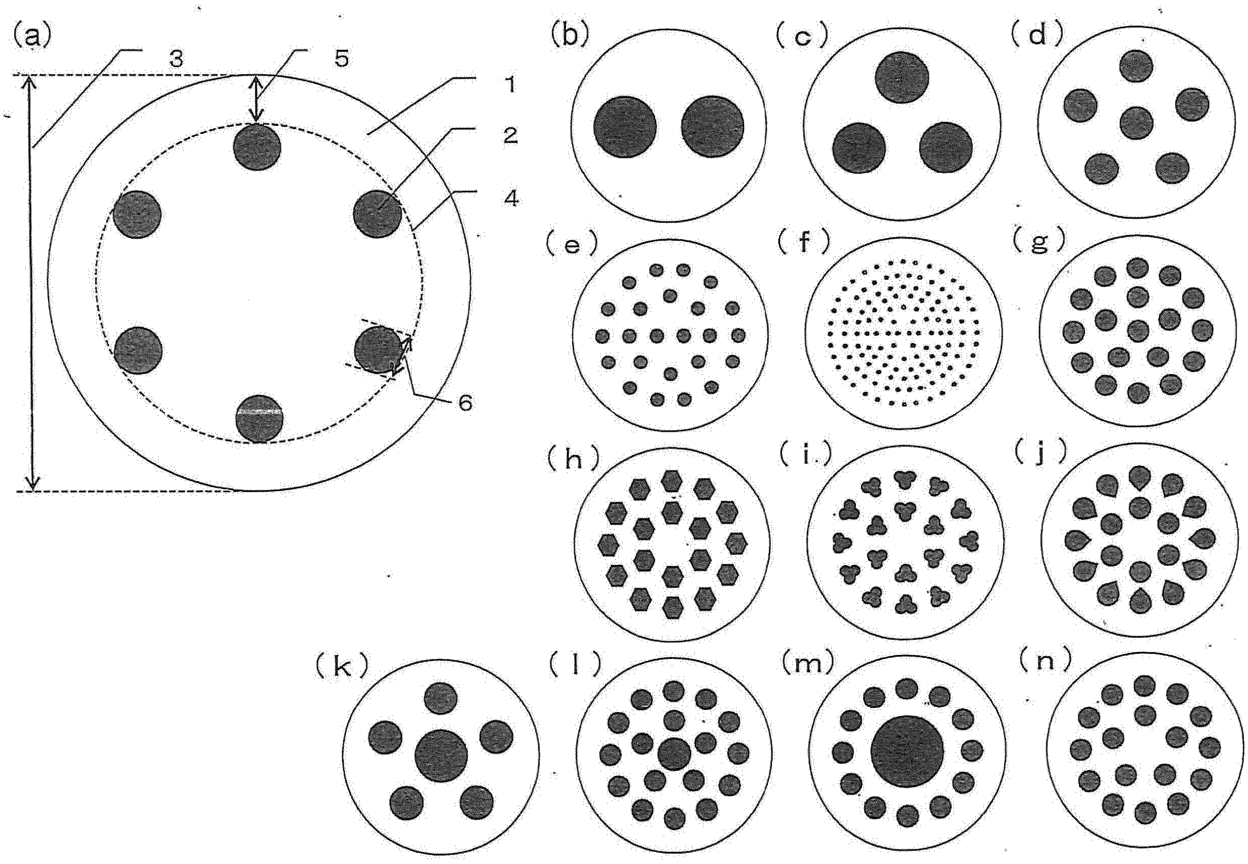

Figure 2

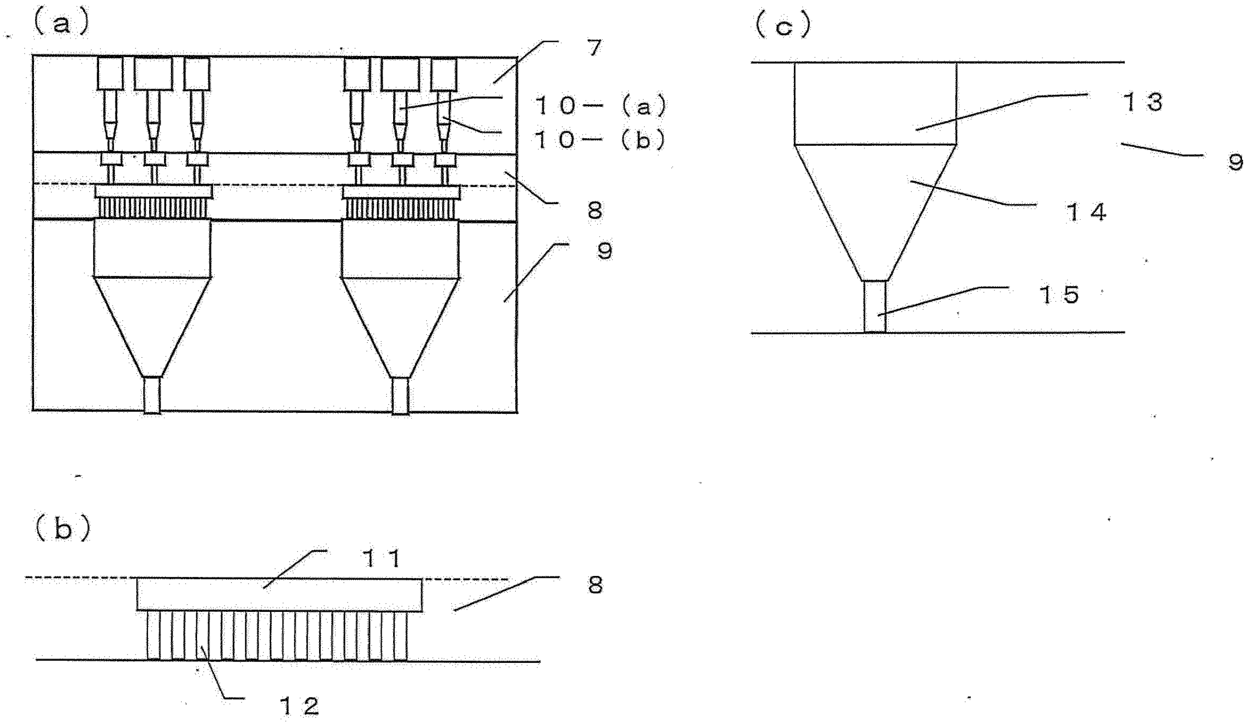

Figure 3

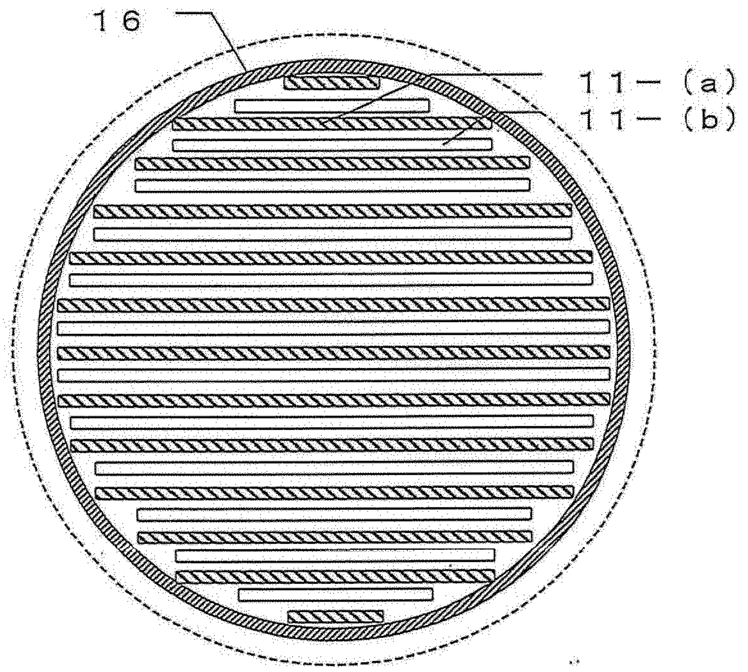


Figure 4

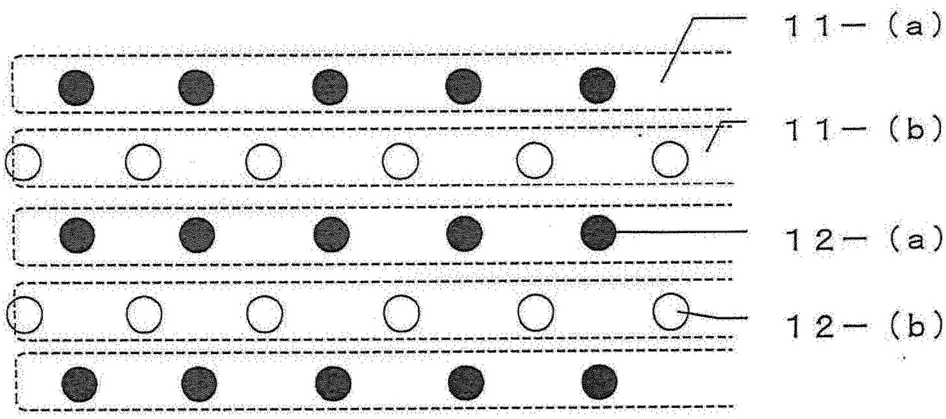

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006104379 A
- WO 2015146790 A
- JP 2001172374 A
- JP HEI8198954 A
- JP 2003113311 A
- JP 2005200786 A
- JP SHO58198527 A
- EP 3483312 A1
- JP 2004277911 A
- WO 2018077126 A1
- US 2013295306 A1
- JP H09228152 A
- JP 2007100243 A
- JP 2011174215 A
- JP 360 A